# EUROPEAN PATENT SPECIFICATION

(11) **EP 4 317 792 B1**
(45) Date of publication and mention of the grant of the patent: **29.04.2026**
(21) Application number: 23189156.5
(22) Date of filing: 02.08.2023
(51) Int. Cl.: F24C 7/08, F24C 15/02, F24C 15/06, F24C 15/32

(54) **COOKING APPLIANCE**
KOCHGERÄT
APPAREIL DE CUISSON

(30) Priority: 02.08.2022 KR 20220096304
(43) Date of publication of application: 07.02.2024
(73) Proprietor: LG Electronics Inc., Yeongdeungpo-gu Seoul 07336 (KR)
(72) Inventor: Jang, Seung Tae, Seoul 08592 (KR); Mun, Jun Woo, Seoul 08592 (KR)
(74) Representative: Ter Meer Steinmeister & Partner

(56) References cited:
- EP-A1- 3 557 135
- WO-A1-2008/032903
- CN-A- 114 652 175
- CN-B- 110 693 311
- CN-U- 207 575 013
- JP-A- 2000 012 209
- US-A1- 2017 122 016

## Description

The present application claims priority to Korean Patent Application No. 10-2022-0096304, filed August 02, 2022.

### BACKGROUND

### 1. Technical Field

The present invention relates to a cooking appliance.

### 2. Description of the Related Art

Various types of cooking appliances are used to heat food at home or in restaurants. For example, various cooking appliances such as microwave ovens, induction heating electric ranges, and grill heaters are used.

When classifying the cooking appliance according to a shape of cooking chamber in which food is cooked, the cooking appliance may be classified into an open type cooking appliance and a sealed type cooking appliance. The sealed type cooking appliance includes an oven, a microwave oven, etc. having a door, and the open type cooking appliance includes a cooktop, a hob, etc.

Recently, as the sealed type cooking appliance, a steam oven has been used. The steam oven refers to an oven equipped with a function of injecting high temperature steam into a cooking chamber and controlling humidity of food using the steam. The steam oven can prevent food from drying out and maintain the taste and the aroma of the food.

The steam oven includes a steam supply apparatus to supply steam. The steam supply apparatus includes a steam generator generating steam, and a water tank supplying water to the steam generator. Water injected from the water tank passes through a water supply tube flows into the steam generator, and the water flowing into the steam generator is heated by a heater of the steam generator to generate steam. As described above, the generated steam flows into a cooking chamber and is circulated in the cooking chamber, and in this process, cooking using steam is performed.

To supply water, a user should fill water into the water tank. To do this, the user has to remove the water tank from the cooking appliance, and has to fill water into the separated water tank and then mount the water tank into the cooking appliance. As described above, since the water tank should be separated from the cooking appliance, an entrance of the water tank is formed in the cooking appliance.

The entrance of the water tank may be formed in a front portion of the cooking appliance. When the entrance of the water tank is provided in the front portion of the cooking appliance, user accessibility is improved. However, since a door of the cooking appliance is also disposed in the front portion of the cooking appliance, any interference between door and the discharging operation of the water tank has to be avoided.

In order to avoid interference between the water tank and the door, the entrance of the water tank may be disposed at an another portion of the cooking appliance, preferably at an upper portion of the cooking appliance.

Meanwhile, the cooking appliance may include a control panel to preset various functions and operation of the cooking appliance including steam cooking, and to display a cooking state. The control panel may receive an input signal of the user to control the cooking appliance, and may display temperature and humidity of the cooking chamber, cooking time, cooking mode, etc.

The control panel may be disposed i.a. at the upper portion of the cooking appliance in order to avoid interference between the control panel and the door, like the water tank. The control panel may be disposed also a several places, e.g. the display function may be provided at the back side or on below the door or within the door. However, since both of the entrance of the water tank and the control panel must be disposed to avoid the door, there is a limitation in which a size of the cooking appliance is increased or a size of the control panel is limited less than or equal to a predetermined size. Furthermore, there is a problem in that the entrance of the water tank is exposed to harm the aesthetic of the cooking appliance.

EP 3551942 A1 (related art 1) discloses a technique in which the water tank and the control panel are disposed side by side above the door. Here, the control panel is limited to a small size above the door due to the water tank. Furthermore, a separate cover to cover an entrance of the water tank is provided, and the cover is formed as a separate object and has disadvantage of harming the aesthetic as the cover protrudes forwards to avoid interference between the cover and the control panel in a movement process.

US20100206414A1 (related art 2) and EP03080517A1 (related art 3) disclose a control panel (controller) disposed in front of the water tank. Both documents have structures in which the control panel normally covers the water tank and the control panel is moved to open the entrance of the water tank only when the water tank is removed or remounted.

In related art 2 and related art 3, the control panel is moved upwards to open the entrance of the water tank. When the entrance of the water tank is opened as the control panel is moved upwards, the user can remove the water tank or remount the water tank. Furthermore, when the user moves the control panel downwards again, the control panel is moved to an original position thereof to cover the entrance of the water tank.

As described above, when the control panel is moved upwards of the cooking appliance, the total height of the cooking appliance is increased, so there is a problem that an installation height of the cooking appliance is also increased. Specifically, when the cooking appliance is installed in the built-in method and when the control panel is moved upwards, the cooking appliance may interfere with the kitchen system in which the cooking appliance is installed or devices or object installed above the cooking appliance.

Furthermore, to move the control panel upwards as in related art 2 and related art 3, the weight of the control panel should be overcome. Thus, a large external force is required, and accordingly, there is a problem of poor use convenience.

Even when the control panel is automatically opened using a separate driving source such as a motor, the motor, must generate a large force to automatically open the control panel. Thus, the cost of manufacturing the cooking appliance is increased, and a structure of the opening device to generate a large force is complex.

Specifically, in order to automatically open the control panel to a final position, the driving source must continue to supply power while the control panel is opened, and to supply power in a proper amount in response to a movement state of the control panel, the structure of the opening device is inevitably more complex.

Furthermore, the control panel in related art 2 and related art 3 maintains a vertically standing state thereof when being moved to open the entrance of the water tank. This is because the control panel is moved while being laid horizontally to generate a large moment and an excessive load is applied to a connection portion of an opening and closing device. However, in order to move the control panel while keeping a standing state of the control panel, there is a problem of more complex structure and a large number of components of the opening device.

Furthermore, related art 3 includes a motor driving part at each of opposite hinge parts of the control panel to open the control panel. This motor driving part is connected to a mechanism moving the control panel upwards to make the structure of the opening device more complicated and to decrease durability of each hinge part.

CN 114 652 175 A discloses a steam oven. The steam oven comprises an oven body assembly, a water tank box, a panel assembly, a hinge assembly and a power device. A second cavity with a second opening is formed in the box body assembly. The water tank box is placed in the second cavity. The panel assembly comprises a panel, and the panel is located at the second opening. A first driving rod of the hinge assembly comprises a first transmission arm, and the two ends of the first transmission arm are rotationally connected with the panel and the inner wall of the second cavity correspondingly. The two ends of a first driven rod of the hinge assembly are rotationally connected with the panel and the inner wall of the second cavity correspondingly. The output end of the power device is connected with the first driving rod or the first driven rod and used for con-trolling the panel to open or close the second opening.

CN 207 575 013 U flip-up mechanism for a control panel includes a drive assembly including a push rod and a lift bracket having a push rod movement track slot, and an adjustment assembly. The adjustment assembly is connected to the control panel for controlling the control panel to remain vertical while being pushed by the push rod.

JP 2000 012209 A heating cooking device.

### SUMMARY

The present invention has been made keeping in mind the above problems occurring in the related art, and the present invention is intended to propose a cooking appliance having a water tank being easily accessible and which requires less constructional effort and cost and still provides high user convenience and an aesthetic appearance.

Thus, one approach of the present invention is to dispose a water tank for steam generation in rear of a panel unit, and rotate the panel unit downwards to open an entrance of the water tank.

Another approach of the present invention is to open the panel unit automatically by an opening device in a predetermined initial section, and to open the panel unit by gravity in a remaining section.

A further objective is to further support the water tank exchange procedure.

Here one approach of the present invention is to open the entrance of the water tank as the panel unit is rotated to be opened in a horizontal direction.

A further aspect for supporting the opening process of the control panel is to form an opening device of the panel unit as a separate object from hinge modules of the panel unit and to dispose the opening device at a rear center portion of the panel unit.

Basically, the object as mentioned above are solved by the features of the independent claim. The invention is defined only be the features of the independent claim. Preferred embodiments are given in the detailed description. In order to achieve the above-described objectives, A cooking appliance includes a casing including a cavity and a tank chamber therein, and a door for opening and closing the cavity. Furthermore, the water tank is disposed being dischargeable in front direction or forwards of the casing through an entrance of the tank chamber. A panel unit is disposed in front of the casing at a position being different than the door. Preferably, the panel unit is disposed above the door. The panel unit is movable from a first position in which the entrance of the tank chamber is covered to a second position in which the entrance of the tank chamber is opened.

The panel unit is moved from the first position to the second position by rotating an upper end of the panel unit downwards. As the panel unit is rotated downwards to open the entrance of the water tank, even when the panel unit is opened, the entire height of the cooking appliance is not changed, and the panel unit does not cover the user's view towards the entrance of the water tank.

According to the invention, a cooking appliance is provided, comprising a casing having a cavity and an upper space separated from the cavity, therein, a door disposed in front of the casing and configured to open and close the cavity; a panel unit disposed in front of the casing at a height different from a height of the door, the panel unit is movable connected to the casing; a hinge module disposed in the upper space for connecting the casing and the panel unit to each other.

According to the invention, a wire cover is provided coupled to the hinge module, and covering a wire harness extending from the panel unit into the upper space.

The wire cover is configured to protrude from and retract into the upper space together with the hinge module.

In one or more embodiments, there is a steam generator disposed in the cooking appliance being coupled to the water tank for generating steam to be supplied to the cavity.

In one or more embodiments, one of the casing and the panel unit may include an opening device for the panel unit.

The opening device may be partially protrude towards the casing or the panel unit. The opening device may automatically open the panel unit, and may increase the use convenience.

In one or more embodiments, the panel unit may be moved by the opening device in a first opening section starting from the first position. Then, the panel unit may be moved by gravity or an external force due to a user in a second opening section extending from a last end of the first opening section to the second position. Therefore, the entire operation section of the opening device to open the panel unit may be formed short, so that a structure of the opening device may be simplified.

In one or more embodiments, a rotation angle of the panel unit in the second opening section may be larger than a rotation angle of the panel unit in the first opening section. Therefore, since the opening device only needs to open the panel unit within the short section, a driving source (opening motor) of the opening device does not need a large force, so that a cost of manufacturing the opening device can be reduced.

In one or more embodiments, in a process in which the panel unit is moved from the first position to the second position, the panel unit may be rotated on a connection part connected to the casing and at the same time the connection part is moved towards a front side and a lower side of the casing. When the panel unit is moved forwards and downwards at the same time in a combined rotational movement, the panel unit may be moved to a position spaed apart or far from the casing.

In one or more embodiments, the connection part may include a plurality of connection shafts.

In one or more embodiments, the plurality of connection shafts may be connected to the panel unit with different heights in the first position.

In one or more embodiments, the plurality of connection shafts may allow the panel unit to be stably rotated.

In one or more embodiments, the casing or panel unit may include a damper connected to the panel unit or the casing.

In one or more embodiments, the panel unit may be adjusted in rotation speed by the damper between the first position and the second position. In other words, the damper may allow the panel unit to be more stably moved within the second opening section.

In one or more embodiments, the casing may include an elastic member connected to the panel unit.

In one or more embodiments, the panel unit may be adjusted in a tension by the elastic member between the first position and the second position.

In one or more embodiments, in other words, the elastic member may prevent sharp movement of the panel unit over the entire section of the panel unit.

In one or more embodiments, a pair of hinge modules may be disposed in the casing.

In one or more embodiments, the pair of hinge modules may be connected to opposite portions of the panel unit.

In one or more embodiments, the pair of hinge modules may include a connection shaft serving as a rotation shaft of the panel unit.

In one or more embodiments, the pair of hinge modules may disperse a torque applied to a connection portion between the panel unit and each hinge module.

The hinge module comprises a driving arm protruding forwards from the upper space and being connected to the panel unit.

According to the invention, the wire cover is coupled to the driving arm and moved together with the driving arm.

In one or more embodiments, a first end of the wire cover may face the panel unit and/or may be coupled to a driving arm of the hinge module.

In one or more embodiments, the wire cover may be formed to be downwardly inclined towards a first end thereof connected to a driving arm of the hinge module, or formed along a curved path.

In one or more embodiments, the wire cover may extend along a constant radius of curvature, and the radius of curvature of the wire cover may be larger than or equal to a radius of rotation of the driving arm.

According to the invention, the wire cover comprises a cover body having a guide channel therein, into which the wire harness is inserted.

In one or more embodiments, the wire cover may comprise a coupling head provided at one end of the cover body, and fixed to a driving arm of the hinge module.

In one or more embodiments, the coupling head may comprises a coupling finger covering a surface of the driving arm.

In one or more embodiments, the coupling head may comprise a first coupling finger covering an upper portion of the driving arm and a second coupling finger covering a lower portion of the driving arm.

In one or more embodiments, the first coupling finger and the second coupling finger may protrude from the cover body in directions perpendicular to a moving direction of the driving arm, respectively.

In one or more embodiments, when the panel unit is located in a first position, one surface of the coupling head may faces a front surface of the hinge module.

In one or more embodiments, a last end of the first coupling finger may have a first coupling end.

In one or more embodiments, the first coupling end may extend in parallel to a surface of the driving arm.

In one or more embodiments, the second coupling finger may be fitted into a coupling groove recessed from a lower surface of the driving arm.

According to the invention, the hinge module comprises a hinge housing disposed in the upper space; and a driving arm having a first end connected to the hinge housing and a second end protruding forwards from the upper space to be rotatably connected to the panel unit.

In one or more embodiments, the wire cover may be configured to be moved within a height range of the hinge housing, or a longitudinal length of the wire cover may be shorter than a longitudinal length of the hinge housing, or a vertical height of the wire cover may be higher than a vertical height of the driving arm.

In one or more embodiments, the cooking appliance may further comprise a front frame constituting a front surface of the upper space and comprising an upper hinge hole.

According to the invention, when the panel unit is located in a first position, a surface of the hinge housing covers an open surface of the guide channel formed in the wire cover, and when the panel unit is located in a second position, a side surface of the driving arm covers the open surface of the guide channel.

In one or more embodiments a wire clip may protrude on an edge of the guide channel in a direction of covering an open surface of the guide channel.

In one or more embodiments, the opening device may be disposed between the pair of hinge modules.

In one or more embodiments, when the opening device is independently disposed between the pair of hinge modules, this independent structure of the opening device and the hinge modules may be simplified compared to an integrated structure of the hinge modules and the opening device.

In one or more embodiments, the opening device may be disposed at a position relatively farther from the rotation shaft of the panel unit, thereby providing a larger opening force (torque).

In one or more embodiments, each of the hinge modules may include a hinge housing.

In one or more embodiments, a plurality of links may be disposed in the hinge housing.

In one or more embodiments, a driving arm may be connected to the plurality of links.

In one or more embodiments, the driving arm may partially protrude outwards of the hinge housing.

In one or more embodiments, a connection block may be rotatably connected to driving arm on the connection shaft.

In one or more embodiments, the panel unit may be fixed to the connection block.

In one or more embodiments, the plurality of links may allow the panel unit coupled to the connection block to be stably moved along a constant path.

In one or more embodiments, the driving arm may include a plurality of driving arms.

In one or more embodiments, the plurality of driving arms may be rotatably connected to the connection block about different connection shafts.

In one or more embodiments, the plurality of driving arms may disperse a torque applied to a connection portion between the panel unit and each hinge module.

In one or more embodiments, the plurality of driving arms may allow the panel unit to be more naturally rotated.

In one or more embodiments, in the second position, an upper surface of the panel unit may have a height lower than or equal to a lower end of an entrance of the tank chamber.

In one or more embodiments, the panel unit may be prevented from interfering with the water tank during removal/insertion of the water tank.

In one or more embodiments, in the second position, the upper surface of the panel unit may be formed in a direction parallel to a removal direction of the water tank.

In one or more embodiments, the upper surface of the panel unit may serve as a support when the water tank is drawn in/out.

In one or more embodiments, the panel unit in the second position may be disposed at a position located farther forwards from the casing than the front surface of the door.

In one or more embodiments, a distance guided by the panel unit when the water tank is drawn in/out.

In one or more embodiments, the rotation angle at which the panel unit is rotated from the first position to the second position may be between 80° and 100°.

In one or more embodiments, the panel unit may guide movement of the water tank, thereby making insertion or removal of the water tank easier.

In one or more embodiments, the opening device may include an opening housing disposed in the casing.

In one or more embodiments, the opening device may include an opening motor disposed in the opening housing.

In one or more embodiments, a cam part may be rotated by the opening motor.

In one or more embodiments, the cam part may partially protrude outwards of the casing in a rotation process.

In one or more embodiments, the panel unit may be automatically opened by the cam part.

In one or more embodiments, the cam part may be eccentrically connected to a rotation shaft of the opening motor. Therefore, the opening device does not require an opening structure through linear movement, and a structure of the opening device may be simply implemented.

In one or more embodiments, in one rotation process, the cam part may pass through the full storage position where the cam part does not protrude from the opening housing and the maximum protrusion position where the cam part protrudes from the opening housing as much as possible, and then may be returned to the full storage position.

In one or more embodiments, the cam part may open the panel unit and then may be returned only for one rotation, opening and returning operation of the opening device may be performed short.

In one or more embodiments, the opening device may include an opening sensor.

In one or more embodiments, the opening sensor may detect a rotated state of the cam part.

In one or more embodiments, the opening sensor may allow a panel unit to control the opening device.

In one or more embodiments, when the cam part is returned to the full storage position where the cam part is stored inside the opening housing, the opening sensor may detect a return signal of the cam part as the cam part presses the opening sensor. Therefore, the both of opening operation and return operation of the cam part may be recognized due to the opening sensor.

In one or more embodiments, when the panel unit is moved to the second position, the entrance of the tank chamber may be opened.

In one or more embodiments, the entrance of the tank chamber may be provided between an upper end of the casing and the panel unit.

Therefore, even when the cooking appliance is installed to a kitchen system in the built-in method, the panel unit may be prevented from interfering with the kitchen system.

In one or more embodiments, the cooking appliance may include a front frame having the entrance of the cavity and may be disposed in front of the casing.

In one or more embodiments, the entrance of the tank chamber may be formed above the front frame.

In one or more embodiments, during the insertion/removal process of the water tank, interference between the water tank and the front frame may be prevented.

In one or more embodiments, the cooking appliance may include a front housing.

In one or more embodiments, the front housing may be disposed between a front surface of the front frame and a rear surface of the panel unit in the first position.

In one or more embodiments, the entrance of the tank chamber may be formed in the front housing.

In one or more embodiments, even when the front frame may be formed in a vitreous enamel method, the peripheral portion of the entrance of the tank chamber may be prevented from being deformed in high temperature manufacturing environment.

In one or more embodiments, the front housing may have an opening for being penetrated by the cam protruding port through which the cam part of the opening device is inserted and protruded.

In one or more embodiments, the front housing may be made of an injection molding, and may include a cam protruding port to easily implement a complex shape of the entrance.

In one or more embodiments, when the panel unit is rotated between the first position and the second position, an upper end of a panel unit may be brought gradually far away from the entrance of the tank chamber and may be moved in a direction lowering a height of the upper end. Then, even when the panel unit is rotated, there is no change in the entire height of the cooking appliance. Therefore, the installation height of the cooking appliance may be reduced.

As described above, the cooking appliance according to the present invention has following effects.

The water tank for steam generation is disposed in rear of the panel unit, and the entrance of the water tank may be normally covered with the panel unit. When the panel unit is rotated downwards, the entrance of the water tank is opened and a user can take out the water tank or re-mount the water tank. As described above, the cooking appliance is configured to allow the panel unit to be rotated downwards to open the entrance of the water tank, so that even when the panel unit is rotated, there is no change in the total height of the cooking appliance. Therefore, there is the effect of lowering the installation height of the cooking appliance.

Furthermore, the panel unit is rotated downwards to open the entrance of the water tank, so that even when the cooking appliance is installed in a kitchen system in the built-in method, the cooking appliance and the kitchen system do not interfere with each other. Therefore, there is the effect of increasing the degree of freedom in installation of the cooking appliance.

Moreover, when the panel unit is rotated downwards, and the entrance of the water tank above the rotated panel unit is exposed, the panel unit is prevented from hiding the user's view towards the entrance of the water tank. Therefore, the user can more intuitively confirm a position of the water tank and can easily approach towards the water tank.

Specifically, when the panel unit is opened by rotation thereof, the upper surface of the panel unit extends towards the entrance of the water tank, so that the user can more intuitively know a removal direction of the water tank

Furthermore, the panel unit is rotated downwards, i.e., direction of gravity, so that the panel unit can be opened even with a less force. Therefore, there is the effect of enhancing the convenience in operation of the cooking appliance.

At this point, even when the automatic opening device is applied to automatically open the panel unit, a driving source of the automatic opening device does not require a great force, so that a manufacturing cost of the automatic opening device can be reduced.

Furthermore, the panel unit is configured such that when opening of the initial section in the entire opening section occurs, opening of a remaining section thereof can be naturally performed as the panel unit is rotated by gravity. Therefore, the entire operation section of the automatic opening device to open the panel unit can be formed short, so that a structure of the automatic opening device can be simplified.

Furthermore, the panel unit may be opened by being rotated from a vertically standing state to a horizontally laid state. Since this operation is performed as the panel unit is rotated downwards, overcoming of gravity is not required, so that generation of a large moment on a connection portion of the panel unit can be prevented, in an opening process. Accordingly, the structure of the panel unit opening device including the hinge modules can be simplified, and durability thereof can be enhanced.

Furthermore, the hinge modules guiding movement of the panel unit and the opening device opening the panel unit in the initial section may be provided independently from each other. Therefore, compared to when the hinge modules and the opening device are integrally formed, the structures thereof can be simplified, and the opening device is disposed at a relatively farther position than a rotation shaft of the panel unit, so that a larger opening force (torque) can be provided to the opening device.

Furthermore, when the panel unit is rotated to be opened, the panel unit is laid down in front of the entrance of the water tank. The opened panel unit may serve as a kind of support, and the user can remove the water tank from the cooking appliance or insert the water tank into the cooking appliance while placing the lower surface of the water tank on the upper surface of the panel unit. Therefore, removal and insertion work of the water tank can be improved.

Furthermore, the panel unit is moved forwards at the same time with rotation and may be moved downwards. Then, the panel unit is moved forwards and downwards at the same time with rotation, the total movement distance of the panel unit may be increased. When the movement distance of the panel unit is increased, the entrance of the water tank can be exposed wider towards the user, and removal and insertion of the water tank can be more easily performed.

The panel unit may be also realized or designated as control panel or controller. It may include a input and output function. The input function may be provided by buttons, switches or knobs or by a touch input device or a combination thereof. The output function may be provided by LEDs, control lamps, a display. Preferably, it is a combined touch display device for inputting commands and outputting information.

### BRIEF DESCRIPTION OF THE DRAWINGS

FIG. 1 is a perspective view showing an embodiment of a cooking appliance according to the present invention installed in a built-in method.
FIG. 2 is a perspective view showing a structure of the embodiment of the cooking appliance according to the present invention.
FIG. 3 is a perspective view showing the structure of the embodiment of the cooking appliance according to the present invention, at a different angle from an angle of FIG. 2.
FIG. 4 is a perspective view showing an opened state of a panel unit constituting the embodiment of the cooking appliance according to the present invention.
FIG. 5 is a perspective view showing a water tank constituting the embodiment of the cooking apliance, the water tank being taken out from the cooking appliance.
FIG. 6 is a sectional view taken along line VI-VI' in FIG. 1.
FIG. 7 is a sectional view taken along line VII-VII' in FIG. 1.
FIG. 8 is an exploded-perspective view showing components constituting the embodiment of the cooking appliance according to the present invention.
FIG. 9 is an enlarged-sectional view showing part A in FIG. 7.
FIG. 10 is a front view showing a lower portion in FIG. 1.
FIG. 11 is a sectional view taken along line XI-XI' in FIG. 2.
FIG. 12 is a sectional view taken along line XII-XII' in FIG. 2.
FIG. 13 is a perspective view showing a structure of an upper cover constituting the embodiment of the cooking appliance.
FIG. 14 is a perspective view showing a structure of another embodiment of the upper cover constituting the cooking appliance.
FIG. 15 is a plan view showing a structure of an electric chamber constituting the embodiment of the cooking appliance.
FIG. 16 is a plan view showing a state in which the water tank and a tank housing are mounted to the inside space of the electric chamber in FIG. 15.
FIG. 17 is an exploded-perspective view showing components constituting a front surface of a casing in the embodiment of the present invention.
FIG. 18 is a perspective view showing the inside space of the electric chamber without the upper cover constituting the embodiment of the present invention.
FIG. 19 is a perspective view showing an opened state of the panel unit in FIG. 18.
FIG. 20 is a sectional view taken along line XX-XX' in FIG. 5.
FIG. 21 is a perspective view showing a structure of a door frame.
FIG. 22 is a perspective view showing a coupled state of an upper casing, a front housing, and a tank housing.
FIG. 23 is a side view showing the coupled state of the upper casing, the front housing, and the tank housing.
FIG. 24 is an enlarged-sectional view showing a coupled portion of the front housing and the tank housing.
FIG. 25 is a perspective view showing a separated state of the front housing and the tank housing.
FIG. 26 is a front view showing a structure of the front housing constituting the embodiment of the present disclosure.
FIG. 27 is a perspective view showing a structure of the front housing.
FIG. 28 is a perspective view showing a structure of the tank housing.
FIG. 29 is a perspective view showing the structure of the tank housing, at an angle different front an angle in FIG. 28.
FIG. 30 is a front view showing a mounted state of the water tank to the front housing.
FIG. 31 is a sectional view taken along line XXXI-XXXI' in FIG. 30.
FIG. 32 is a perspective view showing a structure of an opening device.
FIGS. 33A to 33C are operational state views successively showing an operation process of the opening device constituting the embodiment of the present invention.
FIG. 34 is a perspective view showing a structure of the panel unit.
FIG. 35 is a perspective view showing the structure of the panel unit, at an angle different from an angle in FIG. 34.
FIG. 36 is an exploded-perspective view showing components of the panel unit constituting the embodiment of the present invention.
FIG. 37 is an exploded-perspective view showing the components of the panel unit constituting the embodiment of the present invention, at an angle different from an angle in FIG. 36.
FIG. 38 is a sectional view taken along line XXXVIII-XXXVIII' in FIG. 34.
FIG. 39 is a rear view showing the structure of the panel unit.
FIG. 40 is a rear view showing the panel unit without a cover frame.
FIG. 41 is a plan view showing a structure of another embodiment of the panel unit constituting the cooking appliance.
FIG. 42 is a rear view showing the structure of another embodiment of the panel unit constituting the cooking appliance.
FIG. 43 is a perspective view showing another embodiment of the panel unit shown in FIG. 42 without the cover frame.
FIG. 44 is a rear view showing another embodiment of the panel unit shown in FIG. 42 without the cover frame.
FIG. 45 is a plan view showing another embodiment of the panel unit shown in FIG. 42 without the cover frame
FIG. 46 is a side view showing another embodiment of the panel unit shown in FIG. 42 without the cover frame.
FIG. 47 is an operational state view sequentially showing opening of the panel unit.
FIGS. 48A to 48C are operational state views successively showing operation of a hinge module constituting the embodiment of the present invention as the panel unit is opened.
FIG. 49 is a perspective view showing a coupled state of the panel unit and hinge modules that constitute the embodiment of the present disclosure.
FIG. 50 is a perspective view showing the coupled state of the panel unit and the hinge modules that constitute the embodiment of the present invention, at an angle different from an angle in FIG. 49
FIG. 51 is a sectional view taken along line LI-LI' in FIG. 2.
FIGS. 52A and 52B are a sectional view taken along line LII-LII' in FIG. 49 and a block diagram showing a structure of each hinge module.
FIG. 53 is a perspective view showing a structure of a hinge coupled portion without the cover frame from the panel unit constituting the embodiment of the present invention.
FIG. 54 is a perspective view showing a coupled state of a connection block of each hinge module to the hinge coupled portion of the panel unit.
FIG. 55 is a sectional view showing a coupled state of the connection block of each hinge module to the hinge coupled portion of the panel unit.
FIG. 56 is a sectional view showing a structure of the hinge coupled portion of the panel unit.
FIG. 57 is a view showing a coupled portion of the panel unit and each hinge module constituting the embodiment of the present invention.
FIG. 58 is a perspective view of FIG. 57 without the cover frame of the panel unit.
FIG. 59 is a perspective view of FIG. 58 without a fastener.
FIG. 60 is a perspective view showing the coupled state of the panel unit and each hinge module coupled to each other, which constitute the embodiment of the present invention.
FIG. 61 is a side view showing the coupled state of the panel unit and each hinge module coupled to each other, which constitute the embodiment of the present invention.
FIG. 62 is a perspective view showing a structure of each hinge module and a wire cover that constitute the embodiment of the present invention.
FIG. 63 is a front view showing a mounted state of each hinge module and the wire cover mounted to the front frame and the front housing, which constitute the embodiment of the present invention.
FIG. 64 is a perspective view showing a structure of each hinge module and the wire cover, which constitute the embodiment of the present invention.
FIG. 65 is an enlarged-perspective view showing a coupled state of each hinge module and the wire cover that constitute the embodiment of the present invention.
FIG. 66 is a front view showing a location of a door locking device.
FIG. 67 is a perspective view showing a mounted state of the door locking device, the electric chamber of the casing.
FIG. 68 is a perspective view showing a spaced state of a door spaced apart from a front surface of the casing.
FIG. 69 is a perspective view showing a close state of the door with respect to the front surface of the casing.
FIG. 70 is an operational state view showing both before and after operation of the door locking device.
FIG. 71 is a perspective view showing a structure of the door locking device.
FIG. 72 is an exploded-perspective view showing components of the door locking device.
FIG. 73 is a perspective view showing an unlocked state of the door locking device.
FIG. 74 is a plan view showing the unlocked state of the door locking device.
FIG. 75 is a perspective view showing a locked state of the door locking device.
FIG. 76 is a plan view showing the locked state of the door locking device.
FIG. 77 is a sectional view taken along line LXXVII-LXXVII' in FIG. 75.
FIG. 78 is a perspective view showing a separated state of a locking head of the door locking device.
FIG. 79 is a perspective view showing a state in which the locking head of the door locking device is separated to result emergency cancellation.
FIG. 80 is a plan view showing a disposed state of a lighting module in the electric chamber.
FIG. 81 is a plan view showing a structure of a lighting guide.
FIG. 82 is a side view showing the structure of the lighting guide.
FIG. 83 is a perspective view showing a structure of a lighting device.
FIG. 84 is an exploded-perspective view showing components of the lighting device.
FIG. 85 is an exploded-perspective view showing components constituting another embodiment of the lighting device constituting the cooking appliance, at an angle different from FIG. 84.
FIG. 86 is a sectional view taken along line LXXXVI-LXXXVI' in FIG. 83.
FIG. 87 is a sectional view taken along line LXXXVII-LXXXVII' in FIG. 83.
FIG. 88 is a perspective view showing a second embodiment of a panel unit constituting a cooking appliance according to the present invention.
FIG. 89 is a perspective view showing a third embodiment of a panel unit constituting a cooking appliance according to the present invention.
FIG. 90 is a perspective view showing a fourth embodiment of a panel unit constituting a cooking appliance according to the present invention.

### DETAILED DESCRIPTION

Hereinbelow, exemplary embodiments of the present invention will be described in detail with reference to accompanying drawings. Wherever possible, the same reference numerals will be used throughout the drawings and the description to refer to the same or like elements or parts.

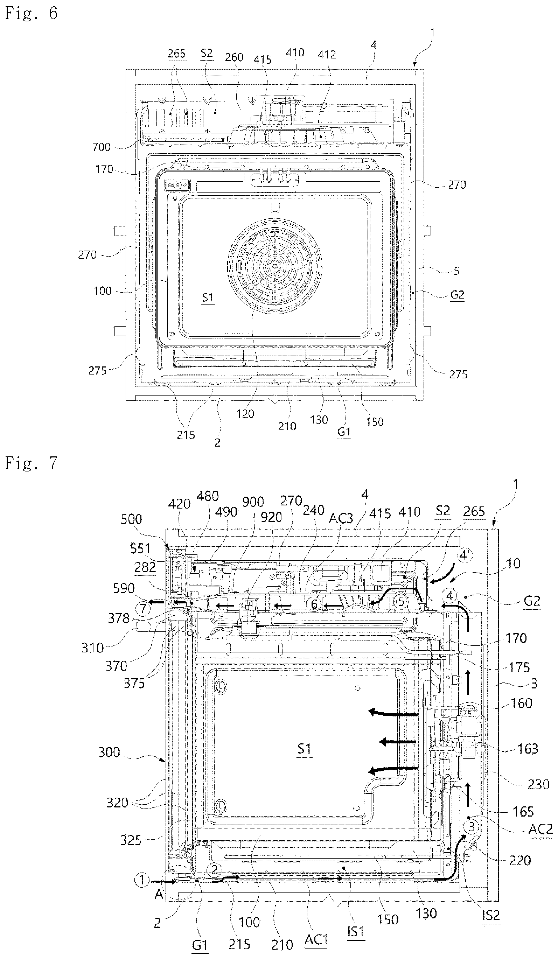

A cooking appliance of the present invention is provided to cook food to be cooked (hereinbelow, which will be referred to as 'object to be cooked') using one heat source or a plurality of heat sources. The cooking appliance may include a first heat source module 150 (referring to FIG. 7), a second heat source module 160 (referring to FIG. 7), and a third heat source module 170 (referring to FIG. 7). The first heat source module 150, the second heat source module 160, and the third heat source module 170 may be respectively arranged in the cooking appliance, and may consist of different types of heat sources. As another example, some of the first heat source module 150, the second heat source module 160, and the third heat source module 170 may be omitted.

The cooking appliance may include a steam device. The steam device may supply steam to a cavity S1 that is a cooking chamber provided inside the cooking appliance. To this end, the steam device may include a heater (not shown) for heating water, and a water tank 450 for suppling water to the heater.

The cooking appliance of the present invention includes a panel unit 500. The panel unit 500 may include at least either of an input means from which a signal for operating the cooking appliance is input, and an output means displaying a cooking state of the cooking appliance.

In the cooking appliance, each of the panel unit 500 and the water tank 450 may be disposed at a front portion of the cooking appliance. The panel unit 500 may cover or open an entrance 424 of the water tank 450 while being moved. Hereinbelow, a structure for moving operation of the panel unit 500 will be mainly described.

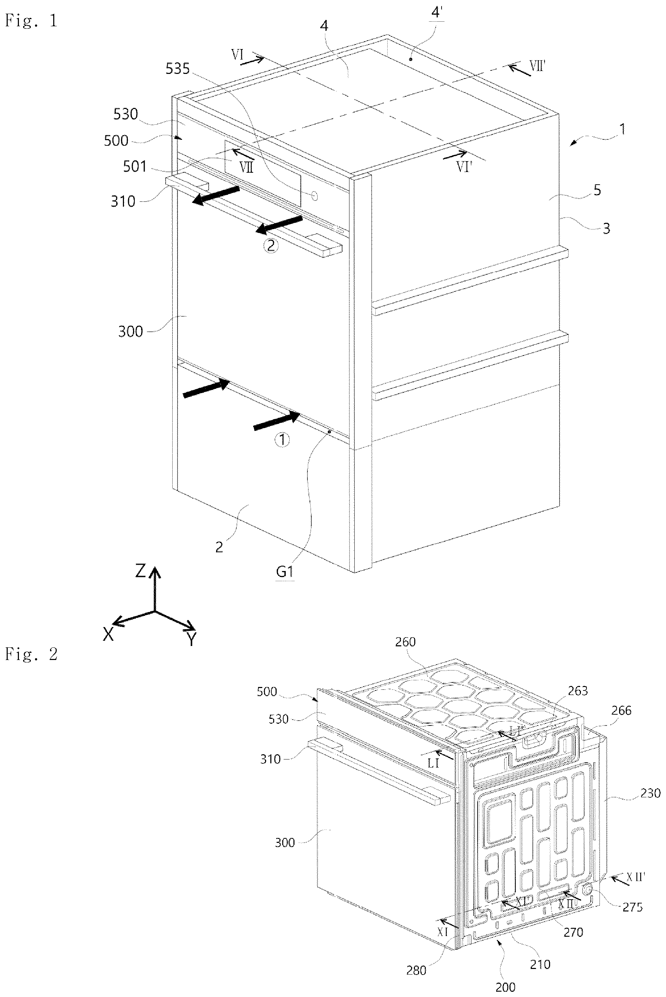

FIG. 1 is a view showing an embodiment of a cooking appliance according to the present invention installed in a built-in method. As shown in FIG. 1, the cooking appliance of the embodiment may be installed to a kitchen system 1, etc. and only a front surface of the cooking appliance may be exposed forward. At this point, a door 300 and the panel unit 500, which will be described below, are included in the cooking appliance, and may be included at the front surface of the cooking appliance. The water tank 450 of the embodiment may be exposed to the front surface of the cooking appliance, but is shown as being covered by the panel unit 500 in FIG. 1. Reference numeral 501 indicates a display unit exposed to the front surface of the panel unit 500.

For example, in FIG. 1, arrow X indicates a front-rear direction, arrow Y indicates a left-right direction, and arrow Z indicates an up-down direction. At this point, the front-rear direction may be a depth direction of the cooking appliance, the left-right direction may be a width direction of the cooking appliance, and the up-down direction may be a height direction of the cooking appliance. Hereinbelow, these terms will be used when indicating directions.

Briefly describing a structure of the kitchen system 1, the kitchen system 1 may surround a lower surface, a rear surface, an upper surface, and side surfaces of the cooking appliance, except for the front surface of the cooking appliance. The kitchen system 1 may include a lower surface 2 (referring to FIG. 6), a rear surface part 3, an upper surface part 4, and a side surface part 5. The lower surface part 2, the rear surface part 3, the upper surface part 4, and the side surface part 5 cover a lower surface, a rear surface, an upper surface, side surfaces of the cooking appliance, respectively, and only the front surface of the cooking appliance may be exposed outwards. As another example, some of the lower surface part 2, the rear surface part 3, the upper surface part 4, the side surface part 5 may be omitted.

At this point, a gap may exist between the kitchen system 1 and the cooking appliance. External air may flow into the gap (lower intake port G1) between the kitchen system 1 and the cooking appliance. As shown in FIG. 1, air may flow into the gap between the kitchen system 1 and the lower portion of the cooking appliance (direction of arrow ① ). Furthermore, the air cooling the cooking appliance while passing through the inside space of the cooking appliance may be discharged forwards again. More specifically, the air may be discharged through a gap formed between the door 300 and the panel unit 500 of the cooking appliance (direction of arrow ②). This circulation process of air will be described again below.

As shown in FIG. 2, the view shows the embodiment of the cooking appliance according to the present invention. As shown in the drawing, the cooking appliance may be shaped as an approximate hexahedron. A front-rear length, a left-right length, and a vertical height of the cooking appliance may be formed in approximately similar sizes. On the other hand, the front-rear length, the left-right length, and the vertical height of the cooking appliance may be formed in different sizes.

The cavity S1 (referring to FIG. 6) is provided inside the cooking appliance. The cavity S1 is formed inside a casing 100, 200 forming a frame of the cooking appliance. The cavity S1 may be an empty space in which an object to be cooked, and may be understood as a cooking chamber. The cavity S1 is divided from the electric chamber S2 (referring to FIGS. 6 and 7) which will be described below.

The casing 100, 200 may include an inner casing 100 and an outer casing 200. The outer casing 200 may be coupled to the inner casing 100 in a shape of surrounding the inner casing 100. An insulator (not shown) may be filled between the inner casing 100 and the outer casing 200, and the insulator may serve to block heat of each heat source module transmitted outwards.

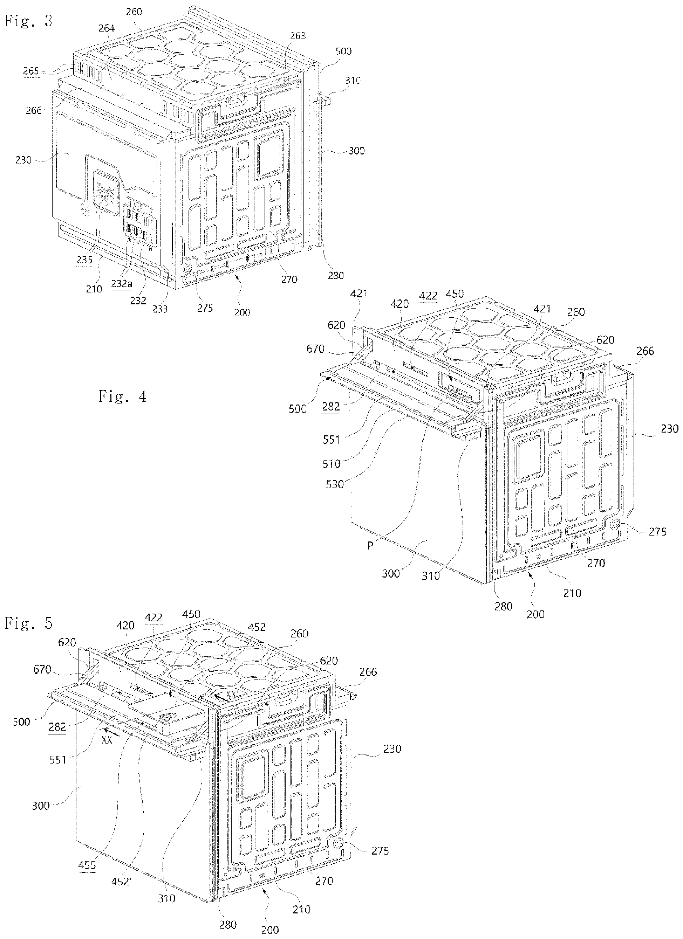

As shown in FIGS. 2 and 3, the panel unit 500 to be described below may be disposed above the door 300. The panel unit 500 may include at least either of an input means from which a signal for operating the cooking appliance is input, and an output means displaying a cooking state of the cooking appliance. At this point, the input means and the output means of the panel unit 500 may be configured as one display. A detailed structure of the panel unit 500 will be described below.

As shown in FIG. 4, the panel unit 500 is shown as an opened state. In the embodiment, the panel unit 500 may be rotated such that an upper end of the panel unit 500 is moved downwards. In other words, the panel unit 500 may be operated in a kind of pull-down method in which the upper end thereof is rotated upwards and downwards on a lower end thereof.

Next, as shown in FIG. 5, the water tank 450 is ejected out while the panel unit 500 is opened. In the embodiment, the water tank 450 for a steam effect is disposed in rear of the panel unit 500 in an operational state of the cooking appliance so as to be covered by the panel unit 500. When the water tank 450 is ejected or inserted again, the panel unit 500 should be opened to open an entrance of a tank chamber 450a. At this point, the operational state means a state in which the cooking appliance is operated, i.e., a state in which an object to be cooked is cooked.

As described above, in the embodiment, the panel unit 500 may be disposed in front of the water tank 450 at all times except for ejecting and inserting processes of the water tank 450. The panel unit 500 disposed in front of the water tank 450 may cover the entrance 424 of the water tank 450, more specifically, an entrance of the tank chamber 450a to be described below. As such, the water tank 450 and the entrance are prevented from being exposed outwards, and sense of beauty of the cooking appliance may be improved.

For example, an opened state of the panel unit 500 means a rotated state of the panel unit such that the upper end of the panel unit 500 is moved downwards, as shown in FIG. 4. On the other hand, a closed state of the panel unit 500 means a rotated state of the panel unit 500 such that the upper end thereof is rotated upwards to allow the panel unit 500 to be disposed in parallel to the door 300, as shown in FIG. 2.

As shown in FIG. 6, the cooking appliance stored in the kitchen system 1 is shown. The cavity S1 may be provided in the inner casing 100. It may be understood that the empty space of the cavity S1 is defined by the inner casing 100. The inner casing 100 may be shaped as an approximate hexahedron, and may be open forwards.

A rear surface of the inner casing 100 may have an opening 120. The opening 120 serves to transmit heat generated from the second heat source module 160 into the cavity S1. The opening 120 may be formed by penetrating a part of the rear surface of the inner casing 100. In the embodiment, the opening 120 is shaped as an approximate circular shape.

At this point, steam may flow into the cavity S1 through the opening 120. The steam is generated by the steam device. As shown in FIG. 7, the steam may flow into the cavity S1 by a convection fan provided in the second heat source module 160.

As shown in FIGS. 6 and 7, a lower frame 130 may be provided at a lower portion of the inner casing 100. The lower frame 130 may protrude downwards more than a bottom surface of the inner casing 100. The first heat source module 150 may be disposed inside the lower frame 130. The lower frame 130 may be disposed at an upper portion of a bottom casing 210 to be described below. A first insulating space IS1 is formed between the lower frame 130 and the bottom casing 210, and the first insulating space IS1 is filled with an insulator (not shown), so that heat of the first heat source module 150 is prevented from being discharged outwards.

In the embodiment, a plurality of heat sources may be included. The heat sources may include the first heat source module 150, the second heat source module 160, and the third heat source module 170. The first heat source module 150 is disposed at a lower surface of the cavity S1, the second heat source module 160 is disposed at a rear surface of the cavity S1, and the third heat source module 170 may be disposed at an upper surface of the cavity S1. As described above, the multiple heat sources are disposed at difference positions, so that a surface of an object to be cooked may be heated more evenly, and cooking time may be reduced. Furthermore, when the plurality of heat sources is used, a cooking method that requires high temperature can be implemented.

Referring to FIGS. 6 and 7, the first heat source module 150 may be disposed in the lower frame 130 of the inner casing 100. The first heat source module 150 may emit radiant heat into the cavity S1. To this end, the first heat source module 150 may include a heater. The heater may emit radiant heat upwards, i.e., towards the cavity S1, and may heat a lower portion of the object to be cooked. The heater may be a graphite heater. This heater may serve as a kind of broil heater, and the heater may be used as a grill use using a direct heat or radiant heat.

As another example, the first heat source module 150 may heat the object to be cooked in an inductive heating method using a magnetic field generated in a working coil.

The second heat source module 160 may be a kind of convection heater. The second heat source module 160 may emit convection heat into the cavity S1 together with the convection fan so as to serve to improve uniformity of cooking. On the other hand, the second heat source module 160 is provided without the convection fan, and may supply radiant heat to the object to be cooked by using a heat wire like the first heat source module 150.

A convection heater 165 may be disposed in the second heat source module 160. The convection heater may be formed in a bar type having predetermined length and diameter. For example, the convection heater may be a sheath heater in which a protecting tube of a heat wire is made of metal. On the other hand, the convection heater may be a carbon heater, a ceramic heater, a halogen heater that are configured such that a filament is enclosed inside a tube made of a transparent or translucent material.

The third heat source module 170 may be disposed at the upper surface of the cavity S1 to face the first heat source module 150. The third heat source module 170 may emit radiant heat into the cavity S1 by using a heater, like the first heat source module 150. The heater may emit radiant heat downwards, i.e., towards the cavity S1, and may heat an upper portion of the object to be cooked. In FIG. 7, reference numeral 175 indicates a temperature probe to measure temperature in the cavity S1.

Although not shown in the drawing, the casing 100, 200 may include a fourth heat source module. The fourth heat source module may include a magnetron oscillating microwaves and a wave guide guiding the microwaves oscillated from the magnetron to the cavity S1.

The outer casing 200 may be disposed outside the inner casing 100. As shown in FIGS. 2 and 3, an exterior shape of the cooking appliance may be composed of the outer casing 200. The outer casing 200 may include the bottom casing 210 forming a bottom of the cooking appliance, a rear casing 220 forming a rear surface thereof, and an upper casing 240 forming an upper surface thereof. , The door 300 to be described below may be disposed in front of the cooking appliance to form the front surface of the cooking appliance.

The bottom casing 210 may be provided to be spaced apart from the lower frame 130 of the inner casing 100. The bottom casing 210 may be formed in an approximate plate shape. The bottom casing 210 may be placed on the lower surface part 2 of the kitchen system 1. An insulator (not shown) may be filled in the first insulating space IS1 between the bottom casing 210 and the lower frame 130.

As shown in FIGS. 6 to 7, a bottom spacer 215 may protrude from the bottom casing 210. The bottom spacer 215 may be formed by protrude downward from the bottom casing 210. The bottom spacer 215 may be in contact with the lower surface part 2 of the kitchen system 1 to support the cooking appliance. In the embodiment, a plurality of the bottom spacers 215 may be provided at the bottom casing 210.

The bottom casing 210 and the lower surface part 2 of the kitchen system 1 may be spaced apart from each other to form a gap by the bottom spacers 215. The lower gap G1 may serve as a lower intake port, and a first air flow path AC1 may be connected to the lower intake port G1. Air flowing from the outside space may be moved along the first air flow path AC1. In FIG. 7, arrow (1) indicates a direction in which the external air flows into the first air flow path AC1, and arrow ② indicates a direction in which the air is moved toward the rear space of the cooking appliance along the first air flow path AC1. The first air flow path AC1 will be described again below.

As the bottom spacers 215 space the bottom casing 210 and the lower surface part 2 of the kitchen system 1 from each other, the bottom spacers 215 may form the lower intake port G1 through which the external air can flow inwards. Referring to FIG. 1, the external air can flow in a direction of arrow ① through the lower intake port G1 formed by the bottom spacers 215. The air flowing as described above is moved along the outer casing 200 of the cooking appliance may reduce surface temperature of the cooking appliance and temperature inside the electric chamber S2.

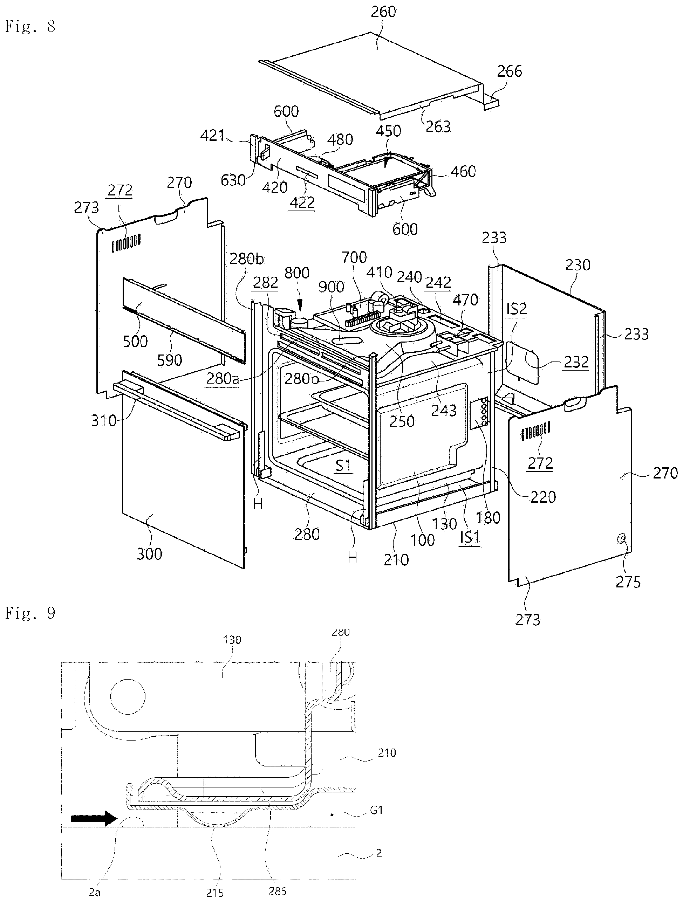

FIG. 9 is an enlarged view showing part A in FIG. 7. As shown in the drawing, an upper surface 2a of the lower surface part 2 of the kitchen system 1 may be spaced apart from the bottom casing 210 by the bottom spacers 215. External air may be flow into the lower intake port G1 spaced as described above. At this point, the upper surface 2a of the lower surface part 2 of the kitchen system 1 may be understood as a placing surface on which the cooking appliance is placed.

A lower end placing portion 285 of a front frame 280 to be described below may be placed on the bottom casing 210. Some of the plurality of bottom spacers 215 are formed in a position in which the front frame 280 and the bottom casing 210, thereby reinforcing strength of the bottom casing 210.

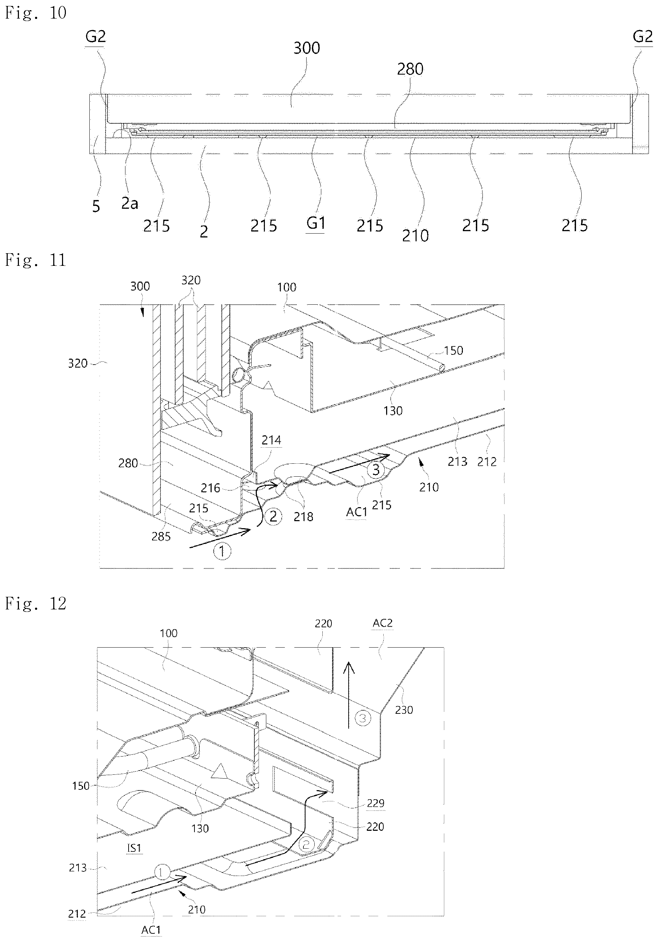

As shown in FIG. 10 in which the bottom casing 210 is shown from the front side, the plurality of bottom spacers 215 is disposed under the bottom casing 210 with intervals. The lower intake port G1 may be formed between the upper surface 2a of the lower surface part 2 of the kitchen system 1 and the bottom casing 210 by the bottom spacers 215. Furthermore, a side gap G2 may be formed between the side surface part 5 and the cooking appliance. The side gap G2 will be described again below.

FIGS. 11 and 12 are views showing a structure of the bottom casing 210. For reference, FIG. 11 shows a front structure of the bottom casing 210, and FIG. 12 shows a rear structure of the bottom casing 210. As shown in the drawings, in the embodiment, the bottom casing 210 may have a double structure. The bottom casing 210 may be composed of an upper plate 213 and a lower plate 212, and a predetermined space is provided between the upper plate 213 and the lower plate 212.

This space may provide a part of the first air flow path AC1. As described above, the first air flow path AC1 divided from other spaces may be provided between the lower plate 212 and the upper plate 213 of the bottom casing 210. The first air flow path AC1 may be disposed below the first heat source module 150. Therefore, air flowing rearwards along the first air flow path AC1 may cool the first heat source module 150.

As the first air flow path AC1 is provided inside the bottom casing 210, the first air flow path AC1 may be prevented from being affected from surrounding structures of the cooking appliance. In other words, regardless of shape, size, or material of the kitchen system in which the cooking appliance is installed, external air may stably flow along the first air flow path AC1 having constant size and shape. The first air flow path AC1 is connected to a second air flow path AC2 to be described below, thereby providing a continuous air flow path in the cooking appliance.

The lower end placing portion 285 of the front frame 280 may be placed on a front portion of the bottom casing 210, the portion facing the door 300. The lower end placing portion 285 of the front frame 280 may be understood to be supported by the front portion of the bottom casing 210. More specifically, the lower end placing portion 285 of the front frame 280 may be overlapped with an upper portion of the lower plate 212 constituting the bottom casing 210.

A blocking part 214 may be provided at a first end of the upper plate 213. The blocking part 214 may block heat of the first heat source module 150 from being transferred toward a door hinge H (referring to FIG. 8) disposed at front of the upper plate 213. To this end, the blocking part 214 may be bent at the end of the upper plate 213. The blocking part 214 may be provided at a front portion of the upper plate 213, i.e., a portion facing the door 300. The blocking part 214 may be bent in a direction in which height of the upper plate 213 is increased. Unlike what is shown in FIG. 11, the blocking part 214 may be formed higher to match with height of the door hinge H.

The upper plate 213 and the lower plate 212 may be spaced apart from each other. At this point, the upper plate 213 and the lower plate 212 may be in close contact with each other at some positions. As shown in FIG. 11, the upper plate 213 and the lower plate 212 protrude to face each other to form a close contact portion 218. The close contact portion 218 allows the upper plate 213 and the lower plate 212 to be in close contact with each other, so that the upper and lower plates supports the weight of components disposed on the upper portion of the bottom casing 210. The close contact portion 218 may include a plurality of close contact portions 218 disposed along a width direction of the bottom casing 210.

An inlet 216 may be formed in the lower plate 212. The inlet 216 may be formed by vertically penetrating a part of the lower plate 212. The inlet 216 may be connected to the lower intake port G1. The external air flowing into the lower intake port G1 may be suctioned into the first air flow path AC1 through the inlet 216. A suctioning force of a cooling fan module 410 to be described below extends to the first air flow path AC1, so that air of the first air flow path AC1 may flow rearwards.

Therefore, the external air flowing into the lower intake port G1 formed by the bottom spacers 215 may flow into the gap between the upper plate 213 and the lower plate 212 through the inlet 216 formed in the lower plate 212. The flowing air may be moved rearwards along the first air flow path AC1, and may flow into the second air flow path AC2 the rear casing 220 and a rear cover 230 to be described below.

At this point, the inlet 216 may be formed in a front portion of the lower plate 212, and the portion is close to the door 300. In other words, the inlet 216 is not formed at several positions of the lower plate 212, and is focused to the front portion close to the door 300. As such, dispersion of the suctioning force of the cooling fan module 410 is prevented, and the suctioning force can be focused to both of the inlet 216 and the lower intake port G1. Of course, a plurality of inlets 216 may be disposed at the front portion of the lower plate 212.

For reference, in FIG. 11, arrow ① indicates a passage in which external air flows into the lower intake port G1, arrow ② indicates a passage in which the inflow air flows into the first air flow path AC1 through the inlet 216, and arrow ③ indicates a passage in which the air is moved rearwards along the first air flow path AC1.

Meanwhile, the air flowing along the first air flow path AC1 between the lower plate 212 and the upper plate 213 may be delivered to the second air flow path AC2. The above-described state is shown in FIG. 12. As shown in the drawing, the air moved rearwards (direction of arrow ①) along the first air flow path AC1 may flow (direction of arrow ②) toward the second air flow path AC2 between the rear casing 220 and the rear cover 230. The air flowing in the second air flow path AC2 may be moved upwards (direction of arrow ③) along the second air flow path AC2.

To this end, the rear casing 220 may include a connection passage 229 connecting the first air flow path AC1 to the second air flow path AC2. The connection passage 229 may be formed in a shape that penetrates the rear casing 220 in the front-rear direction. The connection passage 229 may be formed at a lower portion of the rear casing 220. More specifically, the connection passage 229 may be formed at a lower end of the rear casing 220, and the lower portion is close to the bottom casing 210.

As described above, the air moved upwards (direction of arrow ③) along the second air flow path AC2 passes a rear side of the second heat source module 160. Accordingly, the air passing through the second air flow path AC2 can cool the rear side of the second heat source module 160.

As described again below, the air moved upwards along the second air flow path AC2 may be delivered to the electric chamber S2. The air in the electric chamber S2 may be suctioned by the cooling fan module 410, and may be discharged outwards through a third air flow path AC3. The air delivered to the electric chamber S2 may cool the inside space of the electric chamber S2. The third air flow path AC3 is disposed at an upper portion of the third heat source module 170, so that the air passing through the third air flow path AC3 may cool the upper portion of the third heat source module 170.

The state is shown in FIG. 7. As shown in the drawing, external air (direction of arrow ①) flowing inwards through the lower intake port G1 may be suctioned into the first air flow path AC1 (direction of arrow ②) through the inlet 216. The air may be moved rearwards along the first air flow path AC1.

The air moved rearwards may pass through the second air flow path AC2 (direction of arrow ③). Since the second air flow path AC2 is formed in a direction of gravity, a suctioning force of the cooling fan module 410 is required in order to move air along the second air flow path AC2.

Furthermore, the air may flow into the electric chamber S2 through a connection holes 242 of the upper casing 240 to be described below (direction of arrow ④). The air flowing into the electric chamber S2 is suctioned into the cooling fan module 410 (direction of arrow ⑤), and then may be moved forwards (direction of arrow ⑥) along the third air flow path AC3. Eventually, the air may be discharged outwards through an exhaust port 282.

Briefly, it may be understood that the external air flows inwards through the front lower portion of the cooking appliance, be circulated inside the cooking appliance, and then be discharged outwards through the front upper portion thereof. In this process, the external air may cool all surroundings of the first heating source module (AC1), the second heating source module (AC2), and the third heating source module (AC3).

Meanwhile, in FIG. 7, arrow ④' indicates an inflow direction of air flowing inwards through an air in-outflow portion 265 of an upper cover 260 to be described below. The external air does not necessarily flow only through the front lower portion of the cooking appliance, but may also flow through a clearance formed in an upper rear portion of the cooking appliance. Of course, when the air in-outflow portion 265 is not formed in the upper cover 260, there may be no inflow of air through arrow ④'. When the upper cover 260 does not have the air in-outflow portion 265, the air inflow path is reduced, but the suctioning force of the cooling fan module 410 may be focused to the front lower portion of the cooking appliance.

Referring to FIG. 8 again, the view shows the outer casing 200 surrounding the inner casing 100. A second insulating space IS2 may be formed between the rear casing 220 constituting the outer casing 200 and the inner casing 100. The second insulating space IS2 is filled with an insulator (not shown), thereby preventing heat of the cavity S1 from being discharged outwards.

The rear cover 230 may be disposed in rear of the rear casing 220 constituting the outer casing 200. Furthermore, a predetermined empty space may be formed between the rear casing 220 and the rear cover 230. The empty space between the rear casing 220 and the rear cover 230 may serve as the second air flow path AC2. Furthermore, as shown in FIG. 7, a convection motor 163 for rotation of a convection fan constituting the second heat source module 160 may be disposed in the second air flow path AC2. For reference, reference numeral 165 indicates a heater structure of the second heat source module 160.

Furthermore, the upper cover 260 may be disposed above the upper casing 240. The upper cover 260 may cover an upper portion of the electric chamber S2 to shield the electric chamber S2. The electric chamber S2 may be formed between the upper casing 240 and the upper cover 260. The cooling fan module 410 may be disposed in the electric chamber S2. The cooling fan module 410 suctions external air, and may discharge air that has risen in temperature while passing through the inside space of the cooking appliance, outwards. The electric chamber S2 may be understood as an upper space distinguished from the cavity S1. As another example, the electric chamber S2 is disposed at a lower portion of the cavity S1 to serve as a lower space distinguished from the cavity S1. The cooling fan module 410 will be described again below.

Meanwhile, the air moved along the second air flow path AC2 may be moved forwards along the third air flow path AC3 (referring to FIG. 7) formed in the cooling fan module 410. The air moved forwards may finally be discharged outwards. An outlet through which the air is discharged outwards may be formed between the door 300 and the panel unit 500 (referring to arrow ② in FIG. 1). More specifically, the air may be discharged through the exhaust port 282 formed in the front frame 280 to be described below, and the air may finally be discharged outwards through the gap between the door 300 disposed in front of the exhaust port 282 and the panel unit 500.

Referring to FIGS. 3 and 8, the rear cover 230 may be shaped as an approximate square plate. The rear cover 230 may have a through portion 232. A shield cover 232a may be coupled to the through portion 232. The shield cover 232a may cover the through portion 232, when the shield cover 232a is removed, the through portion 232 may be opened. An operator can open the shield cover 232a and then approach the second air flow path AC2. In other words, the shield cover 232a may be removed when approaching a rear inside portion of the cooking appliance for maintenance of the cooking appliance.

A rear through hole 235 may be formed in the rear cover 230. The rear through hole 235 may be understood as an air flow path connected to the outside space. The rear through hole 235 may be formed in a center portion of the rear cover 230. As another example, the rear through hole 235 may be omitted in the rear cover 230.

A rear fastening portion 233 may be provided on an edge of the rear cover 230. The rear fastening portion 233 may have the rear cover 230 having a bent edge portion. The rear fastening portion 233 is provided to couple the rear cover 230 and a side cover 270 to each other. The rear fastening portion 233 and a side end of the side cover 270 may be assembled with a fastener such as a screw. Furthermore, the rear cover 230 may be assembled to the rear casing 220 at the same time.

Next, showing a structure of the upper casing 240, the upper casing 240 may be disposed on an upper surface of the inner casing 100. The upper casing 240 may be understood to form a bottom surface of the electric chamber S2. Various components including the cooling fan module 410 may be disposed at the upper casing 240.

Referring to FIG. 8, the connection holes 242 may be open in rear of the upper casing 240 The connection holes 242 may be formed as a vertically penetrating shape at a rear side of the upper casing 240. The connection holes 242 may connect the second air flow path AC2 and the electric chamber S2 to each other. The connection hole 242 may include a plurality of connection holes 242 disposed along a rear edge of the upper casing 240.

As described above, the plurality of connection holes 242 is opened vertically, but the plurality of connection holes 242 may be shield by the upper cover 260. Referring to FIG. 8, a cover plate 266 of the upper cover 260 is disposed above the connection holes 242. The cover plate 266 may cover the connection holes 242 while being spaced upwards from the connection holes 242 at a predetermined distance. In this state, the connection holes 242 are not directly connected to the outside space of the outer casing 200, and the connection holes 242 may connect only the second air flow path AC2 and the electric chamber S2 to each other.

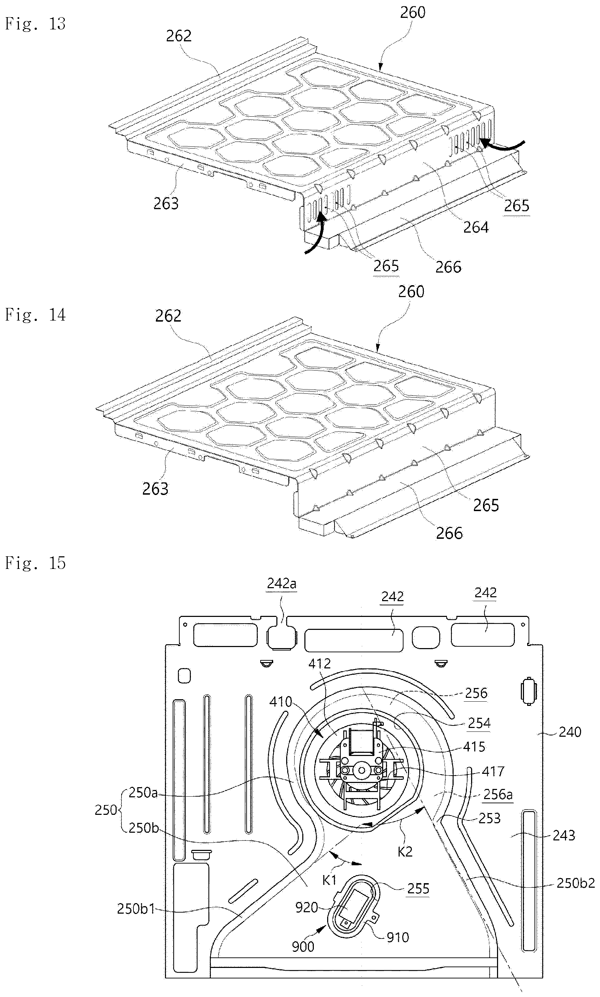

For convenience of description, describing the upper cover 260 first, as shown in FIG. 13 the upper cover 260 may be shaped as an approximate square plate. The upper cover 260 may be coupled to the upper casing 240 to form the electric chamber S2 between the upper cover 260 and the upper casing 240. More specifically, the electric chamber S2 may be provided in a space surrounded by the upper casing 240, the upper cover 260, the side cover 270, and a front housing 420 to be described below.

Showing a structure of the upper cover 260, a cover end 262 may be provided at a front portion of a plate body of the upper cover 260. The cover end 262 may be formed in a direction increasing the height of the upper cover 260. The cover end 262 may be formed in a step shape and may be disposed on an upper surface of the front housing 420.

Fastening ends 263 may be provided on opposite portions of the upper cover 260. Each of the fastening ends 263 may be shaped as a shape in which the opposite ends of the upper cover 260 are bent downwards. Each fastening end 263 may be overlapped with the upper end of the side cover 270. The upper cover 260 may be coupled to the upper end of the side cover 270 by each fastening end 263.

A connecting-bent portion 264 may be provided at a rear portion of the body of the upper cover 260. The connecting-bent portion 264 may be formed in a shape bent downwards from the rear portion of the body of the upper cover 260. An upper end of the connecting-bent portion 264 is connected to the rear portion of the body of the upper cover 260, and a lower end thereof is connected to the cover plate 266.

The air in-outflow portion 265 may be formed in the connecting-bent portion 264. The air in-outflow portion 265 may be formed by penetrating a portion of the connecting-bent portion 264. The air in-outflow portion 265 may connect the electric chamber S2 to the external space. The external air may flow into the electric chamber S2 through the air in-outflow portion 265, or the air in the electric chamber S2 may be discharged outwards through the air in-outflow portion 265.

Referring to FIG. 7, a flow path of the air flowing into the electric chamber S2 may include (i) a passage through the second air flow path AC2 (direction of arrow ④), and (ii) a passage through the air in-outflow portion 265 (direction of arrow ④'). The external air may also flow into the electric chamber S2 through (iii) a side through hole 272 (referring to FIG. 8) of the side cover 270 to be described below.

The cover plate 266 may be connected to the connecting-bent portion 264. The cover plate 266 may cover a part of a rear portion of the upper casing 240. More specifically, the cover plate 266 may be disposed above the connection holes 242 of the upper casing 240. The cover plate 266 may cover the upper space of the connection holes 242 while being spaced apart from the connection holes 242 at a predetermined distance. Since the cover plate 266 is located lower than the body of the upper cover 260, a distance between the cover plate 266 and the connection holes 242 may be reduced. As described above, when a distance between the cover plate 266 and the connection holes 242 are reduced, air passing through the connection holes 242 may be efficiently guided to the internal space of the electric chamber S2 along a lower surface of the cover plate 266.

As shown in FIG. 14 showing another embodiment of the upper cover 260, the air in-outflow portion 265 may be omitted. As such, the external air is prevented from flowing into the electric chamber S2 through the upper cover 260. External air may flow only through the lower intake port G1 that is the gap below the bottom casing 210 to be moved along the first air flow path AC1, the second air flow path AC2, and the third air flow path AC3 of the cooking appliance. At this point, the external air may flow inwards through the side through hole 272 formed in the side cover 270, but most of the air may flow through the gap below the bottom casing 210.

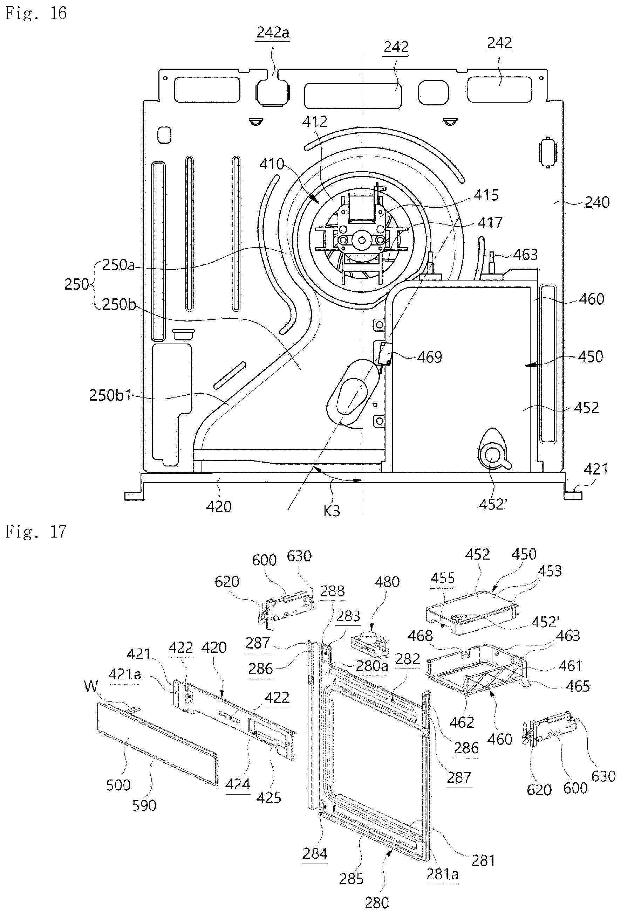

Referring to FIGS. 15 and 16, the upper casing 240 will be described. The upper casing 240 may be fixed to the upper surface of the inner casing 100. The upper casing 240 may be disposed between the upper surface of the inner casing 100 and the upper cover 260. An upper surface of the upper casing 240 may serve as a bottom surface of the electric chamber S2.

The connection holes 242 described above may be provided by penetrating the rear portion of the upper casing 240. The connection holes 242 may be one or a plurality of connection holes 242. A part of the connection holes 242 is open rearwards to form a guide opening portion 242a. A wire harness (not shown) connected to the external space is inserted through the guide opening portion 242a, and the wire harness may be disposed inside the connection holes 242.

The upper surface of the upper casing 240 may be understood as a mounting surface. Various components including the cooling fan module 410 and a lighting module 900 may be disposed on the mounting surface. The mounting surface has a planar structure basically, and a part thereof may be shaped in a bent rib to serve as a strength reinforcing function.

A tank mounting part 243 may be formed at one portion of the upper casing 240. The tank mounting part 243 may be understood as a portion in which the water tank 450 and a tank housing 460, in which the water tank 450 is placed, to be described below, are disposed. The tank mounting part 243 may be formed at a position biased towards the front side (lower side based on FIG. 15) in the mounting surface of the upper casing 240. In other words, the tank mounting part 243 is formed to be biased towards the front side of the cooking appliance.

Furthermore, the tank mounting part 243 may be formed to be biased from the center portion towards either side in the left-right width direction of the upper casing 240. In the embodiment, the tank mounting part 243 is disposed at a right portion of the upper casing 240. On a left portion of the upper casing 240 which is opposite to the tank mounting part 243, a door locking device 800 to be described below, etc. may be disposed.

The tank mounting part 243 may include a part of the mounting surface, and an upper surface of a guide duct 250 to be described below. The tank housing 460 may be disposed to cover not only a part of the mounting surface but also a part of the guide duct 250. As shown in FIG. 16, the view shows the tank housing 460 disposed to be overlapped with the guide duct 250.

The guide duct 250 may be provided on the mounting surface. The guide duct 250 may have a structure covering a part of the mounting surface. The guide duct 250 may form a guide passage between the guide duct and the mounting surface. The guide passage may be understood as the third air flow path AC3 connected to the second air flow path AC2. Air discharged from the cooling fan module 410 may be discharged outwards through the guide passage. Therefore, the guide duct 250 may be understood as a part of the cooling fan module 410.

As shown in FIG. 15, the guide duct 250 is shown. The guide duct 250 may include a body part 250a, and a guide part 250b to which the body part 250a is connected. The cooling fan module 410 may be installed in the body part 250a. The guide part 250b may form the third air flow path AC3 that allows the air discharged from the cooling fan module 410 to be discharged forwards of the cooking appliance. Therefore, the third air flow path AC3 may be understood as an air discharge flow path.

The body part 250a may be disposed on the center portion in the left-right width direction of the guide duct 250 (left-right direction based on FIG. 15). As such, the guide duct 250 may allow air flowing along the second air flow path AC2 of the cooking appliance to be evenly suctioned without being biased to either side.

The body part 250a may be disposed at a position that is biased to the rear side in the front-rear depth direction (up-down direction based on FIG. 15) from the center portion. In other words, the body part 250a may be disposed at a position closer to the connection holes 242 than the exhaust port 282 of the cooking appliance. When the body part 250a is disposed close to the connection holes 242, air in the second air flow path AC2 can be suctioned stronger. Furthermore, when the body part 250a is disposed at a rear portion close to the connection holes 242, the guide part 250b connected from the body part 250a can be formed sufficiently wider.

The guide part 250b may be formed with a width gradually increased toward the front side of the cooking appliance (lower side based on FIG. 15). The guide part 250b may include a first side portion 250b1 and a second side portion 250b2. The first side portion 250b1 and the second side portion 250b2 may extend in inclined directions to make the width of the guide part 250b wider.

The first side portion 250b1 may constitute a first side surface of the guide part 250b. The first side portion 250b1 may extend in a direction away from an outlet 256a of a discharge space 256 formed in the body part 250a. In other words, based on FIG. 15, the first side portion 250b1 may extend downwards and leftwards.

The second side portion 250b2 may constitute a second side surface of the guide part 250b. The second side portion 250b2 may extend in a direction in which a width between the second side portion 250b2 and the first side portion 250b1 is gradually wider.

At this point, when an angle between an imaginary extension line passing through the center portion of the cooling fan module 410 and an extension line extending along the first side portion 250b1 is referred to as K1, and an angle between the imaginary extension line passing through the center portion of the cooling fan module 410 and an extension line extending along the second side portion 250b2 is referred to as K2, K1 may be greater than K2 (K1>K2). A cooling fan of the cooling fan module 410 discharges air while being rotated clockwise, so that the discharged air tends to flow while being biased to the first side portion 250b1. Reflecting this tendency, there may be the third air flow path AC3 with an inclination angle in which the first side portion 250b1 is a relatively gentler than the second side portion 250b2.

A recessed portion 253 may be formed between the body part 250a and the second side portion 250b2. The recessed portion 253 may reduce the width of a connection part between the body part 250a and the second side portion 250b2. The recessed portion 253 may provide a kind of inclined structure, and this inclined structure may allow the air discharged from the cooling fan module 410 to be guided in a direction of the first side portion 250b1.

A fan coupling portion 254 may be formed in the body part 250a. The fan coupling portion 254 is a kind of empty space, and the cooling fan module 410 may be disposed therein. A fan body 412 of the cooling fan module 410 to be described below may be fixed to the fan coupling portion 254. Air flowing into the electric chamber S2 through the connection holes 242 may be suctioned into the cooling fan module 410 through a hole of the fan body 412 disposed in the fan coupling portion 254.

In the embodiment, the fan coupling portion 254 may be formed in a position spaced apart from the center portion of the body part 250a. The fan coupling portion 254 may be provided eccentrically from the center portion of the body part 250a toward one side. More specifically, based on FIG. 15, the fan coupling portion 254 may be disposed to be biased leftwards and rightwards from the center portion of the body part 250a. Based on the FIG. 15, in other words, the fan coupling portion 254 may be understood to be disposed to be biased leftwards from the center portion of the body part 250a and forwards toward the door. When a rotation direction of a fan blade 417 of the cooling fan module 410 is counterclockwise, the fan coupling portion 254 may be disposed at the right side of the center portion of the body part 250a, not the left side thereof.

As described above, when the fan coupling portion 254 is spaced apart from the center portion of the body part 250a, the predetermined discharge space 256 may be formed between the right side of the cooling fan module 410 and an inner wall of the body part 250a. Based on FIG. 15, the predetermined discharge space 256 may be formed at the right side of the fan coupling portion 254. This space may provide a clearance in which air discharged from the cooling fan module 410 flows to some degree without directly hitting with the inner wall of the body part 250a.

The discharge space 256 may be gradually wider toward the outlet 256a of the discharge space 256. As shown in FIG. 15, since the fan coupling portion 254 is spaced apart from the center portion of the body part 250a, the width of the discharge space 256 is wider toward the outlet. As such, the air suctioned through the cooling fan module 410 is compressed at a small entrance of the discharge space 256, and then gradually expands along the inner wall of the body part 250a to be discharged through the outlet 256a of the discharge space 256. A discharge direction of the air discharged through the outlet 256a of the discharge space 256 may be formed in parallel to an inclined direction of the fan coupling portion 254.

Meanwhile, a lighting coupling part 255 may be formed in the upper casing 240. The lighting module 900 may be disposed in the lighting coupling part 255. The lighting coupling part 255 may penetrate the upper casing 240 to be open toward the cavity S1. In the embodiment, the lighting coupling part 255 may extend toward the guide duct 250. In other words, the lighting coupling part 255 may be formed by penetrating the guide duct 250 and the upper casing 240 sequentially.

The lighting coupling part 255 may be disposed at the guide part 250b of the guide duct 250. More specifically, the lighting coupling part 255 may be disposed on the imaginary extension line passing through the center portion of the cooling fan module 410. In other words, it may be understood that both of the cooling fan module 410 and the lighting module 900 is disposed on the center portion in the left-right width direction of the upper casing 240, and as a result, which are disposed on the center portion in the left-right width direction of the cooking appliance.

At this point, as shown in FIG. 1, the lighting coupling part 255 may be disposed obliquely to have a predetermined angle with respect to the imaginary extension line passing through the center portion of the cooling fan module 410. An angle between the imaginary extension line passing through the center portion of the cooling fan module 410 and an imaginary extension line extending in a longitudinal direction of the lighting coupling part 255 may be referred to as K3. As described above, when the lighting coupling part 255 is disposed obliquely, resistance generated when air discharged along the guide duct 250 passes through the left and right sides of the lighting module 900 can be reduced.

More specifically, a lighting guide 910 disposed in the lighting coupling part 255 may be disposed to be inclined in a rotation direction (clockwise direction based on FIG. 16) of the fan blade 417 based on the center line of the cooling fan module 410, the center line extending in the front-rear direction. This structure will be described again below.

As shown in FIG. 8, the outer casing 200 may include the side cover 270. The side cover 270 may consist of a pair of side covers. The pair of side covers 270 may cover left and right surfaces of the inner casing 100. Each of the side covers 270 may have an approximate flat plate structure.

Each of the side covers 270 may have the side through hole 272. The side through hole 272 may be formed by penetrating each side cover 270. External air may flow into the cooking appliance through the side through hole 272

The side through hole 272 may be formed in an upper portion of each side cover 270. The side through hole 272 may be formed in the upper portion of each side cover 270 constituting the electric chamber S2. Accordingly, the side through hole 272 may allow the external air to be supplied to the electric chamber S2.

The side through hole 272 may be formed at a position close to a front portion in the upper portion of each side cover 270. In other words, the side through hole 272 may be formed on a position close to the exhaust port 282 of the front frame 280. When the side through hole 272 is formed close to the front portion of each side cover 270, the cooling fan module 410 may be located far away from the passage through which air of the second air flow path AC2 is suctioned. However, when the side through hole 272 is formed close to a rear portion of each side cover 270, air flowing through the side through hole 272 may also be suctioned by the cooling fan module 410. Accordingly, a suctioning force for the cooling fan module 410 to suction the air of the second air flow path AC2 may be reduced.

In the embodiment, the side through hole 272 may be open toward the tank mounting part 243 of the upper casing 240. Then, the external air flowing inwards through the side through hole 272 may cool the water tank 450, and eventually, may lower the temperature of water stored in the water tank 450.

Furthermore, the side through hole 272 formed in either of the two side covers 270 may be open toward a main panel unit 700. The entire or a part of the side through hole 272 may be formed to face the main panel unit 700. The main panel unit 700 may emit a lot of heat with mounted elements, and the external air flowing inwards through the side through hole 272 may efficiently cool the main panel unit 700.

A side coupling part 273 may be provided on an edge of each side cover 270. The side coupling part 273 may couple each side cover 270 to other components such as the bottom casing 210, the upper casing 240, the front frame 280, or the like. The side coupling part 273 may be coupled to other components with a fastener such as a screw, or may be coupled to other components in a welding manner. In the embodiment, a lower side coupling part 273 of a plurality of side coupling parts 273 may be fixed to the door hinge H with the fastener.

A side spacer 275 may be formed in each side cover 270. The side spacer 275 may protrude outwards from each side cover 270. The side spacer 275 may space the side covers 270 and the side surface part 5 of the kitchen system 1 from each other. Accordingly, the external air may flow inwards through the side gap G2 (FIGS. 6 and 10) formed by the side spacer 275, and may be supplied to the electric chamber S2 through the side through hole 272. Therefore, the side gap G2 may be understood as a side intake port G2. The side intake port G2 may serve as an intake port of the cooking appliance together with the lower intake port G1.

Next, showing the front frame 280, as shown in FIG. 8, the front frame 280 may be shaped in an approximate square frame. The front frame 280 may be disposed at front of the inner casing 100. The front frame 280 may be open at a center portion thereof to prevent the cavity S1 from being covered. The front frame 280 may be understood as a front casing.

The front frame 280 may protrude upwards higher than the inner casing 100. The portion protruding upwards may form a part of the electric chamber S2. An upper portion of the front frame 280 may constitute the electric chamber S2 together with the rear cover 230, the upper casing 240, the upper cover 260, and the side covers 270.

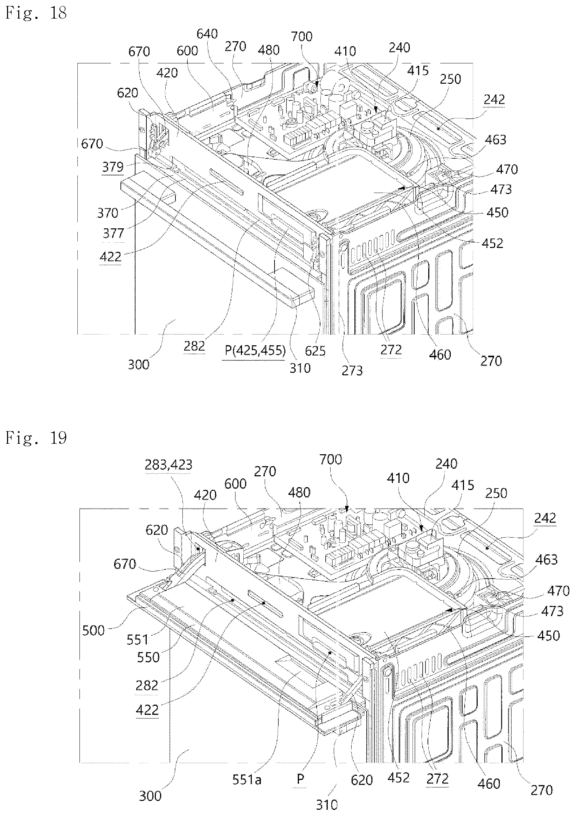

In the embodiment, opposite ends of the front frame 280 protrude upwards, but a portion between the opposite ends may be formed to have a relatively low height. In other words, an upper center portion of the front frame 280 may have a partially omitted structure, and may have a cut-out portion 280a (FIGS. 8 and 17). As described above, the cut-out portion 280a shaped to be depressed from the upper portion of the front frame 280 may be covered by the front housing 420 to be described below. As shown in FIG. 18, the front housing 420 is disposed at front of the front frame 280, so that the cut-out portion 280a of the front frame 280 is covered.

A pair of coupling posts 280b relatively protruding upwards may be provided at opposite ends of the cut-out portion 280a. Opposite ends of the front housing 420 may be respectively coupled to the coupling posts 280b. More specifically, a pair of panel fixing parts 421 provided at the opposite ends of the front housing 420 may be respectively coupled to the pair of coupling posts 280b.

The front frame 280 may be made of a metal material. The front frame 280 may be coated with glassiness ceramics. In other words, a surface of the front frame 280 may be formed in a vitreous enamel method. For reference, in FIG. 8, reference numeral 180 indicates a casing holder, and the casing holder 180 may serve to fix the inner casing 100 and the front frame 280 to a vitreous enamel device during vitreous enamel manufacturing of the inner casing 100 and the front frame 280. Furthermore, the casing holder 180 may serve as a connector when the inner casing 100 and the rear casing 220 are assembled to each other.

However, when the surface of the front frame 280 is formed in the vitreous enamel method, the front frame 280 may be twisted due to a hot manufacturing method. When the front frame 280 is twisted, an assembling error may occur in a portion where the front frame and other components are coupled to each other. Specifically, in the embodiment, a hinge module 600 that is an operated component, and an opening device 480 are disposed at the upper portion of the front frame 280, so it is necessary to suppress deformation of the front frame 280 as much as possible. In order to prevent this problem, in the embodiment, the cut-out portion 280a may be formed at the upper center portion of the front frame 280. The cut-out portion 280a omitted as described above may be free from deformation of the front frame 280.

As described above, the relatively protruding coupling posts 280b may be respectively provided at opposite sides of the cut-out portion 280a of the front frame 280. The coupling posts 280b may be respectively coupled to the hinge module 600. The hinge module 600 is connected to the panel unit 500 to load weight generated when the panel unit 500 is rotated. Accordingly, since the front frame 280 is made of a metal material, even when a large weight is loaded to the hinge module 600, the front frame 280 can firmly support the hinge module 600.

As another example, the front housing 420 may be formed to be integrated with the front frame 280, not a separate object. Furthermore, the cut-out portion 280a formed by omitting a part of the upper center portion of the front frame 280 is not provided, and the entire upper end of the front frame 280 may have the same height. A structure of the front housing 420 will be described below.

As shown in FIG. 17, the front frame 280 and components directly or indirectly connected to the front frame 280 are shown while being disassembled. At this point, indirect connection of components means that the components are not directly fixed to the front frame 280, but a part of each component passes through the front frame 280.

A frame of the front frame 280 may be composed of a frame body 281 of an approximate square frame shape. An edge of the frame body 281 may be directly fixed to the inner casing 100. A lower end of the front frame 280 may be fixed to the bottom casing 210 described above. Furthermore, opposite ends of the frame body 281 may be respectively coupled to the side covers 270. As described above, a plurality of components may be connected to each other through the frame body 281.

A frame through part 281a may be formed at a center portion of the frame body 281. The frame through part 281a may be a portion through which the cavity S1 is exposed. A size and a shape of the frame through part 281a may be variously deformed in response to the cavity S1.

The exhaust port 282 may be formed in the front frame 280. The exhaust port 282 may be formed by penetrating the upper portion of the front frame 280 in the front-rear direction. The exhaust port 282 may serve as an outlet through which air discharged through the guide duct 250 may be discharged outwards from the cooking appliance. The exhaust port 282 may extend long in the left-right direction at the upper portion of the front frame 280. The exhaust port 282 may be composed of one or a plurality of exhaust ports.

The exhaust port 282 may be open toward a gap between the door 300 and the panel unit 500. Accordingly, air discharged through the exhaust port 282 may be discharged forwards through the space between the door 300 and the panel unit 500. The exhaust port 282 is usually covered by the panel unit 500, so the exhaust port 282 does not hurt the aesthetics of the cooking appliance. Specifically, the panel unit 500 includes an air guide 590 to be described below and may make the exhaust port 282 more invisible from the user's field of view. This structure will be described again below.

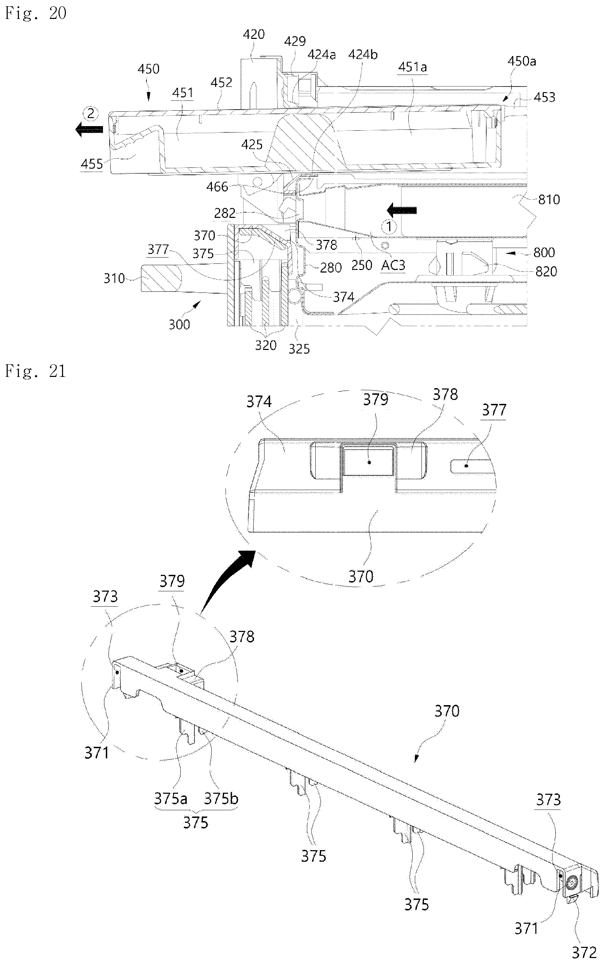

For reference, FIG. 20 shows a direction in which air is discharged forwards along the third air flow path AC3 formed in the guide duct 250 with arrow ①. The air may be moved forwards and be discharged through the exhaust port 282. At this point, an upper end of the door 300 may be disposed at a lower portion of the exhaust port 282, and the water tank 450 may be disposed at an upper portion of lower portion of the exhaust port 282.

As shown in FIG. 17, the front frame 280 and components directly or indirectly connected to the front frame 280 are shown while being disassembled. An upper hinge hole 283 may be formed in the upper portion of the front frame 280. The upper hinge hole 283 is a portion formed by penetrating each of the coupling post 280b of the front frame 280, and a driving arm 620 that is a part of the hinge module 600 may protrudes forwards through the upper hinge hole 283. In the embodiment, the upper hinge hole 283 is formed in each of the pair of coupling posts 280b. More specifically, the upper hinge hole 283 may be formed at a position higher than the exhaust port 282

A lower hinge hole 284 may be formed in a lower portion of the front frame 280. The lower hinge hole 284 is a portion formed by penetrating a part of the front frame 280, and a part of the door hinge H may protrude forwards through the lower hinge hole 284. In the embodiment, the lower hinge hole 284 is formed in each of opposite portions of a lower end of the front frame 280. The door hinge H connected to the lower end of the door 300 through the lower hinge hole 284 may allow the door 300 to be rotated in a pull-down method in which an upper end is rotated vertically on a lower end.

The lower end placing portion 285 may be provided at the lower portion of the front frame 280. The lower end placing portion 285 may be shaped to be bent from the lower portion of the front frame 280. Referring to FIG. 9, the lower end placing portion 285 may be placed on the upper portion of the bottom casing 210.

Referring to FIG. 17, each of the coupling posts 280b provided at the upper portion of the front frame 280 may have a frame coupling hole 286 and a frame hanging hole 287. The frame coupling hole 286 may be understood as a penetrated hole so as to be fixed with a fastener (not shown) when the front housing 420 is coupled to the front frame 280. The fastener may pass through both of a panel fixing hole 421a of the front housing 420 and the frame coupling hole 286 to assemble the front housing 420 and the front frame 280 to each other.

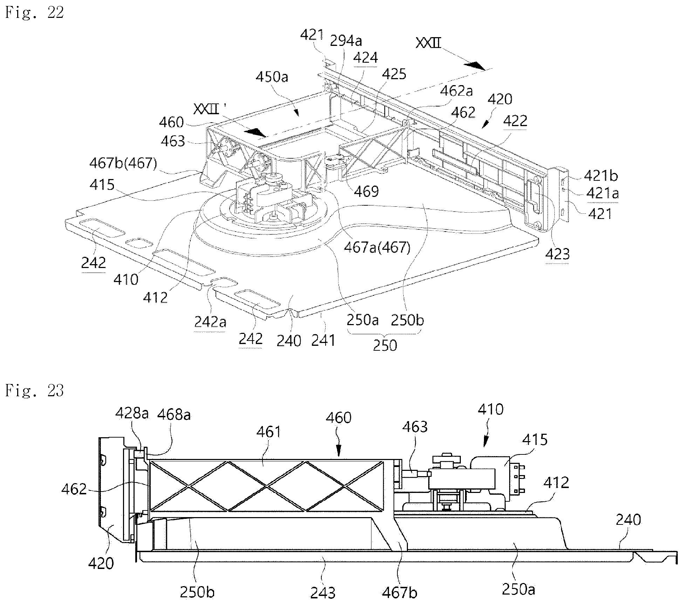

The frame hanging hole 287 may be a hole temporarily fixing the front housing 420 before the fastener is tightened in the frame coupling hole 286. A Hanging hook 421b (referring to FIG. 22) of the front housing 420 is inserted into the frame hanging hole 287, so that the front housing 420 is temporarily fixed to the front frame 280. In the embodiment, a pair of frame hanging holes 287 is disposed at opposite portions with the coupling hole 286 as the center.

A first hinge assembling hole 288 may be formed in the front frame 280. The first hinge assembling hole 288 serves to fix the hinge module 600 to the front frame 280. The first hinge assembling hole 288 may be formed at a surround portion of the upper hinge hole 283. In the embodiment, the first hinge assembling hole 288 is disposed at each of an upper portion and a lower portion of the upper hinge hole 283. On the other hand, the first hinge assembling hole 288 may be composed of one first hinge assembling hole.

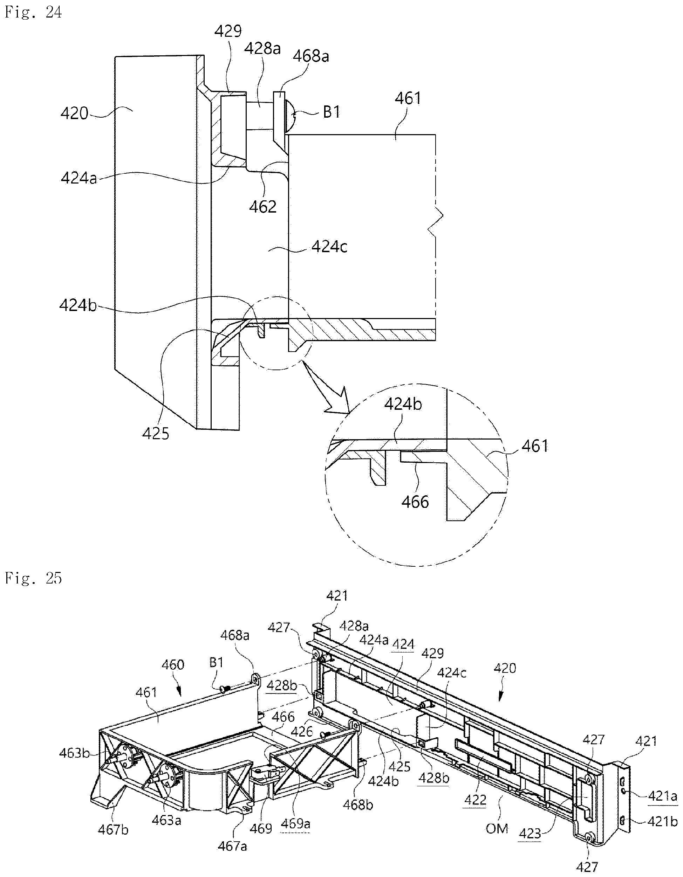

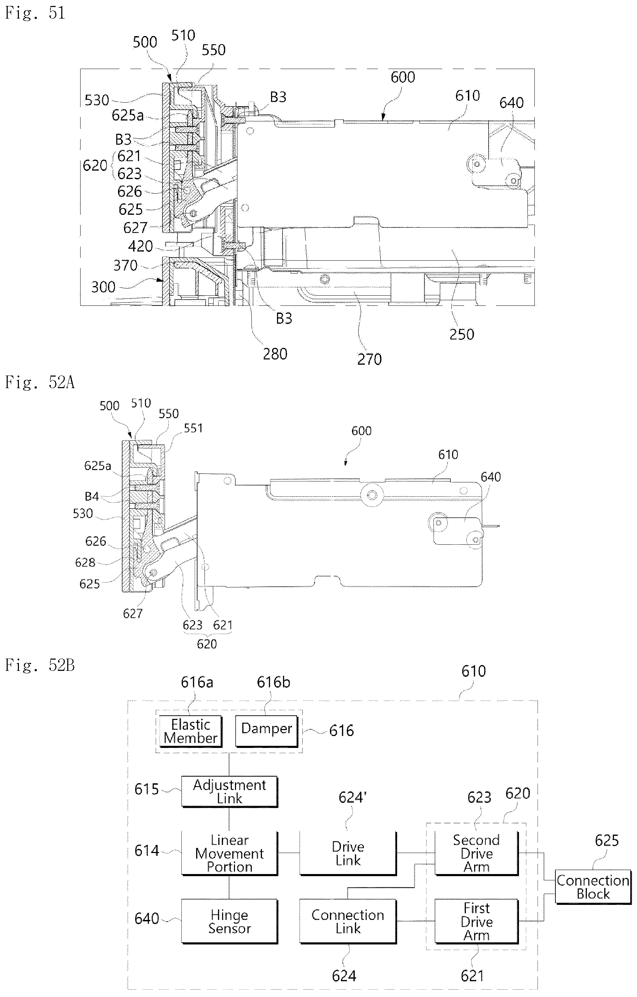

A second hinge assembling hole 427 (referring to FIG. 25) of the front housing 420 to be described below may be sequentially formed in front of the first hinge assembling hole 288. Therefore, a hinge fastener B3 (referring to FIG. 51) inserted into the second hinge assembling hole 427 may pass through the second hinge assembling hole 427 and the first hinge assembling hole 288, and may be tightened to a housing assembling hole 613 of the hinge module 600 disposed in rear of the front frame 280.

Therefore, the front housing 420, the front frame 280, and the hinge module 600 may be assembled to each other with one fastener. FIG. 51 is a view showing the hinge fastener B3 passing through the front housing 420 and the front frame 280 and then assembled to the hinge module 600.

The door 300 may be provided in front of the front frame 280. The door 300 may serve to open and close the cavity S1. The door hinge H is connected to a lower portion of the door 300, so that the door 300 may be rotated. In the embodiment, the door hinge H is composed of a pair of door hinges H, and the pair of the door hinges may be connected to opposite sides on a lower end of the door 300. The door 300 may open and close the cavity S1 in the pull-down method in which the upper end is vertically rotated on the lower end.

The door 300 may be shaped as a hexahedron entirely having a predetermined thickness. A sight window may be applied to at least a part of the door 300 so as to see the cavity S1. The sight window may necessarily be formed to withstand high temperature and high pressure, and may need functions such as waterproofing, heat dissipation, and the like.

Reference numeral 310 indicates a handle. The handle 310 may serve to open and close the door 300. The handle 310 may be disposed at an upper front surface of the door 300.

In the embodiment, the door 300 may include a plurality of boards 320. At this point, the plurality of boards 320 may be made of a transparent or translucent glass or plastic material. The plurality of boards 320 is stacked with each other at predetermined intervals to form one door 300. For example, the door 300 may include a front board disposed at the foremost side, a rear board disposed at the rearmost side, and one or a plurality of inner boards disposed between the front board and the rear board.

As shown in FIG. 20, the view shows the plurality of boards 320 constituting the door 300. The boards 320 may be stacked with each other forwards and rearwards. The front board disposed at the foremost side to form the front surface of the door 300 may be coated or applied with a film to have a different color to the boards 320. Reference numeral 325 is a door gasket attached to a rear surface of the door 300, and the door gasket 325 may serve to seal a gap between the door 300 and the front frame 280.

At this point, the front board 320 may have a larger area than areas of the other boards 320 disposed in rear of the front board. Therefore, the user in front of the cooking appliance can only observe the front board 320 of the door 300. The remaining boards 320 disposed in rear of the front board 320 and the door frame 370 may be hidden from the user's view. Then, the aesthetic of the door 300 may be enhanced.

Meanwhile, when the front board 320 has a relatively larger area, a step difference occurs between the front board and the remaining boards 320. The door frame 370 may be coupled to the step difference. In other words, the step difference portion may be filled with the door frame 370.

A frame of the door 300 may be formed by the door frame 370. The door frame 370 may form external appearance of upper, lower, and side surfaces of the door 300. The door frame 370 may be shaped as a hexahedron having open front and rear surfaces. In other words, the door frame 370 may be shaped as a kind of square frame. The door hinges H may be connected to the door frame 370.

As shown in FIG. 20, a spacer 375 provided at the door frame 370 may be inserted into the plurality of boards 320. The spacer 375 may maintain a distance between the plurality of the boards 320.

In looking the door frame 370 in detail with reference to FIG. 21, FIG. 21 shows the door frame 370 forming an upper surface of the door 300. The door frame 370 may be shaped as a bar extending long in one direction. The door frame 370 may be composed of a plurality of door frames, and the plurality of door frames may be assembled to each other. For example, door frames 370 forming side surfaces of the door 300 may be coupled to at opposite ends of the door frame 370 forming the upper surface of the door 300, as shown in FIG. 21, and a door frame 370 forming a lower surface of the door 300 may be coupled to the side door frames 370.

Frame coupling parts 371 may be respectively provided at the opposite ends of the door frame 370 to couple the upper door frame to other door frames 370 constituting the door frame 370. Each of the frame coupling parts 371 may have an approximate flat plate structure. Coupling hook parts 372 may be provided at lower ends of the frame coupling parts 371. The coupling hook parts 372 may be elastically fastened to other door frames 370. Elastic slits 373 are respectively open inside the coupling hook parts 372, thereby providing spaces in which the coupling hook parts 372 may be elastically deformed.

A plurality of spacers 375 may be provided in the door frame 370. As described above, the plurality of spacers 375 may be inserted into gaps between the plurality of boards 320 to maintain distances between the boards 320. Furthermore, the spacers 375 may help the door 300 and the door frame 370 to be stably coupled to each other.

The plurality of spacers 375 may include a first spacer 375a disposed in a front portion thereof and a second spacer 375b disposed in a rear portion thereof. Among the plurality of boards 320, the first spacer 375a may be fitted into a gap between the front board and the inner boards disposed in rear of the front board, and the second spacer 375b may be fitted into a gap between the rear board and the inner board disposed in front of the rear board.

An end of the first spacer 375a and an end of the second spacer 375b may form a step difference therebetween with different protruding lengths. This step difference may serve to correct a height difference formed as the plurality of the boards 320 is formed to have different areas. This state is shown in FIG. 20.

Referring to FIGS. 18 and 21, a door exhaust port 377 may be provided in the door frame 370. The door exhaust port 377 may form a passage that allows the inside space of the door 300 to open to the external space of the door 300 may be formed on the upper end of the door 300. The door exhaust port 377 may be formed by penetrating the upper end of the door frame 370 in the up-down direction. Air flowing upwards while cooling the door 300 inside the door 300 may be discharged upwards through the door exhaust port 377 and then be discharged forwards. For reference, the air cooling the door 300 may flow between the plurality of boards 320 constituting the door 300.

Looking FIG. 21 again, the door frame 370 may include a locking body 378. The locking body 378 may operate the door locking device 800 so as to maintain a closed state of the door 300. The locking body 378 may protrude rearwards from the door frame 370. The locking body 378 may be shaped as an approximate hexahedron shape. The locking body 378 may be disposed to be biased to either of the opposite of the door frame 370. In the embodiment, the locking body 378 is formed in the door frame 370, but as another example, the locking body 378 may directly be provided on the door 300, not on the door frame 370.

The locking body 378 may be disposed on an inclined surface 374 formed on an upper portion of the door frame 370. The upper portion of the door frame 370 is formed to be inclined downwards toward the casing 100, 200, and the inclined portion may form the inclined surface 374. The locking body 378 is disposed at the inclined surface 374. Furthermore, an upper entrance of the door exhaust port 377 may be open.

The inclined surface 374 may form a kind of recessed space between the door 300 and the front frame 280. The locking body 378 may protrudes upwards from the recessed space, and may fill the recessed space. When a kind of recessed space is formed between the door 300 and the front frame 280, ensures a space in which the latch 850 is rotated, so that the latch 850 may be prevented from being interfered to a rear surface of the door 300 when the latch 850 is rotated.

A fixing hole 379 with an open upper portion may be formed in the locking body 378. The latch 850 of the door locking device 800 which will be described below may be inserted into the fixing hole 379. When the latch 850 is inserted into the fixing hole 379, the latch 850 catches the door 300 to prevent the door 300 from being opened arbitrarily.

An entrance of the fixing hole 379 may be located higher than an upper end of a pushing surface 378a. Accordingly, a rotation angle at which the latch 850 is caught by the fixing hole 379 may be reduced. Furthermore, a state in which the latch 850 is caught by the relatively protruding entrance of the fixing hole 379 may be stably maintained.

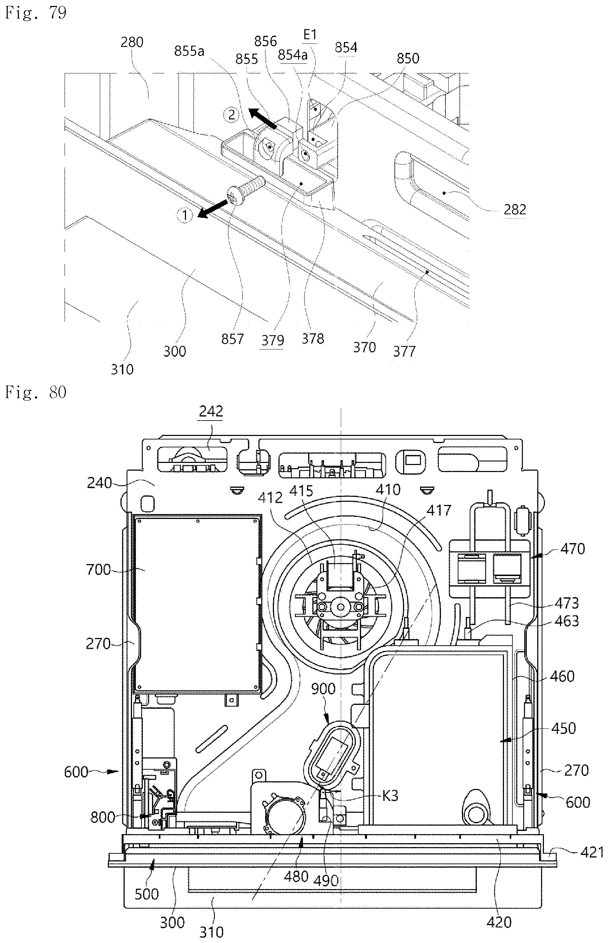

As shown in an enlarged view of FIG. 21, the fixing hole 379 may extend long leftwards and rightwards. A left-right length of the fixing hole 379 may be larger than a left-right length of the latch 850. Accordingly, a locking head 855 coupled to an end of the latch 850 may be separated from the latch 850 and then may be moved leftwards rightwards along the fixing hole 379. On the other hand, the fixing hole 379 is a portion to which the latch 850 is caught, and at the same time, may be a passage through which the locking head 855 is moved after being separated. FIG. 79 is a view showing the locking head 855 that is separated from the latch 850 and then is moved leftwards along the fixing hole 379.

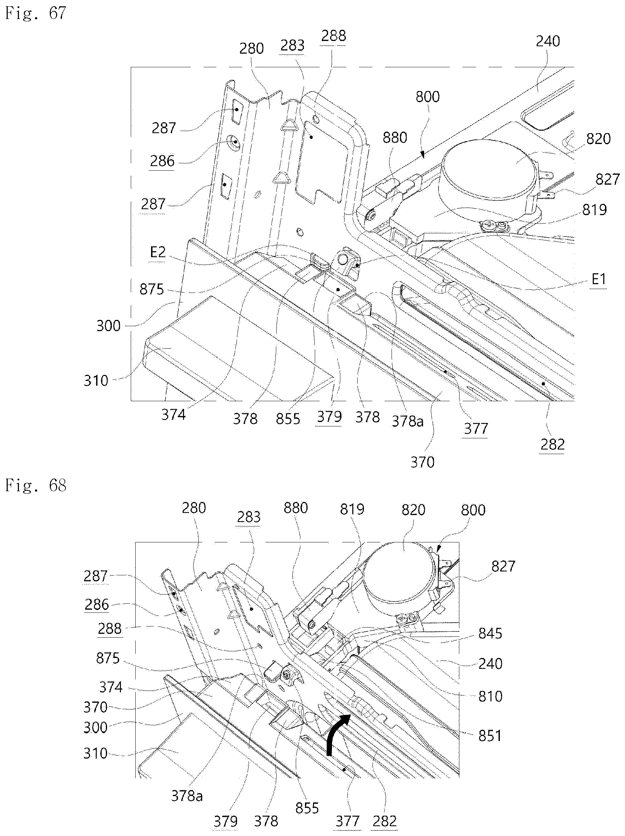

Referring to FIG. 68, the fixing hole 379 may be open upwards on a center portion of the locking body 378, and the planar pushing surface 378a may be formed on a left or right side of the fixing hole 379 in the locking body 378. The pushing surface 378a interferes with a closing button 870, and the pushing surface may be a surface pushing the closing button 870. At this point, the entrance of the fixing hole 379 may have the same height as an upper surface of the door frame 370. Accordingly, the door 300 may provide the unified aesthetic for the user.

In the embodiment, the pushing surface 378a may be formed symmetrically at the opposite sides with the fixing hole 379 as the center. Based on FIG. 68, a left pushing surface 378a actually pushes the closing button 870, and as such, when the pushing surface 378a has a symmetric structure, the aesthetic may be increased, and the strength of the locking body 378 may be prevented from being weakened by the fixing hole 379.

When the door 300 is closed, the pushing surface 378a may form a flat surface in parallel to a front surface of the casing 100, 200, more specifically, to a front surface of the front frame 280. Then, as the front surface of the front frame 280 and the pushing surface 378a are in close contact with each other, the unified aesthetic may be provided.

Next, in looking the cooling fan module 410, the cooling fan module 410 may suction air of the second air flow path AC2 and discharge the air into the third air flow path AC3 formed in the guide duct 250. Furthermore, the cooling fan module 410 may suction air flowing through the air in-outflow portion 265 of the upper cover 260 and discharge the air into the third air flow path AC3 formed in the guide duct 250. In other words, after the cooling fan module 410 suctions external air through the plurality of passages, the cooling fan module 410 may discharge the air forwards along the guide duct 250.

The cooling fan module 410 may be disposed at the guide duct 250. More specifically, as shown in FIG. 15, the fan body 412 of the cooling fan module 410 may be fixed to the fan coupling portion 254 of the guide duct 250. The fan body 412 may be shaped as an approximate circular frame. The fan body 412 has a plurality of holes, thereby suctioning air flowing from the second air flow path AC2 into the electric chamber S2.

The cooling fan module 410 may include a fan motor 415. The fan motor 415 may be supplied with power from the main panel unit 700 to generate a rotation force. The fan blade 417 may be connected to the fan motor 415. The fan blade 417 may suction and discharge air through rotation. The fan blade 417 may have a centrifugal fan shape such as a blower fan or a sirocco fan that is a multi-blade fan. This is just one example, and the fan blade 417 may have various types of fan structure that can suction and discharge air.

Next, the front housing 420 disposed in front of the front frame 280 will be described. The front housing 420 may be disposed is in front of the upper portion of the front frame 280. Furthermore, the front housing 420 may be located between a rear surface of the panel unit 500 and the front frame 280 when the panel unit 500 is closed. The front housing 420 can enhance the aesthetic by covering the upper portion of the front frame 280, and a cam protruding port 422, i.e., an entrance through which a cam part 485 of the opening device 480 to be described below protrudes, and the entrance 424 of the tank chamber 450a through which the water tank 450 is drawn in/out may be respectively formed in the front housing.

The front housing 420 may be made of a synthetic resin material. The front housing 420 may be easily implemented with a shape more complex than a front housing made of a metal material. The complex shape is implemented in the front housing 420, and the front housing 420 is assembled to the front frame 280, thereby forming a front surface of the cooking appliance. Unlike the embodiment, the front housing 420 may be integrally formed in the upper portion of the front frame 280.

As shown in FIG. 17, the front housing 420 may have a thin flat plate structure. The front housing 420 may be disposed is in front of the upper portion of the front frame 280. More specifically, the front housing 420 may cover the cut-out portion 280a of the front frame 280. As shown in FIG. 18, the view shows the upper portion of the front frame 280 covered with the front housing 420.

Referring to FIGS. 22 to 27, a structure of the front housing 420 will be described in detail. The panel fixing parts 421 may be provided at opposite ends of the front housing 420. The panel fixing parts 421 may constitute partially the opposite ends of the front housing 420, and may be respectively coupled to the opposite ends of the upper portion of the front frame 280.

At this point, the panel fixing parts 421 may protrude further forwards than the center portion of the front housing 420. The panel fixing parts 421 may have structures in which step differences are formed at the opposite ends of the front housing 420, so that the panel fixing parts 421 may protrude forwards. A gap between the pair of panel fixing parts 421 protruding as described above may be shaped to be recessed relatively rearwards.

When the panel unit 500 is located in a first position, a main housing 510 of the panel unit 500 may be disposed in the relatively recessed portion between the pair of panel fixing parts 421. Opposite ends of a control panel 530 constituting a front surface of the panel unit 500 may be disposed in front of the pair of panel fixing parts 421, respectively. Then, as shown in FIG. 2, when the panel unit 500 is closed, only the control panel 530 of the panel unit 500 may be exposed to an upper front surface of the cooking appliance. At the same time, the main housing 510 of the panel unit 500 may be covered with the upper surface part 4 of the cooking appliance between the pair of panel fixing parts 421 in rear of the main housing 510. A close contact structure between the panel unit 500 and the front housing 420 may provide the unified aesthetic to the cooking appliance.

To this end, the panel fixing parts 421 may have the panel fixing hole 421a so as to fix the panel fixing parts 421 to the front frame 280. The panel fixing hole 421a may correspond to the coupling hole 286 of the front frame 280. When a fastener passes through the panel fixing hole 421a and the coupling hole 286 of the front frame 280 in order to be tightened, each panel fixing part 421 may be fixed to the front frame 280.

As shown in FIG. 22, the hanging hook 421b may be provided at each of the panel fixing parts 421 to be close to each panel fixing hole 421a. The hanging hook 421b may protrude from a rear surface of each of the panel fixing parts 421. Each of the hanging hooks 421b may be caught by the frame hanging hole 287 of the front frame 280. When the hanging hook 421b is caught by the frame hanging hole 287, even before the fastener is tightened, the front housing 420 remains temporarily coupled to the front frame 280. In this state, when the fastener is fastened to both of the panel fixing hole 421a and the coupling hole 286, the front housing 420 may be completely assembled to the front frame 280. In the embodiment, the hanging hook 421b is respectively provided at an upper side and a lower side of the panel fixing hole 421a, and on the other hand, the hanging hook 421b may be composed on one hanging hook or may be omitted.

The cam protruding port 422 may penetrate the front housing 420. The cam protruding port 422 may have a shape in which a part of the center portion of the front housing 420 is penetrated in the front-rear direction. The cam part 485 of the opening device 480 protrudes forwards through the cam protruding port 422, or may be inserted rearwards again. The cam protruding port 422 may be formed with a long transverse width to correspond to a shape of the cam part 485.

Since the entrance 424 of the water tank 450 is formed in the front housing 420, the cam protruding port 422 may be disposed to be biased to either side of the center portion not to be interfere with the entrance 424 of the water tank 450. In the embodiment, the cam protruding port 422 may be formed at a position biased leftwards of the center portion of the front housing 420.

A hinge through hole 423 is formed in the front housing 420. The hinge through hole 423 may be disposed at a portion of the front housing 420 closer to the center portion than the panel fixing parts 421 of the front housing 420. The hinge through hole 423 may be connected to the upper hinge hole 283 of the front frame 280 to form a continued passage. A part of the hinge module 600, more accurately, a driving arm 620 of the hinge module 600 may protrude forwards through the hinge through hole 423. The driving arm 620 may protrude forwards while passing through the upper hinge hole 283 of the front frame 280, and the hinge through hole 423 in order, and the protruding driving arm 620 may be connected to the panel unit 500.

The entrance 424 of the water tank 450 may be formed in the front housing 420. At this point, the entrance 424 of the water tank 450 means an entrance through which the water tank 450 is removed out of the cooking appliance, or may be inserted into the cooking appliance. The entrance 424 of the water tank 450 may be an entrance of the tank chamber 450a to be described below. Hereinbelow, the entrance 424 of the water tank 450 may be referred to as the tank entrance 424.

The tank entrance 424 may extend longer in the left-right direction than the top-down direction. The tank entrance 424 may be formed to correspond to a shape of the water tank 450. Therefore, the tank entrance 424 does not have to be limited as shown in the drawings.

Referring to FIGS. 24 and 25, the tank entrance 424 may include an entering guide 424a, 424b, 424c. The entering guide 424a, 424b, 424c may guide an entering direction of the water tank 450. Furthermore, the entering guide 424a, 424b, 424c may prevent the water tank 450 from leaning to either direction during an entering process thereof.

The entering guide 424a, 424b, 424c may include an upper guide 424a, a lower guide 424b, and side guides 424c. At this point, the upper guide 424a and the lower guide 424b may extend in parallel directions.

More specifically, the upper guide 424a and the lower guide 424b may extend in a direction in parallel to removal and insertion directions of the water tank 450. For reference, as shown in FIG. 20, the view shows the upper guide 424a and the lower guide 424b extending in parallel to an upper surface and a lower surface of the water tank 450, respectively. Therefore, the water tank 450 may be ejected toward the front side (direction of arrow ②) without twisting in any one direction.

As shown in FIG. 20, the upper guide 424a and the lower guide 424b may be disposed to surround edges of the tank entrance 424. Therefore, the upper guide 424a and the lower guide 424b may be understood as a part of the tank entrance 424. The upper guide 424a may extend along an upper edge of the tank entrance 424, and the lower guide 424b may extend along a lower edge of the tank entrance 424.

The upper guide 424a and the lower guide 424b may extend in parallel to each other. The upper guide 424a may support the upper surface of the water tank 450, and the lower guide 424b may support the lower surface of the water tank 450. At this point, the upper guide 424a and the lower guide 424b may be in surface-contact with the surfaces of the water tank 450, respectively. Therefore, the water tank 450 may be precisely moved forwards and rearwards without leaning toward one side.

The upper guide 424a may have a thin flat plate structure. The upper guide 424a may extend along an upper end of the tank entrance 424. The upper guide 424a may extend rearwards from the upper end of the tank entrance 424.

As shown in FIG. 24, an end of the upper guide 424a may be spaced apart from a front surface 462 of the tank housing 460 to be described below. As described above, when the end of the upper guide 424a is spaced apart from the front surface 462 of the tank housing 460, the spacing may serve as a clearance that may correct deformation to some extent even when the tank housing 460 or the front housing 420 is deformed.

The lower guide 424b may be provided to face the upper guide 424a, and may extend in parallel to the upper guide 424a. The lower guide 424b may be a thin plate shape extending along a lower end of the tank entrance 424. In the embodiment, like the upper guide 424a, the lower guide 424b may also extend rearwards from a lower portion of the tank entrance 424.

At this point, the lower guide 424b may further protrude toward the front surface 462 of the tank housing 460 than the upper guide 424a. As shown in FIG. 24, one end of the lower guide 424b is in contact with the front surface 462 of the tank housing 460, and one end of the upper guide 424a is spaced forwards from the front surface 462 of the tank housing 460. Since the water tank 450 is configured such that a main surface is mainly supported by the front housing 420 due to the weight thereof, the length of the lower guide 424b is increased and stable insertion and removal of the water tank may be possible.

Furthermore, the side guides 424c may be provided between the upper guide 424a and the lower guide 424b. The side guides 424c may have thin plate structures protruding rearwards of the front housing 420. The side guides 424c may constitute side walls of the tank entrance 424.

As shown in FIG. 24, the view shows one end of each of the side guides 424c being in contact with the front surface 462 of the tank housing 460. In other words, like the lower guide 424b, one end of each of the side guides 424c may also extend toward the front surface 462 of the tank housing 460.

In the embodiment, the lower guide 424b and the side guides 424c may protrude by the same lengths toward the front surface 462 of the tank housing 460. Accordingly, each of the lower guide 424b and the side guides 424c may be in surface-contact with the front surface 462 of the tank housing 460. Therefore, the lower portion and the side portions to which the weight is mainly applied during the insertion and removal process of the water tank 450 may be supported by the lower guide 424b and the side guides 424c. Furthermore, when the tank entrance 424 is exposed outwards, the lower portion and the side portions of the entrance that are primarily observed with the user's naked eyes are in surface-contact with the front surface 462 of the tank housing 460, so that there is no deterioration of the aesthetic in a connection part of a component.

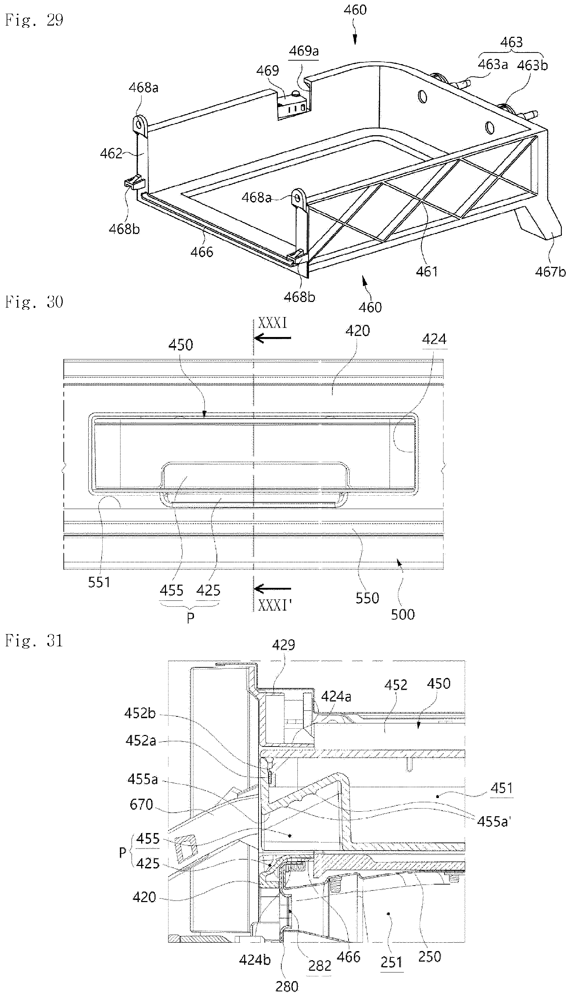

As shown in FIG. 31, an end of the lower guide 424b may be in close contact with a step difference rib 466 of the tank housing 460. More specifically, a lower surface of an end of the lower guide 424b may be stacked on an upper surface of the step difference rib 466. Therefore, a surface contact section may be formed between the lower guide 424b and the step difference rib 466.

The surface contact section may prevent leaking occurring through a coupling portion between the front housing 420 and the tank housing 460. For example, when leaking occurs in the water tank 450, water may collect on the bottom of the tank housing 460. The water collected in the tank housing 460 may be moved to the coupling portion between the front housing 420 and the tank housing 460, and the surface contact section between the lower guide 424b and the step difference rib 466 of the tank housing 460 may prevent leaking of the water.

The tank entrance 424 may include a first pocket part 425. The first pocket part 425 may be formed in a direction that expands the width of the tank entrance 424. When the user grips the water tank 450 through the tank entrance 424, the first pocket part 425 may allow the user to easily grip the water tank 450.

The first pocket part 425 may be shaped as a shape inclined downwards toward the front side of the front housing 420. In the embodiment, the first pocket part 425 is formed in a direction in which a vertical height of the tank entrance 424 is increased as the first pocket part goes forwards. Referring to FIG. 31 that is a sectional view, the first pocket part 425 may have an inclined surface or a curved surface such that the first pocket part is lowered in height as the first pocket part goes forwards (left side based on FIG. 31). Therefore, the user can more easily access the water tank 450 through the wide entrance. Furthermore, the first pocket part 425 may allow the user to recognize intuitively a gripping location of the water tank 450.

In the embodiment, the water tank 450 may include a second pocket part 455 at the same position as the first pocket part 425 of the front housing 420. Therefore, the first pocket part 425 and the second pocket part 455 may be connected to each other to form one pocket P. As shown in FIGS. 30 and 31, the first pocket part 425 and the second pocket part 455 may be formed in recessed shapes at corresponding positions. The user's finger may be inserted into the pocket P. A shape of the second pocket part 455 will be described below.

As shown in FIG. 25, the second hinge assembling hole 427 may be formed by penetrating the front housing 420. The second hinge assembling hole 427 may be formed in a position adjacent to the hinge through hole 423. The hinge fastener B3 inserted into the second hinge assembling hole 427 passes through the first hinge assembling hole 288 of the front frame 280 located in rear of the second hinge assembling hole 427, and then may be tightened to the housing assembling hole 613 of the hinge module 600 disposed in rear of the front frame 280. Therefore, the front housing 420, the front frame 280, and the hinge module 600 may be assembled to each other with one fastener. FIG. 51 is a view showing the hinge fastener B3 passing through the front housing 420 and the front frame 280 and then assembled to the hinge module 600.

The front housing 420 may include a fastening boss 428a. The fastening boss 428a may be protrude from the front housing 420 toward the tank housing 460. The fastening boss 428a may be engaged with a guide mounting piece 468a of the tank housing 460 to be fastened to each other with a fastener B1. FIG. 24 is a view showing the fastening boss 428a and the guide mounting piece 468a fastened to each other with the fastener B1.

As shown in FIG. 25, the fastening boss 428a may be disposed adjacent to the tank entrance 424. In the embodiment, the fastening boss 428a may be disposed at the opposite sides of the upper portion of the tank entrance 424, respectively. As another example, the fastening boss 428a may be disposed at the lower portion of the tank entrance 424, or may be disposed both of the upper and lower portions thereof.

A housing fastening groove 428b may be formed in the front housing 420. The housing fastening groove 428b may be formed by being recessed on a rear surface of the front housing 420 or penetrating the front housing 420. A fastening protrusion 468b of the tank housing 460 to be described below may be inserted into the housing fastening groove 428b. The housing fastening groove 428b and the fastening protrusion 468b may allow the front housing 420 and the tank housing 460 to be coupled to each other, together with the fastening boss 428a and the guide mounting piece 468a.

The housing fastening groove 428b may be disposed adjacent to the tank entrance 424. In the embodiment, housing fastening grooves 428b may be disposed at opposite sides of the lower portion of the tank entrance 424. More specifically, a pair of fastening bosses 428a is disposed at the upper portion of the tank entrance 424, and a pair of housing fastening grooves 428b is disposed at the lower portion thereof. As another example, the housing fastening grooves 428b may be disposed at the upper portion of the tank entrance 424, or may be disposed both of the upper and lower portions thereof. Furthermore, the housing fastening grooves 428b may be provided at the tank housing 460, and the fastening protrusion 468b may be provided at the front housing 420.

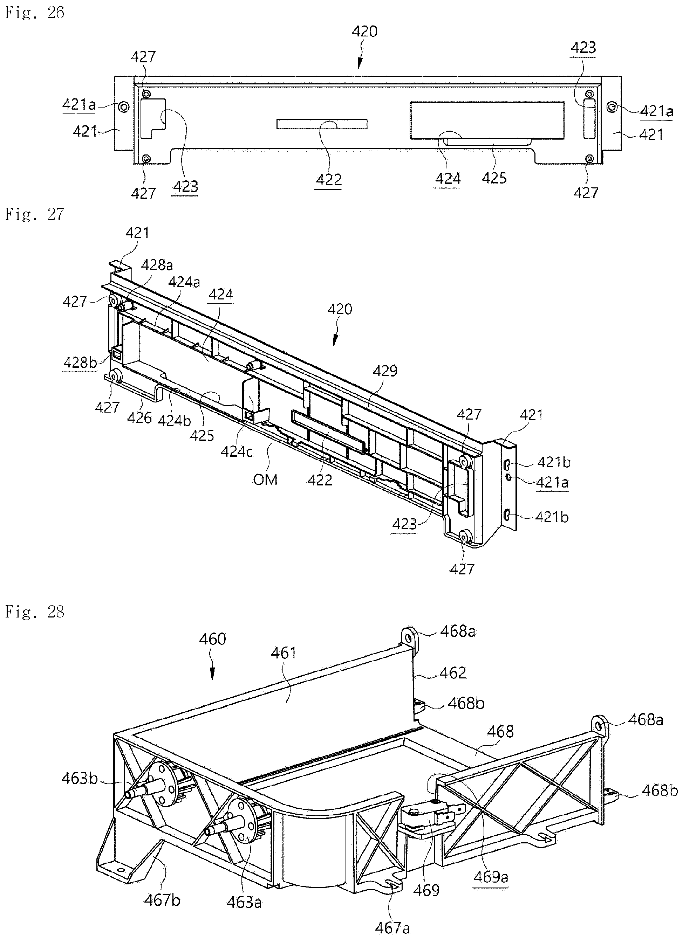

As shown in FIG. 27, the front housing 420 may include a panel rib 429. The panel rib 429 may be disposed on an edge of a rear surface of the front housing 420. The panel rib 429 may protrude rearwards from the rear surface of the front housing 420. The panel rib 429 may cover the rear side of the front housing 420, and may reinforce the strength of the front housing 420.

In the embodiment, the panel rib 429 may extend in the left-right direction on an upper portion of the rear surface of the front housing 420. The panel rib 429 may be disposed higher than the tank entrance 424 on the rear surface of the front housing 420.

The front housing 420 may include an avoidance part OM at the lower portion thereof. The avoidance part OM may be shaped such that a part of the lower portion of the front housing 420 is omitted. The avoidance part OM is formed to prevent the lower portion of the front housing 420 from interrupting discharge of air. The avoidance part OM may be shaped to be depressed upwards from the lower portion of the front housing 420. More specifically, the avoidance part OM may be formed between lower fastening bodies 426 protruding on lower portions of left and right ends of the front housing 420.

Next, the water tank 450 constituting the steam device will be described. Referring to FIGS. 17 to 19, the water tank 450 may be stored in the electric chamber S2. The water tank 450 may supply water for a steam function to a heater while being stored in the electric chamber S2. When the water tank 450 is removed from the electric chamber S2, the user can fill water into the water tank 450 or drain water in the water tank 450. At this point, the steam function is not necessarily limited to cooking of an object to be cooked. For example, the steam device may be used to clean the inside space of the cooking chamber.

In the embodiment, the water tank 450 may be disposed in rear of the panel unit 500. Accordingly, when the panel unit 500 is closed, the water tank 450 is prevented from being exposed outwards. As shown in FIG. 19, when the panel unit 500 is opened, only then the water tank 450 may be exposed outwards.

In looking a structure of the water tank 450, the water tank 450 may have an approximately hexahedral structure. The water tank 450 includes a water storage space 451 (referring to FIG. 31) that can store water therein. The water stored in the water tank 450 is heated by the heater of the steam device to be sprayed into the cavity S1 in a steam form. Furthermore, when a cleaning function is performed to remove foreign substances such as limescale from the internal space of a pipe of the cooking appliance, water that has completed the cleaning function may flow into the water tank 450.

A tank cover 452 may be provided at an upper portion of the water tank 450. The tank cover 452 may cover an upper portion of the water storage space 451. In the embodiment, the tank cover 452 is configured as a separate object from the water tank 450. The tank cover 452 may include a separate tank lid 452'. When the tank lid 452' is removed, the user can fill water into the water storage space 451, or drain water in the water storage space 451. As another example, the tank cover 452 may be omitted, or may be integrally formed with the water tank 450.

The water tank 450 may include a tank connecting tube 453. The tank connecting tube 453 may serve as a connecting tube to move water into and out of the water storage space 451. The tank connecting tube 453 may protrude from the water tank 450 outwards. The protruding portion may be engaged with a housing connecting tube 463 of the tank housing 460 to be described below. On the other hand, the housing connecting tube 463 of the tank housing 460 protrudes toward the water tank 450, and the tank connecting tube 453 may be provided at the water tank 450 with a recessed shape to allow the housing connecting tube 463 to be inserted thereinto.

In the embodiment, the tank connecting tube 453 includes a pair of tank connecting tubes 453. One of the pair of tank connecting tubes 453 may be used to supply water to the external space, and another one may be used for external water to be supplied. However, when the cooking appliance does not have the cleaning function, the tank connecting tube 453 may be composed of one tank connecting tube 453.

Referring to FIG. 31, the tank cover 452 may include a cover sealing part 452a. The cover sealing part 452a may prevent leaking from occurring through a coupling portion between the main body of the water tank 450 and the tank cover 452. The cover sealing part 452a may be disposed sequentially by enclosing an edge of the tank cover 452. Reference numeral 452b is a sealing guide, and is provided to fix the cover sealing part 452a.

At this point, at a front surface of the front housing 420 and a front surface of the water tank 450 may form a continued flat surface. In other words, the front surface of the front housing 420 and the front surface of the water tank 450 may form the same level. Then, the cooking appliance may provide the unified aesthetic to the user.

The water tank 450 may include the second pocket part 455. The second pocket part 455 may be formed at a portion where the front surface of the front housing 420 and the front surface of the water tank 450 are connected to each other. The second pocket part 455 may have a shape recessed from the front surface of the water tank 450. The second pocket part 455 may provide a gripping space in which the user can eject the water tank 450 or insert the water tank thereinto.

The second pocket part 455 may be formed at a lower portion of the front surface of the water tank 450. The second pocket part 455 may be formed to be gradually higher toward the center portion of the water tank 450. In other words, the second pocket part 455 may be formed to be gradually increased in a vertical width rearwards from the front surface of the water tank 450. As shown in FIG. 31, the second pocket part 455 is formed in a direction to the center portion of the water tank 450, so that the internal space of the second pocket part 455 expands. Accordingly, the user can put a finger into the second pocket part 455 to be easily grip the water tank 450.

Slip prevention ribs 455a' may be provided at a surface 455a of the second pocket part 455. The slip prevention ribs 455a' may protrude from the surface 455a of the second pocket part 455. The slip prevention ribs 455a' may serve to increase a frictional force between the user's finger and the surface 455a of the second pocket part 455. A plurality of slip prevention ribs 455a' may be disposed at constant intervals in a front to rear direction of the second pocket part 455.

Meanwhile, the second pocket part 455 may be formed at the same position as the first pocket part 425 of the front housing 420. Accordingly, the first pocket part 425 and the second pocket part 455 may form one connected pocket P. As shown in FIGS. 30 and 31, the first pocket part 425 and the second pocket part 455 may be formed in recessed shapes at corresponding positions. The user can easily put the finger into the pocket P through an entrance of the pocket P formed by the first pocket part 425 and the second pocket part 455.

Specifically, as shown in FIG. 31, the first pocket part 425 may extend to be upward-inclined rearwards, and the second pocket part 455 may also extend to be upward-inclined rearwards. Accordingly, the user's finger can be naturally guided upwards, and may grip the innermost portion of the pocket P at the same time.

Furthermore, the pocket P may be disposed above the exhaust port 282. As shown in FIG. 31, the exhaust port 282 may be narrowed in width toward the front side. Accordingly, when the pocket P is disposed above the exhaust port 282, a vertical height of an entrance portion of the pocket P may be greatly secured.

Although not shown in the drawings, the water tank 450 may be omitted. If the water tank 450 is omitted, other parts may be mounted in the tank chamber 450a in place of the water tank 450.

Next, the tank housing 460 storing the water tank 450 therein will be described. Referring to FIGS. 28 to 29, the tank housing 460 may be formed with a frame as a housing body 461 of an approximate hexahedron shape. The housing body 461 may provide the tank chamber 450a allow the water tank 450 to be stored in the cooking appliance. To this end, the housing body 461 is open forwards, and the tank chamber 450a suitable for a shape of the water tank 450 may be formed in the housing body 461.

The tank chamber 450a may have an approximate hexahedron shape. The tank chamber 450a may be respectively open forwards and upwards. In other words, the tank housing 460 may have a structure omitted at a front surface and an upper surface and open forwards and upwards. The open front surface of the tank chamber 450a serves as an opening, so that the water tank 450 may be drawn in/out through the opening.

A bottom surface of the tank chamber 450a may have a depressed bottom portion depressed downwards. The depressed bottom portion may be formed at a center portion of the bottom surface of the tank chamber 450a. The depressed bottom portion may reduce a contact area between the tank housing 460 and the water tank 450 to reduce friction. Furthermore, even when leaking occurs in the water tank 450 and the tank housing 460, the depressed bottom portion may store a predetermined amount of water. Water stored in the depressed bottom portion may be naturally vaporized by heat in the electric chamber.

In the embodiment, the opening formed in the front side of the tank chamber 450a may form a passage continued to the tank entrance 424. Therefore, the water tank 450 may be inserted into and removed from the tank chamber 450a through the opening of the tank chamber 450a, and the continued passage formed by the tank entrance 424 of the front housing 420.

Meanwhile, the upper surface of the tank housing 460 is omitted, but the upper cover 260 shields the upper portion of the tank housing 460, so it is fine to omit the upper surface of the tank housing. Specifically, when the upper surface of the tank housing 460 is omitted, in the insertion and removal process of the water tank 450, a contact area between a surface of the water tank 450 and the tank housing 460 is reduced and friction may be reduced.

As another example, the tank housing 460 may have a structure in which the upper surface is provided and the front surface of the tank housing 460 is open. Furthermore, as another example, the tank housing 460 is omitted, and the water tank 450 may be directly stored into the tank chamber 450a provided in the electric chamber S2.

The front surface 462 of the tank housing 460 may be disposed to face the rear surface of the front housing 420. The front surface 462 of the tank housing 460 may face left and right ends of the tank entrance 424 formed in the front housing 420. As shown in FIG. 24, the front surface 462 of the tank housing 460 may be in close contact with the side guides 424c of the front housing 420.

The housing connecting tube 463 may be provided at a rear surface of the tank housing 460. The housing connecting tube 463 may be engaged with the tank connecting tube 453 of the water tank 450 to form a continued inner flow path. The housing connecting tube 463 may supply water in the water storage space 451 of the water tank 450 towards the heater. Furthermore, the housing connecting tube 463 may discharge water, which remains in the cooking appliance after performing the cleaning function, into the water storage space 451. For example, the housing connecting tube 463 may include a first housing connecting tube 463a provided to supply water into the cooking appliance, and a second housing connecting tube 463b provided to drain remaining water in the tube of the cooking appliance into the water storage space 451.

In the embodiment, the housing connecting tube 463 may protrude rearwards. The protruding housing connecting tube 463 may be connected to a pump 470 (referring to FIG. 18). The pump 470 may supply water in the water storage space 451 towards the heater through the housing connecting tube 463 and the tank connecting tube 453. The pump 470 is composed of two pumps, and one of the two pumps may supply the water in the water storage space 451 to the heater, and another one may discharge the remaining water in the tube of the cooking appliance into the water storage space 451.

At this point, the tank housing 460 may be spaced apart from the bottom surface of the electric chamber S2. More specifically, a lower surface of the housing body 461 of the tank housing 460 may be spaced apart from the bottom surface of the electric chamber S2. The bottom surface of the electric chamber S2 is in contact with a ceiling of the cavity S1, so that temperature in the cavity S1 may be transmitted to the bottom surface of the electric chamber S2. In the embodiment, the tank housing 460 is spaced upwards from the bottom surface of the electric chamber S2, so that it is possible to prevent the temperature in the cavity S1 from being directly transmitted to both of the tank housing 460 and the water tank 450.

A height of the tank chamber 450a may be smaller than a distance between the upper surface of the guide duct 250 and a ceiling surface of the electric chamber S2. Accordingly, the lower portion of the tank chamber 450a is spaced upwards from the bottom surface of the electric chamber S2, and the upper portion of the tank chamber 450a may be spaced apart from the ceiling surface of the electric chamber S2. As another example, the ceiling surface of the electric chamber S2, i.e., the lower surface of the upper cover 260, may constitute the upper portion of the tank chamber 450a.

Referring to FIG. 22, the tank housing 460 may be disposed on an air flow path for cooling. More precisely, the tank housing 460 may be disposed to be vertically overlapped with the guide duct 250 guiding discharge of air. In the embodiment, a part of the tank housing 460 may be disposed above the guide duct 250. Then, the tank housing 460 and the water tank 450 stored in the tank housing 460 may be cooled by air passing through the guide duct 250, and the air may lower the temperature of water in the water storage space 451.

Eventually, the tank housing 460 and the bottom surface of the electric chamber S2 are spaced apart from each other, so that it is possible to prevent heat of the bottom surface of the electric chamber S2 from being directly transmitted to the tank housing 460, and a part of the tank housing 460 is disposed on the guide duct 250, so that the tank housing 460 may be cooled by the air passing through the guide duct 250. Therefore, it is possible to prevent the tank housing 460 and the water tank 450 stored in the tank housing 460 from being deformed by heat with high temperature.

In the embodiment, the tank chamber 450a of the tank housing 460 may be spaced apart from each of the bottom surface of the electric chamber S2 and the ceiling surface of the electric chamber S2, i.e., the lower surface of the upper cover 260. As another example, the tank chamber 450a of the tank housing 460 is spaced apart from the bottom surface of the electric chamber S2, but the ceiling surface of the electric chamber S2 may constitute the upper surface of the tank chamber 450a.

As shown in FIG. 24, the tank housing 460 may include the step difference rib 466. The step difference rib 466 may protrude forwards from a lower portion of the front surface 462 of the tank housing 460. The step difference rib 466 may be provided in the left-right direction at the lower portion of the front surface 462 of the tank housing 460.

The step difference rib 466 may be stacked with the lower guide 424b of the front housing 420. More specifically, the lower guide 424b may be disposed at an upper portion of the step difference rib 466. Then, the step difference rib 466 and the lower guide 424b are configure to b overlapped with each other, so that leakage of water between the front housing 420 and the tank housing 460 may be prevented. When leakage of water between the front housing 420 and the tank housing 460 occurs, the water penetrates into the cooking appliance to cause a breakdown of the cooking appliance, and contaminate the cooking appliance, and it is necessary to prevent leakage.

The step difference rib 466 may have a step difference structure at a lower portion of the tank housing 460. Accordingly, an upper surface of the lower guide 424b and a bottom surface of the entrance of the tank chamber 450a may form a continued flat surface. As shown in FIG. 24, an upper surface of the housing body 461 and the upper surface of the lower guide 424b may have the same heights to form the continued surface. Then, the peripheral portion of the entrance of the water tank 450 exposed outwards may provide the unified aesthetic.

At this point, an end of the lower guide 424b may be in close contact with the step difference rib 466 of the tank housing 460. More specifically, a lower surface of an end of the lower guide 424b may be stacked on an upper surface of the step difference rib 466. Therefore, a surface contact section may be formed between the lower guide 424b and the step difference rib 466.

In the embodiment, the lower guide 424b and the step difference rib 466 may be in surface-contact with each other at different two surfaces thereof. As shown in FIG. 24, the end of the lower guide 424b is in surface-contact with the front surface of the tank housing 460, and at the same time, a lower surface of the lower guide 424b is surface-contact with the upper surface of the step difference rib 466. As described above, when the lower guide 424b and the step difference rib 466 are in surface-contact with each other at the two different surfaces, contact areas between the lower guide 424b and the step difference rib 466 are increased and leakage can be further efficiently prevented.

As another example, the lower guide 424b and the step difference rib 466 may be in contact with each other at one surface or three surfaces. The lower guide 424b is formed in a pocket shape, and the step difference rib 466 is inserted into the pocket, so that the lower guide 424b and the step difference rib 466 may be in surface-contact with each other at three surfaces.

Meanwhile, a mounting bracket 467a, 467b of the tank housing 460 may allow the tank housing 460 from being spaced apart from the bottom surface of the electric chamber S2. The mounting bracket 467a, 467b is provided to fix the tank housing 460 to an internal portion of the electric chamber S2. The mounting bracket 467a, 467b may protrude from a surface of the tank housing 460. Although not shown in the drawings, the mounting bracket 467a, 467b may be fixed to the bottom surface of the electric chamber S2 with a fastener such as a screw.

At this point, the upper surface of the guide duct 250 is disposed higher than the upper surface of the upper casing 240. Therefore, it is necessary to fix the tank housing 460 to each of the upper surface of the guide duct 250 and the upper surface of the upper casing 240. To this end, the tank housing 460 may include a plurality of mounting brackets 467a, 467b in the embodiment. Some of the plurality of mounting brackets 467a, 467b may be supported by the upper surface of the guide duct 250 and a remaining part thereof may be supported by the upper surface of the upper casing 240.

More specifically, as shown in FIG. 22, the mounting brackets 467a, 467b may include a first bracket 467a and a second bracket 467b. The first bracket 467a and the second bracket 467b may have different heights from each other. The first bracket 467a may be fixed to the guide duct 250, and the second bracket 467b may be fixed to the upper surface of the upper casing 240.

The second bracket 467b may further protrude downwards than the first bracket 467a. A length of the second bracket 467b further protruding than the first bracket 467a may be the same as the height of the guide duct 250. The second bracket 467b may extend downwards from a rear end of the tank housing 460. As another example, the second bracket 467b may be provided at a side end, not at the rear end of the tank housing 460.

Meanwhile, as shown in FIG. 18, the side surface of the tank housing 460 may be disposed to face the side through hole 272 of the side covers 270. External air flowing inwards through the side through hole 272 may lower the temperature of the tank housing 460 and the temperature of the water tank 450. Eventually, the tank housing 460 and the water tank 450 may be cooled by the air transferred through the guide duct 250 and the air flowing inwards through the side through hole 272. Of course, the water stored in the water tank 450 may be cooled by the air transferred through the guide duct 250 and the air flowing inwards through the side through hole 272.

The front surface 462 of the tank housing 460 may include the guide mounting piece 468a. The guide mounting piece 468a may be in contact with the fastening boss 428a of the front housing 420. The guide mounting piece 468a may be engaged with the fastening boss 428a of the front housing 420 to be fastened to each other with the fastener B1. The guide mounting piece 468a may protrude upwards from the front surface 462 of the tank housing 460. The guide mounting piece 468a may be provided at each of opposite portions with the tank entrance 424 as the center.

Furthermore, the front surface 462 of the tank housing 460 may include the fastening protrusion 468b. The fastening protrusion 468b may be inserted into the housing fastening groove 428b of the front housing 420. The housing fastening groove 428b and the fastening protrusion 468b may allow the front housing 420 and the tank housing 460 to be coupled to each other, together with the fastening boss 428a and the guide mounting piece 468a.

In the embodiment, the fastening protrusion 468b may be located lower than the guide mounting piece 468a. Then, the fastener B1 may be fastened to the guide mounting piece 468a at a relatively high position, so that assembling workability can be enhanced. As another example, the fastening protrusion 468b may be disposed higher than the guide mounting piece 468a, and the tank housing 460 may include only the guide mounting piece 468a without the fastening protrusion 468b.

At this point, when the fastening protrusion 468b is inserted into the housing fastening groove 428b of the front housing 420, temporarily assembled state between the front housing 420 and the tank housing 460 may be maintained. Furthermore, the fastening protrusion 468b and the housing fastening groove 428b may serve to guide an assembly position between the tank housing 460 and the front housing 420.

As described above, the structure of the guide mounting piece 468a and the fastening protrusion 468b may allow the tank housing 460 to be in close contact with the front housing 420. More precisely, the front surface 462 of the tank housing 460 may be in close contact with the rear surface of the front housing 420. Accordingly, the opening provided at the front side of the tank chamber 450a may be connected to the tank entrance 424. When the tank housing 460 is in close contact with the front housing 420, a gap therebetween is blocked to improve the aesthetic, and penetration of foreign substances or moisture through the gap therebetween can be prevented.

Meanwhile, the front housing 420 may be fastened to the tank housing 460 through fastening between the housing fastening groove 428b and the fastening protrusion 468b and fastening between the fastening boss 428a and the guide mounting piece 468a. The assembly of the front housing 420 and the tank housing 460 fastened as described above may be mounted to the front frame 280 together. In other words, after the front housing 420 and the tank housing 460 are assembled first, the assembly of the front housing 420 and the tank housing 460 may be mounted to the front frame 280 together.

With the above-described assembling of the fastening protrusion 468b and the housing fastening groove 428b, the temporarily assembled state between the front housing 420 and the tank housing 460 can be maintained. Therefore, after the fastening protrusion 468b is inserted into the housing fastening groove 428b to temporarily assemble the two components first, the assembly may be mounted to the front frame 280. More precisely, the assembly of the front housing 420/the tank housing 460 temporarily assembled is mounted to the front frame 280, and then the fastener B 1 may be fastened to the fastening boss 428a and the guide mounting piece 468a.

Meanwhile, the upper portion of the front frame 280 may be disposed between the front housing 420 and the tank housing 460. The front housing 420 may be disposed in front of the cut-out portion 280a of the front frame 280, and the tank housing 460 may be disposed in rear of the cut-out portion 280a.

Referring to FIG. 20, the lower guide 424b of the front housing 420 and the step difference rib 466 of the tank housing 460 may be disposed at the upper portion of the front frame 280. Furthermore, one end of the step difference rib 466 may be stacked on an upper portion of an upper end of the front frame 280. Eventually, one end of the step difference rib 466 may be disposed between the upper portion of the upper end of the front frame 280 and a lower portion of the lower guide 424b. Then, as a contact section between the front housing 420, the tank housing 460, and the front frame 280 expands, prevention of leakage and foreign substance inflow can be efficiently performed.

As shown in FIG. 28, the tank housing 460 may include a tank sensor 469. The tank sensor 469 may serve to detect whether the water tank 450 is stored in the tank housing 460. When the water tank 450 is inserted into the tank chamber 450a, a side surface of the water tank 450 presses the tank sensor 469 to allow the tank sensor 469 to detect storage.

The tank sensor 469 may be disposed closer to the rear surface of the tank housing 460 than the tank entrance 424, based on the center portion of the tank housing 460. Accordingly, the tank sensor 469 may detect whether or not the water tank 450 is completely inserted into the tank chamber 450a. Reference numeral 469a indicates a sensor mounting part to expose the tank sensor 469 towards the tank chamber 450a.

As another example, the tank housing 460 may be omitted or may be integrally formed with the casing 100, 200. When the tank housing 460 is omitted, the tank chamber 450a may be provided in the electric chamber S2 by the casing 100, 200. For example, the tank chamber 450a may be provided at an upper portion of the upper casing 240 or at a lower portion of the upper cover 260. In this case, it is preferable that the tank chamber 450a is formed to be spaced apart from a bottom surface of the upper casing 240. At this point, a side surface of the water tank 450 may be moved along a guide structure having a rail shape.

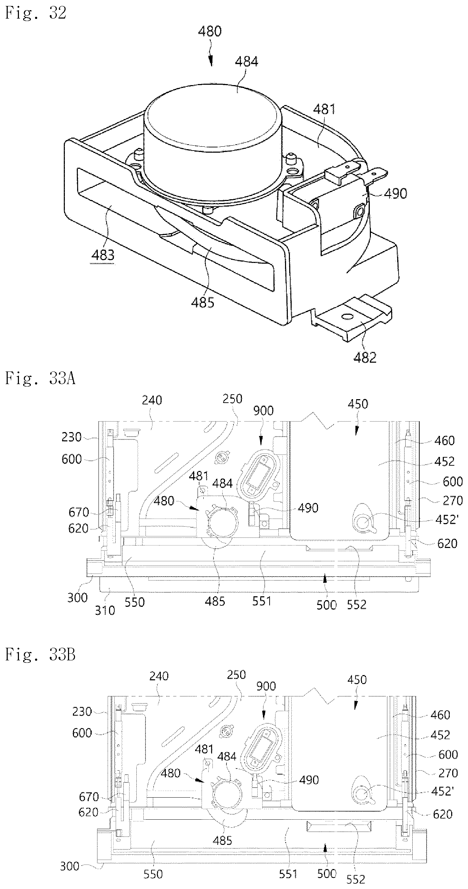

Next, referring to FIGS. 32 to 33, the opening device 480 for opening the panel unit 500 will be described. The opening device 480 may open the panel unit 500 forwards. More precisely, the opening device 480 may allow movement in an initial movement section among the entire movement section where the panel unit 500 is opened to be automatically performed.

The panel unit 500 may be moved by the opening device 480 in a first opening section starting from the first position. Furthermore, the panel unit 500 may be moved by gravity or an external force due to the user in a second opening section extending from a last end of the first opening section to the second position. This opening operation of the panel unit 500 will be described in detail below.

The opening device 480 may be disposed in the electric chamber S2. The opening device 480 may be disposed on a surface of the upper casing 240 constituting the electric chamber S2 or a surface of the guide duct 250 coupled to the upper casing 240. In the embodiment, the opening device 480 is fixed to the upper surface of the guide duct 250.

The opening device 480 may be disposed between a pair of hinge modules 600 to be described below. The pair of hinge modules 600 may serve to guide the movement passage of the panel unit 500, and the opening device 480 may automatically open the panel unit 500 in the first opening section among the movement passage.

When the opening device 480 is independently disposed between the pair of hinge modules 600, this independent structure of the opening device 480 and the hinge modules 600 may be simple than an integrated structure of the hinge modules 600 and the opening device 480. Furthermore, the opening device 480 is disposed at a position relatively far away from the hinge modules 600 constituting a rotating shaft of the panel unit 500, so that a larger opening force (torque) may be supplied to the panel unit 500.

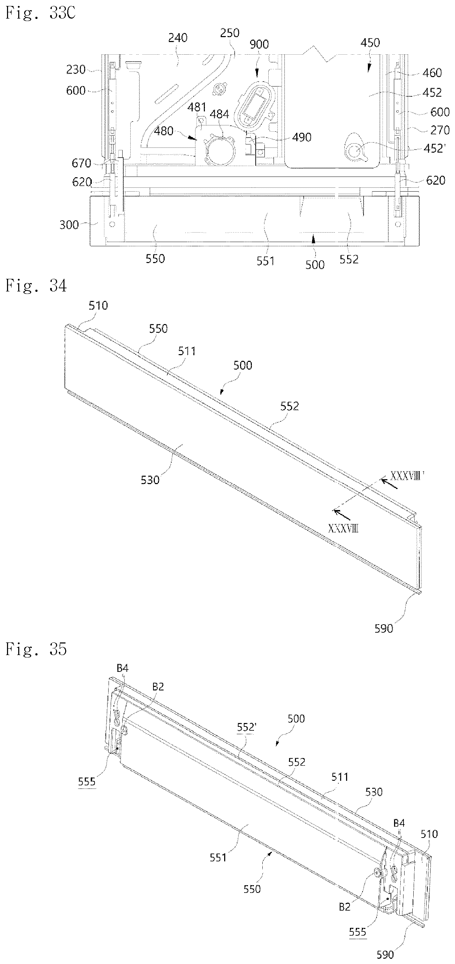

The opening device 480 may be disposed to be biased closer to either of the pair of hinge modules 600. As shown in FIG. 33, in the embodiment, the opening device 480 may be disposed closer to a left hinge module 600 of the pair of hinge modules 600. This arrangement may be to avoid the water tank 450 disposed at the right space. As another example, the opening device 480 may constitute a part of the hinge modules 600. In other words, the opening device 480 may be integrally provided with the hinge modules 600.

Furthermore, the opening device 480 includes one opening device in the embodiment, but may include a plurality of opening devices. As another example, the opening device 480 is not disposed in the electric chamber S2, but may be disposed towards the panel unit 500.

The opening device 480 may open the panel unit 500 by using a rotating force. FIG. 32 shows a structure of the opening device 480 for generating the rotating force. The opening device 480 is composed of one assembled module shape, and may be disposed in the electric chamber S2 in an assembled state.

A frame of the opening device 480 may be formed by an opening housing 481. An operation space 483 may be formed in the opening housing 481. The cam part 485 may be inserted and removed through an opening of the operation space 483. The cam part 485 may protrude forwards of the front housing 420 through the opening of the operation space 483 and the cam protruding port 422 of the front housing 420 connected to the opening. Reference numeral 482 indicates a housing fixation end to fix the opening housing 481 to the guide duct 250.

The opening housing 481 may include an opening motor 484. The opening motor 484 may generate a rotating force by power transmitted to the main panel unit 700. The rotating force of the opening motor 484 may be transmitted to the cam part 485 connected to the opening motor 484 so that the cam part 485 may be rotated.

The opening motor 484 may be a free motor formed to be reversely rotated when a load is applied. For example, when the opening motor 484 is operated to rotate the cam part 485 and the panel unit 500 remains closed by an external force, an overload may be applied to the opening motor 484. At this point, the opening motor 484 may be rotated in a reverse direction to reduce a load.

The cam part 485 may have an oval shape or a polygonal shape extending long in one direction, not a regular circle. Furthermore, the cam part 485 may have an eccentric structure in which a portion connected to the opening motor 484 is biased to one side from a center portion. Accordingly, in a process in which the cam part 485 is rotated once, a part of the cam part 485 may protrude forwards of the front housing 420 through the opening of the operation space 483 and the cam protruding port 422 connected to the opening of the operation space 483, and then may be inserted into the operation space 483 again.

More precisely, in the one rotation process of the cam part 485, through a full storage position (referring to FIG. 33C) where the cam part 485 does not protrude from the opening housing 481 and a maximum protrusion position (referring to FIG. 33B) where the cam part 485 protrudes from the opening housing 481 as much as possible, the cam part 485 may be returned to the full storage position (referring to FIG. 33C).

As another example, the opening device 480 may be linearly moved without being rotated. A part of the opening device 480 may open the panel unit 500 while performing reciprocating movement. Furthermore as another example, the opening device 480 may be composed of an electromagnet generating a repulsive force, thereby pushing the panel unit 500.

The opening device 480 may include an opening sensor 490. The opening sensor 490 may detect a rotated state of the cam part 485. In other words, the opening sensor 490 may detect that the cam part 485 is rotated once to be returned to an original position thereof. When the opening sensor 490 detects that the cam part 485 is completed rotated once, the main panel unit 700 may stop operation of the opening motor 484. The opening sensor 490 may be disposed at one side space of the opening housing 481, and may be pressed by the cam part 485.

FIG. 33 shows the panel unit 500 that is opened by the opening device 480. As shown in FIG. 33A, the cam part 485 is rotated counterclockwise to protrude forwards. Accordingly, the cam part 485 may press a rear surface 551 of the panel unit 500 so as to allow the panel unit 500 to be opened at a predetermined angle.

In this state, when the cam part 485 is further rotated, as shown in FIG. 33B, the cam part 485 may be protrude as much as possible. FIG. 33B may be understood as a state in which the panel unit 500 has been moved in the first opening section starting from the first position where the panel unit 500 is completely closed.

Furthermore, the panel unit 500 may be moved by gravity or an external force due to the user in a second opening section extending from a last end of the first opening section to the second position. As shown in FIG. 33C, the panel unit 500 is completely opened by gravity or an external force due to the user, and the cam part 485 is in a state of being inserted into the opening housing 481 after completing one rotation.

As described above, when the cam part 485 is returned to the full storage position where being stored in the opening housing 481, the opening sensor 490 may be pressed by the cam part 485 to detect a return signal. Furthermore, the main panel unit 700 may stop operation of the opening motor 484 so that the cam part 485 remains in the full storage position.

The series of opening movements of the panel unit 500 will be described below again.

Referring to FIGS. 34 to 40, the panel unit 500 will be described. The panel unit 500 may form a part of the exterior shape of the front surface of the cooking appliance. The panel unit 500 may include a display unit 501 (referring to FIG. 1). The display unit 501 may include an input means adjusting operation of the cooking appliance and an output means displaying an operational state of the cooking appliance. For example, the panel unit 500 may include both of the input means and the output means, or the display unit 501 may be provided in a touch panel to which a touch input of the user is applied and the input means may be integrally included in the display unit 501. For reference, the display unit 501 may be a part of a first operation part M1 to be described below.

At this point, when the display unit 501 and a touch sensor detecting a touch movement are configured as an inter-layered structure to form a touch screen, the display unit 501 may be used as not only the output device but also as the input device. The touch sensor may have a form of a touch film, a touch sheet, a touch pad, etc.

The display unit 501 may include a lighting button 535 (referring to FIG. 1) to preset a function that manually turns on or off the lighting module 900 to be described below. Furthermore, when the cooking appliance is an oven, the display unit 501 may display a self-cleaning button (not shown), etc. to preset a self-cleaning function of the cavity S1.

The panel unit 500 may be disposed in front of the front housing 420. Furthermore, when the panel unit 500 is moved, the panel unit 500 may be disposed below the front housing 420. For reference, FIG. 2 shows a state in which the panel unit 500 covers the front housing 420 in front of the front housing 420, and FIG. 4 shows a state in which the front housing 420 is moved and the front housing 420 and the tank entrance 424 are opened.

In other words, FIG. 2 shows a closed state of the panel unit 500, and FIG. 4 shows an opened state of the panel unit 500. Furthermore, when the panel unit 500 is opened, the water tank 450 is in a state of being removed and re-inserted. As shown in FIG. 5, the water tank 450 is ejected.

When the panel unit 500 is opened, the panel unit may serve as a kind of support when the water tank 450 is removed or inserted. When the panel unit 500 is opened, the water tank 450 may be moved along an upper surface of the panel unit 500. At this point, the upper surface of the panel unit 500 is based on the opened state of the panel unit 500.

The completely closed state of the panel unit 500 may be referred to as the first position, and the completely opened state thereof may be referred to as the second position. The panel unit 500 may be moved from the first position to the second position, reversely, may be moved from the second position to the first position.

Furthermore, a section in which the panel unit 500 is moved from the first position to the second position may be divided into the first opening section and the second opening section. At this point, the first opening section means a section where the panel unit 500 is moved by the opening device 480, and the second opening section means a section extending from the first opening section to the second position.

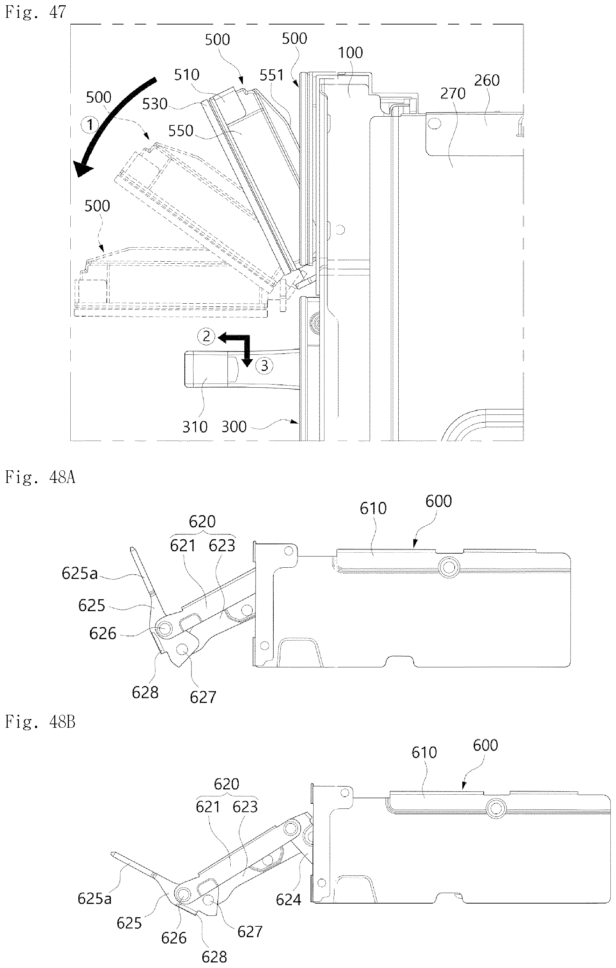

As described above, the panel unit 500 may be moved by the opening device 480 within the first opening section starting from the first position (referring to 500B in FIG. 47). Furthermore, the panel unit 500 may be moved by gravity or an external force of the user within the second opening section extending from the last end of the first opening section to the second position (referring to 500D in FIG. 47).

More specifically, when the panel unit 500 is moved through the first opening section, the panel unit 500 is in a state of being opened at the predetermined angle. Accordingly, a torque on the hinge modules 600 the due to gravity is generated in the panel unit 500. The torque due to gravity may allow the panel unit 500 to be naturally rotated within the second opening section.

As another example, when a tension or a frictional force due to the hinge modules 600 is larger than the torque due to gravity, the panel unit 500 may be stopped at the last end of the first opening section. In this state, when the user further rotates the panel unit 500 downwards, the panel unit 500 may be moved to the second position.

As shown in FIG. 34, the panel unit 500 may have an approximately hexahedral shape extending long in left-right direction. The panel unit 500 may have a predetermined thickness, and may have a space therein for various components to be described below to be mounted.

When the panel unit 500 is located in the first position, the front surface of the panel unit 500 may be exposed in a direction towards the user, i.e., forwards. The rear surface 551 of the panel unit 500 may face the control panel 530.

FIG. 35 is a view showing the rear surface 551 of the panel unit 500. The pair of hinge modules 600 may be respectively connected to the opposite ends of the panel unit 500. Reference numeral 555 indicates a hinge assembly port into which each of the hinge modules 600 is inserted, and a coupling structure between the hinge assembly port and each of the hinge modules 600 will be described below.

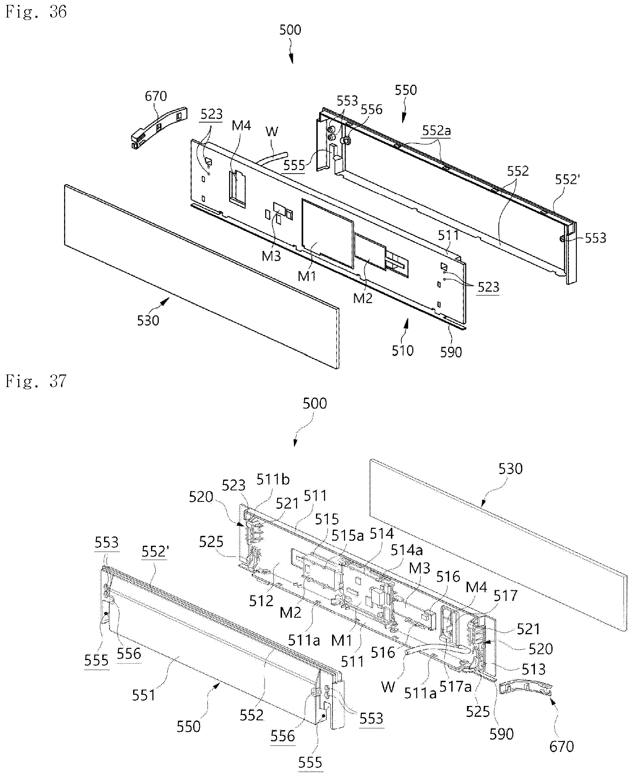

Referring FIGS. 36 and 37, the panel unit 500 may be composed of a plurality of components. Based on the main housing 510 constituting the center portion of the panel unit 500, the control panel 530 may be disposed in the front side, and a cover frame 550 may be disposed in the rear side. In the embodiment, the control panel 530 may extend in the left-right direction longer than the cover frame 550.

The control panel 530 may cover a front surface of the main housing 510, and may expose at least a part of the first operation part M1, a second operation part M2, or a third operation part M3 to be described below, forwards. Furthermore, an empty space may be formed between the main housing 510 and the cover frame 550 for components to be mounted.

First, in looking the main housing 510, the main housing 510 may have an approximately square plate shape. The main housing 510 may be disposed between the control panel 530 and the cover frame 550. When viewed from the front side of the panel unit, the main housing 510 may be covered at most surface thereof by the control panel 530.

The main housing 510 may accommodate components including the first to third operation parts M1 to M3. Furthermore, the main housing 510 may include a hinge coupled portion 520 respectively coupled to each of the hinge modules 600. A structure of the hinge coupled portion 520 will be described in detail below.

As shown in FIG. 37, housing fences 511 may be provided on edges of the main housing 510. The housing fences 511 may be disposed to enclose a center portion of the main housing 510. The housing fences 511 may protrude rearwards. In the embodiment, the housing fences 511 may be respectively disposed an upper portion and a lower portion of the main housing 510.

At this point, a housing fence 511 provided at the lower end of the main housing 510 may be formed longer than a housing fence 511 provided on the upper end of the main housing 510, in a coupling direction between the main housing 510 and the cover frame 550.

Each of the housing fences 511 may include first fastening steps 511a. The first fastening steps 511a may protrude from each housing fence 511 towards the center portion of the main housing 510. Second fastening steps 552a of the cover frame 550 to be described below may be caught by the first fastening steps 511a.

The housing fences 511 may respectively include sealing members 511b. Each of the sealing members 511b may be disposed on an upper end of each of the housing fences 511. The sealing members 511b may serve to prevent penetration of water into the panel unit 500. Each of the sealing members 511b may be disposed along the upper end of each of the housing fences 511 to seal a gap between the main housing 510 and the cover frame 550. A waterproof function of the sealing members 511b will be described below.

A component mounting part 512 may be provided on a rear surface of the main housing 510. The component mounting part 512 may be formed at a center portion of the rear surface of the main housing 510, the center portion being surrounded by the housing fences 511 and a pair of hinge coupled portions 520 to be described below. The first to third operation parts M1 to M3, a communication module M4, etc. may be disposed on the component mounting part 512.

At this point, the component mounting part 512 may be defined as the pair of housing fences 511 disposed on the upper and lower ends of the panel unit 500, and a pair of sealing fences 518 connecting the pair of housing fences 511 to each other, and spaced apart from each other in the left-right direction. In other words, the component mounting part 512 may be understood as a space surrounded by the pair of housing fences 511 and the pair of sealing fences 518.

The component mounting part 512 may include a cover assembling part 513. The cover assembling part 513 may be disposed towards an edge of the component mounting part 512. The cover assembling part 513 is provided for assembly between the main housing 510 and the cover frame 550. The cover assembling part 513 may have a hook structure protruding towards the cover frame 550. A relative assembling part (not shown) of the cover frame 550 may be caught by the cover assembling part 513.

The first operation part M1 may be disposed in the main housing 510. The first operation part M1 may serve to receive input of the user, and to output information to the user at the same time. To this end, the first operation part M1 may include a circuit board, and a touch screen connected to the circuit board.

At this point, the circuit board of the first operation part M1 may be disposed to face the cover frame 550. Furthermore, the touch screen may be disposed to face the control panel 530. The touch screen may be composed of a capacitive touch screen. In this case, the user can touch the control panel 530 to input a signal into the touch screen in a capacitive method. The touch screen may be understood as the display unit 501 described above.

The component mounting part 512 of main housing 510 may include a first mounting guide 514 to fix the first operation part M1. The first mounting guide 514 may have an approximate square frame structure surrounding the first operation part M1. The first mounting guide 514 may be integrally formed with the component mounting part 512, but may be provided separately from the component mounting part 512. In other words, after the first operation part M1 is first fixed to the first mounting guide 514, the first mounting guide 514 may be mounted to the component mounting part 512. Reference numeral 514a indicates a first fixing hook to fix the first mounting guide 514 to the component mounting part 512.

The second operation part M2 may be disposed in the main housing 510. As described in the first operation part M1, the second operation part M2 may serve to receive input of the user, and to output information to the user at the same time. Otherwise, the second operation part M2 may only perform a function of inputting a specific function. For example, the user can activate functions such as steam cooking, steam cleaning, etc. through the second operation part M2.

The component mounting part 512 of main housing 510 may include a second mounting guide 515 to fix the second operation part M2. The second mounting guide 515 may have an approximate square frame structure surrounding the second operation part M2. The second mounting guide 515 may be integrally formed with the component mounting part 512, but may be provided separately from the component mounting part 512. In other words, after the second operation part M2 is first fixed to the second mounting guide 515, the second mounting guide 515 may be mounted to the component mounting part 512. Reference numeral 515a indicates a second fixing hook to fix the second mounting guide 515 to the component mounting part 512.

The third operation part M3 may be disposed in the main housing 510. As described in the first and second operation parts M1 and M2, the third operation part M3 may serve to receive input of the user, and to output information to the user at the same time. Otherwise, the third operation part M3 may receive only a specific input signal. For example, the user can turn on or off power of the cooking appliance through the third operation part M3.

The component mounting part 512 of main housing 510 may include a third mounting guide 516 to fix the third operation part M3. The third mounting guide 516 may have an approximate square frame structure surrounding the third operation part M3. The third mounting guide 516 may be integrally formed with the component mounting part 512, but may be provided separately from the component mounting part 512. In other words, after the third operation part M3 is first fixed to the third mounting guide 516, the third mounting guide 516 may be mounted to the component mounting part 512. Reference numeral 516a indicates a third fixing hook to fix the third mounting guide 516 to the component mounting part 512.

As another example, the first operation part M1, the second operation part M2, and the third operation part M3 may be unified into one panel unit. For example, all functions of the second operation part M2 and the third operation part M3 may be included in the first operation part M1.

The communication module M4 may be disposed in the component mounting part 512 of the main housing 510. The communication module M4 may connect the cooking appliance wirelessly to the outside space. For example, the communication module M4 may implement various communication techniques such as WLAN, Wi-Fi, Bluetooth, ZigBee, Zwave, 5G, etc., for IoT. The user can control the cooking appliance at the outside space through the communication module M4. Furthermore, the cooking appliance may receive external information through the communication module M4 to update cooking functions, or may transmit a problem of the cooking appliance to the outside space.

The component mounting part 512 of main housing 510 may include a fourth mounting guide 517 to fix the fourth operation part M4. The fourth mounting guide 517 may have an approximate square frame structure surrounding the communication module M4. The fourth mounting guide 517 may be integrally formed with the component mounting part 512, but may be provided separately from the component mounting part 512. In other words, after the communication module M4 is fixed to the fourth mounting guide 517 first, the fourth mounting guide 517 may be mounted to the component mounting part 512. Reference numeral 517a indicates a fourth fixing hook to fix the fourth mounting guide 517 to the component mounting part 512.

The first to third operation parts M1 to M3 and the communication module M4 may be connected to the main panel unit 700 with a wire harness W. The wire harness W may be connected to the internal space of the electric chamber S2 along the hinge modules 600 to be described below. More precisely, the wire harness W may extend along either of the pair of hinge modules 600, and may be connected to the main panel unit 700 disposed in the electric chamber S2. At this point, the wire harness W may be covered by a wire cover 670, and a structure of the wire cover 670 will be described below.

The hinge coupled portion 520 may be provided in the main housing 510. The hinge coupled portion 520 is provided to couple the panel unit 500 to each of the hinge modules 600. The hinge coupled portion 520 may be respectively provided at each of left and right portions of the component mounting part 512. The hinge coupled portion 520 may be integrally provided in the main housing 510. A structure of the hinge coupled portion 520 will be described with each hinge module 600 below.

The control panel 530 may be coupled to the main housing 510. The control panel 530 may be coupled to the main housing 510 to constitute the front surface of the panel unit 500. At this point, the front surface of the panel unit 500 is defined based on when the panel unit 500 is located in the first position. When the panel unit 500 is located in the second position, the control panel 530 is directed downwards and may constitute a lower surface of the panel unit 500.

The control panel 530 may serve as a portion where the user touches when the user inputs a signal through the first to third operation parts M1 to M3. Furthermore, the control panel 530 may serve to display output information forwards when the first to third operation parts M1 to M3 output information of the cooking appliance.

To this end, the control panel 530 may be made of a material of tempered glass for touch screen or polymethylethacrylate (PMMA). As another example, the control panel 530 may be integrally formed in the main housing 510 or may be a thin film, or may be omitted.

The cover frame 550 may be provided at the rear side of the main housing 510 that corresponds to the opposite side of the control panel 530. The cover frame 550 may be assembled to the main housing 510 to constitute the rear surface 551 of the panel unit 500. The cover frame 550 may be assembled to the main housing 510 to shield the component mounting part 512.

The cover frame 550 may be shorter in transverse length than the main housing 510 and the control panel 530. Then, the cover frame 550 disposed in rear of the control panel 530 exposed towards the user may be exposed relatively less, and may improve the aesthetic of the panel unit 500.

Cover fences 552 may be provided on edges of the cover frame 550. Each of the cover fences 552 may protrude from an edge of a front surface of the cover frame 550 forwards, i.e., towards the control panel 530. The cover fences 552 may be overlapped with the housing fences 511 of the main housing 510 to prevent external dust or moisture from penetrating into the panel unit 500.

The cover fences 552 may be respectively provided along an upper end and a lower end of the cover frame 550. More precisely, the cover fences 552 may respectively extend in the left-right direction on the upper end and the lower end of the cover frame 550.

At this point, a lower cover fence 552 provided on the lower end of the cover frame 550 may be formed longer than an upper cover fence 552 provided on the upper end of the cover frame 550 in a coupling direction between the main housing 510 and the cover frame 550.

Accordingly, an overlapped area between the lower housing fence 511 and the lower cover fence 552 at the lower end of the panel unit 500 may be formed wider than an overlapped area between the upper housing fence 511 and the upper cover fence 552 at the upper end of the panel unit 500. Then, when the panel unit 500 is located in the second position, a sealing area of the panel unit 500 may be formed larger at the rear side of the panel unit 500 where a contact area between the panel unit 500 and the water tank 450 is larger (based on FIG. 5).

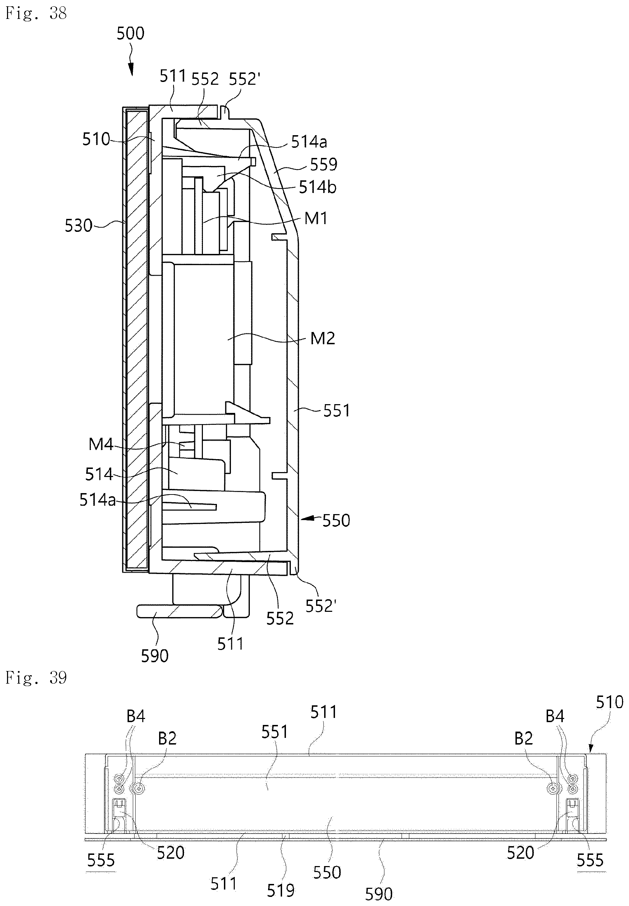

When the cover fences 552 are overlapped with the housing fences 511 of the main housing 510, the cover fences 552 may be in surface-contact with the housing fences 511, respectively. FIG. 38 is a view showing that the cover fences 552 may be vertically stacked with the housing fences 511, and be in surface-contact with each other.

At this point, each of the housing fences 511 and each of the cover fences 552 may be disposed to face each other along two surfaces thereof. FIG. 38 is a view showing that one end of each of the housing fences 511 faces each of stopper ribs 552' provided in the cover fences 552. In FIG. 38, it is shown that one end of each of the housing fences 511 is spaced apart from each of the stopper ribs 552' provided in the cover fences 552, but one end of each of the housing fences 511 may be in close contact with the stopper ribs 552'. Furthermore, although not shown in FIG. 38, each of the sealing members 511b is disposed between one end of each of the housing fences 511 and each of the stopper ribs 552', so that the each of the sealing members may be compressed between one end of each of the housing fences 511 and each of the stopper ribs 552'.

The cover fences 552 may be provided to continuously surround edges of the cover frame 550, or may be provided intermittently. Each of the cover fences 552 may have a thin and unidirectional long plate structure. As shown in FIG. 36, the cover fences 552 may be respectively provided in parallel along an upper portion and a lower portion of the cover frame 550. Reference numeral 552a indicates the second fastening steps 552a fixed by being caught by the first fastening steps 511a of the main housing 510.

As shown in FIG. 38, the cover fences 552 may be respectively stacked with the housing fences 511 of the main housing 510. At this point, each of the housing fences 511 may be disposed at a position relatively further. Furthermore, the housing fences 511 and the cover fences 552 may have surface-contact areas therebetween, thereby efficiently preventing penetration of external foreign substances or moisture.

The cover fences 552 may include the stopper ribs 552', respectively. Each of the stopper ribs 552' may limit an assembly depth when the cover frame 550 and the main housing 510 are assembled to each other. To this end, each of the stopper ribs 552' may protrude further outwards from a surface of each of the cover fences 552. Furthermore, each of the stopper ribs 552' may serve to cover an assembly portion between the main housing 510 and the cover frame 550.

At this point, a protruding height of each of the stopper ribs 552' from the surface of each of the cover fences 552 may be equal to or less than the thickness of each of the housing fences 511. Then, each of the stopper ribs 552' does not protrude further outwards than the surface of each of the housing fences 511.

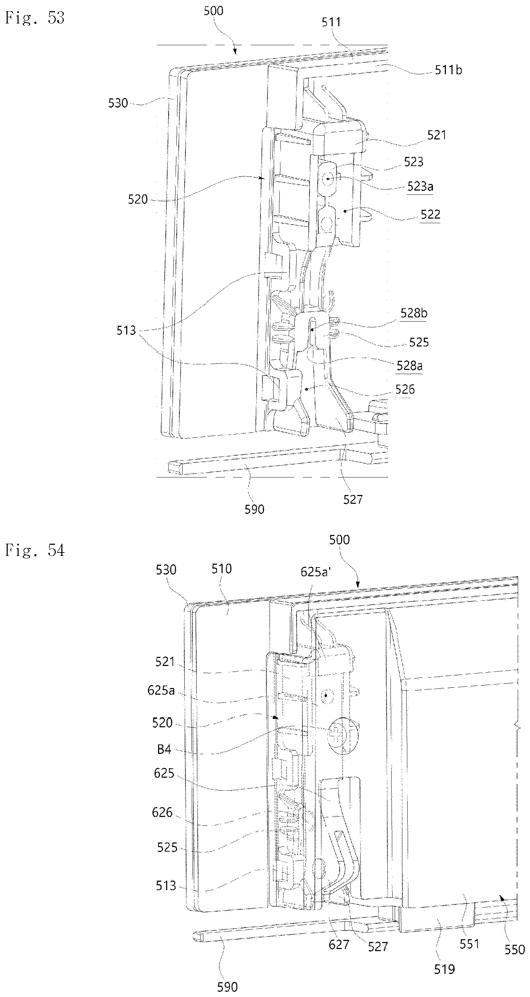

As shown in FIG 37, a cover hinge hole 553 may be provided in the cover frame 550. The cover hinge hole 553 may be formed by penetrating through the cover frame 550 in the front-rear direction. The cover hinge hole 553 may be respectively connected to a hinge fastening hole 523a (referring to FIG. 53) of the main housing 510. At this point, as a block fastener B4 is tightened, the block fastener B4 may pass through the cover hinge hole 553, a connection block 625 of constituting each of the hinge modules 600, and the hinge fastening hole 523a in order. More precisely, the block fastener B4 may respectively pass through each cover hinge hole 553, each block assembly hole 625a' (referring to FIG. 54) of the connection block 625, and each hinge fastening hole 523a that are connected to each other to assemble the hinge modules 600 and the panel unit 500 to each other. In the embodiment, two cover hinge holes 553 may be disposed in the cover frame 550 with a different height from each other.

A hinge assembly port 555 may be open at a position adjacent to the cover hinge holes 553. The driving arm 620 of each of the hinge modules 600 may be inserted into each of the hinge assembly ports 555 when each of the hinge modules 600 is assembled to the panel unit 500. The hinge assembly ports 555 may be provided at opposite portions of the cover frame 550. Furthermore, the hinge assembly ports 555 may be formed to extend to the lower end of the cover frame 550.

Cover fastening holes 556 may be provided in the cover frame 550. The cover fastening holes 556 may be provided to assemble the cover frame 550 to the main housing 510 with cover fasteners B2 (referring to FIG. 35). The cover fastening holes 556 may be respectively disposed at positions adjacent to the hinge assembly ports 555. As another example, the cover fastening holes 556 are omitted, and the main housing 510 and the cover frame 550 may be assembled to each other in the structure of the first fastening steps 511a, the second fastening steps 552a, etc.

At this point, a rear surface of the cover frame 550 may serve as the rear surface 551 of the panel unit 500. More precisely, when the panel unit 500 is located in the first position, the rear surface of the cover frame 550 is directed towards the front frame 280 and the front housing 420. Accordingly, when the opening device 480 is operated, the cam part 485 of the opening device 480 presses the rear surface of the cover frame 550.

As shown in FIG. 38, a cover inclined portion 559 may be formed in the cover frame 550. Based on when the panel unit 500 is located in the first position, the cover inclined portion 559 may be formed to be inclined toward the upper cover fence 552 provided on the upper end of the cover frame 550. When the panel unit 500 is located in the second position and water pours to the rear surface 551 of the cover frame 550, the cover inclined portion 559 may guide the water to flow downwards.

Furthermore, when the panel unit 500 is located in the first position, the cover inclined portion 559 may generate a gap between the rear surface 551 of the cover frame 550 and the front surface of the front housing 420. The user can put a hand into the gap between the cover inclined portion 559 and the front housing 420. Furthermore, the user can grip the upper portion of the panel unit 500, and move the panel unit 500 from the first position to the second position, or vice versa.

Of course, the panel unit 500 may be moved by the opening device 480, but when the user can manually move the panel unit 500, the user can more easily grip the panel unit 500 through the cover inclined portion 559. Specifically, the cover inclined portion 559 may reduce the thickness of the upper portion of the panel unit 500 so that the user can easily grip the upper portion of the panel unit.

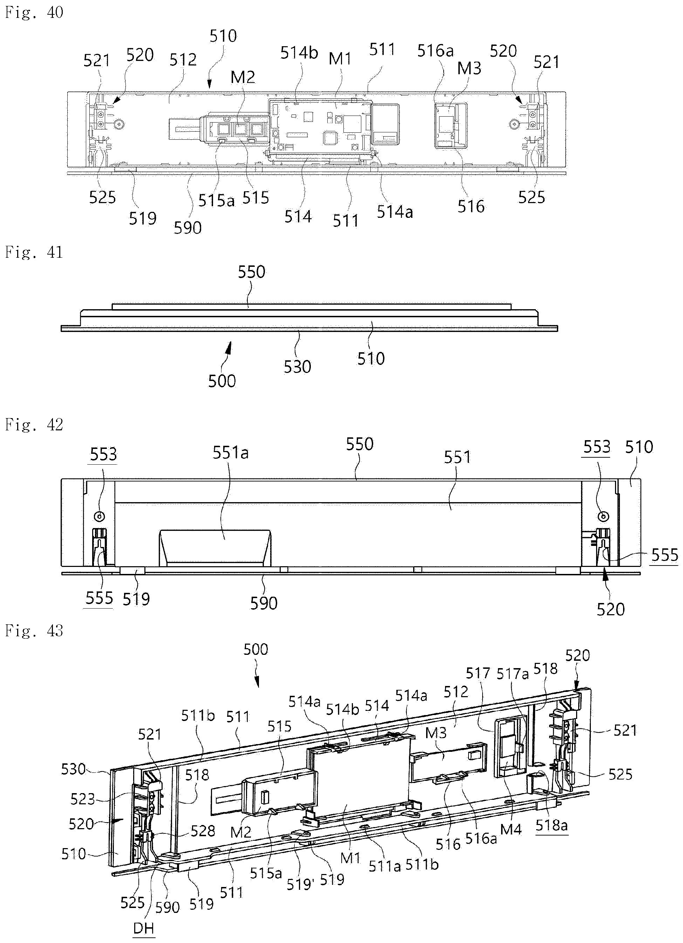

As shown in FIGS. 39 and 40, the air guide 590 may be provided at a lower portion of the panel unit 500. The air guide 590 may protrude further downwards from the lower portion of the panel unit 500. The air guide 590 may be connected to a lower surface of the main housing 510. As another example, the air guide 590 may be connected to a lower surface of the cover frame 550.

The air guide 590 may be disposed at the lower portion of the panel unit 500 to cover the exhaust port 282. The air guide 590 may be disposed in front of the exhaust port 282 to hide the exhaust port 282 from the user's view.

Furthermore, the air guide 590 may guide air discharged through the exhaust port 282 and the air discharged through the door exhaust port 377 of the door frame 370 to be efficiently discharged forwards without generating a vortex. The air guide 590 is exposed to the discharge air with high temperature, so it is preferable that the air guide 590 is made of a metal material with high durability.

The air guide 590 may be connected to connection legs 519 disposed at the lower portion of the panel unit 500. The connection legs 519 may extend further downwards from the lower surface of the main housing 510. The connection legs 519 may be integrally formed with the main housing 510, or may be formed in a separate object.

The air guide 590 may be coupled to a plurality of connection legs 519. The air guide 590 may have a flat plate structure. In the embodiment, the air guide 590 may be assemble with the connection legs 519 through a fastener. As another example, the air guide 590 may be assembled to the connection legs 519 by an adhesive, or may be coupled to the connection legs 519 through a pressure structure.

Referring to FIG. 38, the air guide 590 may have a longitudinal length formed longer than a vertical length. Accordingly, the air guide 590 may guide a discharge direction of air discharged forwards

Meanwhile, FIGS. 41 to 46 show another embodiment of the panel unit 500. For reference, description of a structure of the panel unit 500 equal to the previous embodiment will be omitted.

The rear surface 551 of the panel unit 500 may have a pocket guide 551a. The pocket guide 551a may have a structure that is recessed from the rear surface 551 of the panel unit 500. The pocket guide 551a may be disposed in front of the pocket P. Accordingly, the pocket guide 551a may allow the user to more easily recognize a position of the pocket P.

The pocket guide 551a may be provided in the cover frame 550 of the panel unit 500. The pocket guide 551a may extend from a middle position of the rear surface of the cover frame 550 to an end thereof. Furthermore, the recessed depth of the pocket guide 551a may be gradually larger in a direction toward the end of the cover frame 550. When the user grip the water tank 450 through the pocket P, the user may first move a hand toward the pocket P along the pocket guide 551a.

For better understanding, FIG. 19 shows the panel unit 500 having the pocket guide 551a. Since the pocket guide 551a is disposed in front of the pocket P, the user can intuitively push the hand into the pocket P along the pocket guide 551a. Furthermore, when the water tank 450 is removed, friction between the lower surface of the water tank 450 and the surface of the panel unit 500 may be reduced due to the pocket guide 551a.

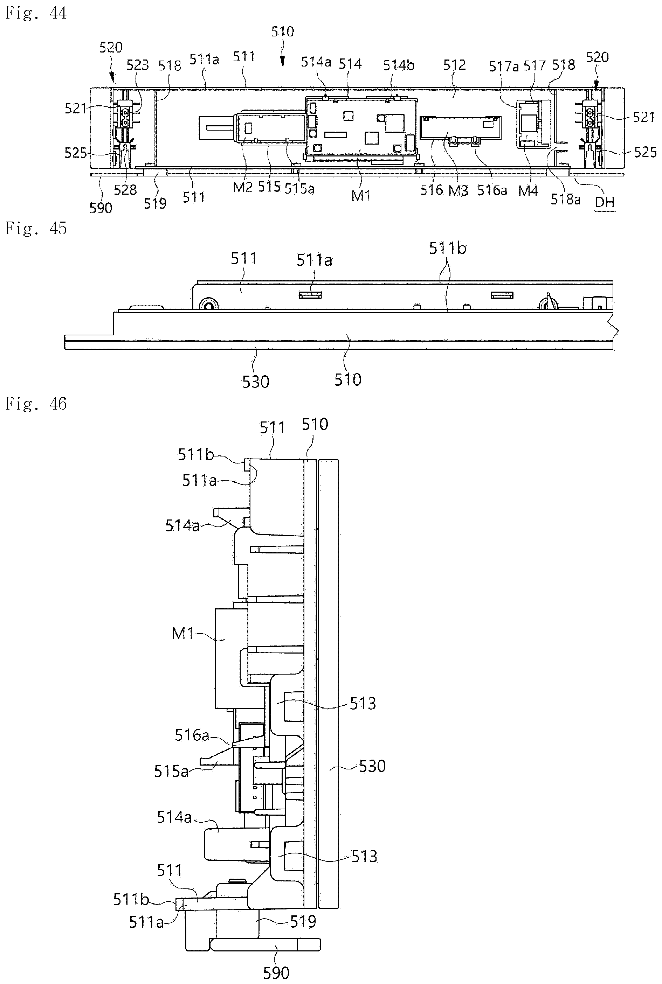

Meanwhile, FIGS. 43 and 44 show a state of removing the cover frame 550 from the panel unit 500. The sealing fences 518 may be provided in the component mounting part 512. The sealing fences 518 may be stood in the component mounting part 512. The sealing fences 518 may be disposed at positions outside the first to third operation parts M1 to M3 and the communication module M4 that are disposed in the component mounting part 512. The sealing fences 518 may prevent penetration of moisture or foreign substances into a center portion of the component mounting part 512.

The sealing fences 518 may be respectively provided at opposite portions of the component mounting part 512. The pair of sealing fences 518 may prevent penetration of moisture or foreign substances towards the center portion of the component mounting part 512 outside the component mounting part 512, respectively.

Each of the sealing fences 518 may be disposed between the component mounting part 512 and the hinge coupled portion 520. Accordingly, even when penetration of moisture or foreign substances through the hinge coupled portion 520 occurs, the sealing fences 518 can prevent penetration of moisture or foreign substances towards the component mounting part 512.

Specifically, each sealing fence 518 may be respectively disposed to be spaced apart from each hinge coupled portion 520. Accordingly, a predetermined empty space may be formed between each sealing fence 518 and each hinge coupled portion 520. The empty space may store penetrated moisture or foreign substances.

At this point, among the housing fences 511, the housing fence 511 provided at the lower end of the main housing 510 and each hinge coupled portion 520 may be spaced apart from each other. A drain hole DH may be formed in this spacing formed as described above. Furthermore, each sealing fence 518 may be disposed to be spaced apart from the housing fence 511 provided on the lower end of the main housing in a direction of the component mounting part 512. Therefore, moisture or foreign substances remaining in an empty space between each sealing fence 518 and each hinge coupled portion 520 may be discharged downwards through each drain hole DH.

More precisely, each drain hole DH may be formed between the housing fence 511 provided on the lower end of the main housing 510 and each hinge coupled portion 520. Furthermore, each drain hole DH may be open downwards based on the panel unit 500 located in the first position. Therefore, moisture and foreign substances may be moved downwards by gravity, and may be discharged through each drain hole DH.

At this point, the housing fence 511 provided on the upper end of the main housing 510 may be connected to the hinge coupled portion 520. Accordingly, each drain hole DH may be formed at only the lower portion of the panel unit 500.

Opposite ends of each sealing fence 518 may be respectively connected to the upper housing fence 511 and the lower housing fences 511. Accordingly, the pair of sealing fences 518 may form an approximate square frame structure together with the pair of housing fences 511. Furthermore, all the first to third operation parts M1 to M3 and the communication module M4 may be disposed in the square frame structure formed by the pair of sealing fences 518 and the pair of housing fences 511.

As another example, the sealing fence 518 may be provided in the cover frame 550, not in the main housing 510. The sealing fence 518 may protrude from the cover frame 550 towards the component mounting part 512 of the main housing 510.

The sealing fence 518 may be formed with protruding heights lower than protruding height of the housing fence 511. When the sealing fence 518 are lower than the housing fence 511, a surface of the sealing fence 518 and a surface of the cover frame 550 may be spaced apart from each other. Air may flow through this spacing. When air may flow above the sealing fence 518, circuit components disposed in the component mounting part 512 may be cooled.

Meanwhile, the hinge coupled portion 520 may protrude higher than the sealing fence 518. The hinge coupled portion 520 formed higher as described above may serve as a cover wall itself to primarily prevent penetration of moisture and foreign substances. Furthermore, each sealing fence 518 may serve as a kind of strength reinforcing rib.

A wire gate 518a may be provided on a sealing fence 518. The wire gate 518a may have a structure in which a part of the sealing fence 518 is open. The wire harness W may extend outwards of the panel unit 500 through the wire gate 518a. A pair of guide walls may be stood on portions on the opposite sides of the wire gate 518a to extend by a predetermined distance outwards of the main housing 510, and the wire harness W may pass through a gap between the guide walls. The wire gate 518a may be provided in either of the pair of sealing fences 518.

The wire gate 518a may be disposed to be spaced apart from both of the upper end and the lower end of the main housing 510. Then, moisture and foreign substances moved along the upper end and the lower end of the main housing 510 may be prevented entering towards the component mounting part 512 through the wire gate 518a.

As shown in FIGS. 45 and 46, each of the sealing members 511b may be provided on the upper end of each of the housing fences 511. Each of the sealing members 511b may be fixed to an upper end of each of the housing fences 511. The sealing members 511b may serve to prevent penetration of moisture and foreign substances into the panel unit 500. Each of the sealing members 511b may be disposed along the upper end of each of the housing fences 511 to seal a gap between the main housing 510 and the cover frame 550. To this end, the sealing members 511b may protrude in the assembly direction (leftward direction based on FIG. 46) between the housing fences 511 and the cover frame 550.

When the main housing 510 and the cover frame 550 may be coupled to each other, the sealing members 511b may be compressed between the main housing 510 and the cover frame 550. Each housing fence 511 of the main housing 510 may face each stopper rib 552' provided in each cover fence 552 of the cover frame 550 (referring to FIG. 38), and each sealing member 511b disposed between each housing fence 511 and each stopper rib 552' may have the width formed larger than a gap between each housing fence 511 and each stopper rib 552' to be compressed.

Furthermore, each sealing member may reduce a gap between the main housing 510 and the cover frame 550. More precisely, each sealing member may be compressed between each housing fence 511 and each stopper rib 552' to reduce a gap between the main housing 510 and the cover frame 550. Accordingly, noise due to the gap between the main housing 510 and the cover frame 550 can be reduced. Furthermore, each sealing member may maintain a solidly fixed state between the main housing 510 and the cover frame 550.

Although not shown in the drawings, each sealing member 511b may be provided in an upper end of each sealing fence 518. Accordingly, edges of the component mounting part 512 defined by the sealing fences 518 and the housing fences 511 may be sealed by the sealing members 511b. As another example, each of the sealing members 511b may be provided on an upper end of each of housing fences 511, and may be omitted in the housing fences 511.

As another example, the sealing members 511b may be disposed in the cover frame 550, not in the main housing 510. More precisely, each of the sealing members 511b may be provided at each of the cover fences 552 of the cover frame 550.

The hinge modules 600 may be connected to the panel unit 500. The hinge modules 600 may connect the panel unit 500 and the casing 100, 200 to each other, so that the panel unit 500 may be moved between the first position and the second position.

As shown in FIG. 47, the panel unit 500 may be moved between the first position, i.e., a closed state, and the second position, i.e., an opened state. Reference numeral 500A indicates the panel unit 500 located in the first position, and reference numeral 500D indicates the panel unit 500 located in the second position. Furthermore, reference numerals 500B and 500C respectively indicate states of the panel unit 500 moved between the first position and the second position.

At this point, a section from the first position 500A to a position moved by a predetermined distance may be divided as the first opening section 500A-500B, and a section from an end 500B of the first opening section to the second position 500D may be divided as the second opening section 500B-500D. The opening device 480 described above may move the panel unit 500 by the first opening section. Furthermore, the panel unit 500 may be moved by gravity or an external force due to the user in a second opening section extending from a last end of the first opening section to the second position.

In the embodiment, the panel unit 500 may not be rotated on a fixed rotation shaft, and may be rotated and moved forwards and downwards simultaneously with rotation. Based on FIG. 47, the panel unit 500 may be rotated counterclockwise (direction of arrow ①), and simultaneously, the panel unit 500 is moved forwards (direction of arrow ②) and downwards, i.e., a direction of gravity (direction of arrow ③).

As another example, the panel unit 500 may be rotated counterclockwise (direction of arrow ①) and simultaneously may be moved downwards, i.e., a direction of gravity (direction of arrow ③). As another example, the panel unit 500 may only be rotated counterclockwise (direction of arrow ①), and may not be moved forwards or downwards.

As described above, when the panel unit 500 is rotated and moved forwards and downwards at the same time, a total movement distance of the panel unit 500 may be increased. When a movement distance of the panel unit 500 is increased, the tank entrance 424 may be exposed wider towards the user.

More specifically, when the panel unit 500 is moved forwards, a front-rear distance in which the upper surface (the rear surface 551 of the cover frame 550) the panel unit 500 in the second position may guide removal or insertion of the water tank 450 may be increased.

Furthermore, when the panel unit 500 is moved downwards, a height of the upper surface (the rear surface 551 of the cover frame 550) of the panel unit 500 in the second position may be less than or at least equal to a height of the lower end of the tank entrance 424. The panel unit 500 lowered in height does not interfere with the water tank 450 when the water tank 450 is removed or inserted.

The lower end of the panel unit 500 in the first position 500A may be disposed higher than the upper end of the door 300. At this point, the lower end of the panel unit 500 may mean a lower surface of the main housing 510 or the cover frame 550. The lower end of the panel unit 500 in the second position 500D may be disposed lower than the upper end of the door 300. At this point, the lower end of the panel unit 500 may mean a lower surface of the control panel 530.

Furthermore, the panel unit 500 in the second position 500D may be disposed at a position located farther forwards from the casing 100, 200 than the front surface of the door 300. As shown in FIG. 47, the entire panel unit 500 may be disposed in front of the front surface of the door 300 (left side based on the drawing). Accordingly, a distance in which the panel unit 500 can guide insertion and removal of the water tank 450 may be formed longer.

Meanwhile, a rotation angle of the panel unit 500 in the second opening section may be larger than a rotation angle of the panel unit 500 in the first opening section. For example, a rotation angle of the panel unit 500 in the first opening section may be formed between 20° and 40°, and a rotation angle of the panel unit 500 in the second opening section may be formed between 50° and 70°. When the panel unit 500 is rotated by the first opening section, a torque by gravity may be applied largely on each hinge module 600. Therefore, even when the opening device 480 rotates the panel unit 500 within the first opening section by a relatively small angle, the panel unit 500 may be naturally opened by gravity within the second opening section.

Furthermore, the total rotation angle at which the panel unit 500 is rotated from the first position to the second position may be between 80° and 100°. When a rotation angle of the panel unit 500 is preset as this angle range, the panel unit 500 may serve as a kind of support when the water tank 450 is removed or inserted.

When the total rotation angle at which the panel unit 500 is rotated to the second position is 90°, the upper surface of the panel unit 500 may be parallel to a depth direction of the tank chamber 450a in which the water tank 450 is stored. Therefore, the water tank 450 may be inserted into or removed from the tank chamber 450a with the upper surface of the panel unit 500 as a support.

When a rotation angle of the panel unit 500 is between 80°and 89°, the panel unit 500 is in an upward raised state at a predetermined angle, and the upper surface of the panel unit 500 (the rear surface 551 of the cover frame 550 based on 500D in FIG. 47) may be in a downward inclined state in a direction of the casing 100, 200 (left side based on the drawing). Therefore, when the water tank 450 is inserted into the tank chamber 450a, the upper surface of the panel unit 500 may serve as a guide in order to easily insert the water tank 450.

Furthermore, when a rotation angle of the panel unit 500 is between 91° and 100°, the panel unit 500 is in a downward sagging state at a predetermined angle, and the upper surface of the panel unit 500 (the rear surface 551 of the cover frame 550 based on 500D of FIG. 47) may be in a downward inclined state towards the outside space of the casing 100, 200 (left side based on the drawing). Therefore, when the water tank 450 is removed out of the tank chamber 450a, the upper surface of the panel unit 500 may serve as a guide so that the water tank 450 may be easily removed while slipping.

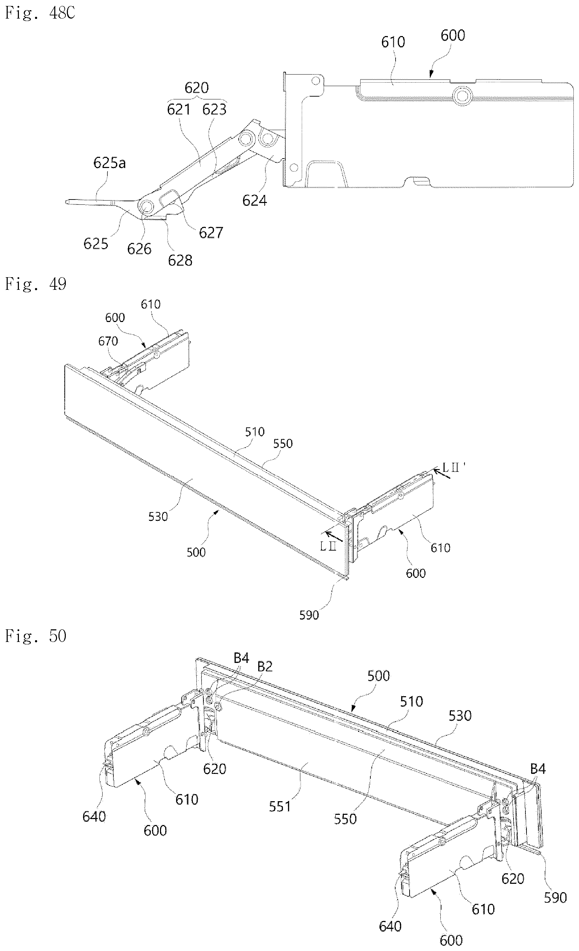

FIG. 48 is a view showing operational states of each hinge module 600 in order. For reference, in FIG. 48, each hinge module 600 is only shown without the panel unit 500. The driving arm 620 and each of connection block 625 may protrude from a hinge housing 610 of each hinge module 600. The connection block 625 may be coupled to the panel unit 500 to control movement of the panel unit 500.

FIG. 48A shows each hinge module 600 when the panel unit 500 is located in the end 500B of the first opening section in FIG. 47. Furthermore, FIG. 48B shows each hinge module 600 in a state 500C of the panel unit 500 during moving from the end 500B of the first opening section to the second position. FIG. 48C shows each hinge module 600 when the panel unit 500 is located in the second position 500D.

As shown in FIG. 48, the connection block 625 is rotated counterclockwise and is moved forwards and downwards at the same time. This operation of the connection block 625 may be implemented by a plurality of links included in the hinge modules 600 and a connection structure of the driving arm 620. This connection structure will be described again below.

FIGS. 49 and 50 show an assembled state between the hinge modules 600 and the panel unit 500. The pair of hinge modules 600 may be respectively connected to opposite ends of the panel unit 500. The pair of hinge modules 600 may have the same operational mechanism. The pair of hinge modules 600 may have the same structure, or may have the symmetric structure.

The hinge modules 600 may be inserted into the panel unit 500 through the hinge assembly ports 555 formed in the cover frame 550 of the panel unit 500, respectively. The hinge housing 610 of each of the hinge modules 600 may remain fixed to the electric chamber S2, and the driving arm 620 may only protrude to be connected to the panel unit 500. Although omitted in FIGS. 49 and 50, the front frame 280 and the front housing 420 may be disposed between the hinge modules 600 and the panel unit 500.

FIG. 51 is a sectional view showing the panel unit 500 located in the first position. As shown in the drawings, the driving arm 620 of the hinge modules 600 may protrude forwards of the front frame 280 and the front housing 420. The connection block 625 rotatably connected to the driving arm 620 stands vertically together with the panel unit 500.

At this point, each of the hinge modules 600 may be assembled to both of the front housing 420 and the front frame 280 with the hinge fastener B3. The hinge fastener B3 may pass through the second hinge assembling hole 427 of the front housing 420 and the first hinge assembling hole 288 of the front frame 280 and then may be tightened to each of the hinge modules 600 disposed in rear of the front frame 280. Accordingly, the hinge modules 600 may be solidly fixed to the front frame 280, and in this process, the front housing 420 may also be fixed to the front frame 280. For reference, the hinge fastener B3 may be fastened to both of the second hinge assembling hole 427 and the first hinge assembling hole 288 when the panel unit 500 is in the opened state, i.e., in the second position.

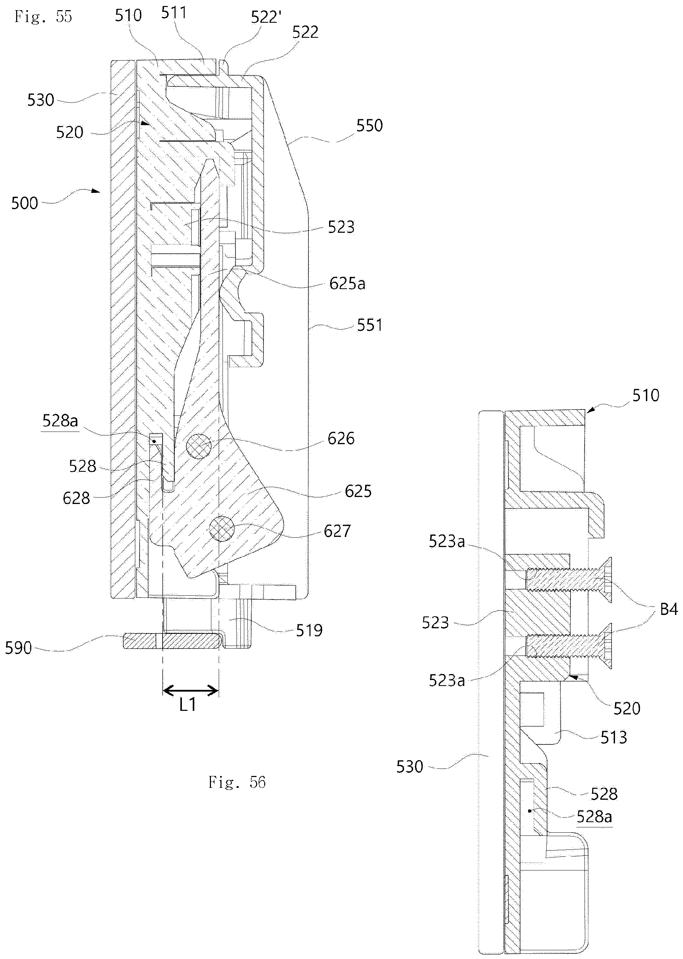

Furthermore, as shown in FIG. 52, the connection block 625 of the hinge modules 600 may be coupled to the panel unit 500 with the block fasteners B4. The block fastener B4 may pass through the connection block 625 to be assembled to the hinge coupled portion 520 provided in the main housing 510. In the embodiment, total two block fasteners B4 may be fastened at different positions. At this point, the connection block 625 may be fixed to the panel unit 500 by not only the block fastener B4 but also a hinge locking structure to be described below (structure of the block locking portion 528 and the locking piece 628, referring to FIG. 55).

In FIGS. 53 to 56, a structure of each hinge coupled portion 520 to fix each hinge module 600 to the panel unit 500 is shown. The hinge coupled portion 520 may be provided the main housing 510 of the panel unit 500. The hinge coupled portion 520 may be disposed at each of opposite portions of the main housing 510. Since the hinge coupled portion 520 is covered with the cover frame 550, after the panel unit 500 is assembled, exposure of most part of the hinge coupled portion 520 may be prevented.

As shown in FIG. 53, the hinge coupled portion 520 may be provided in the main housing 510. The hinge coupled portion 520 may be disposed at a position close to an edge of the main housing 510. The hinge coupled portion 520 may be provided at the rear surface of the main housing 510 in the up-down direction, i.e., a height direction when the panel unit 500 is located in the first position.

In looking a structure of the hinge coupled portion 520, the hinge coupled portion 520 may include a first hinge coupled portion 521 and a second hinge coupled portion 525. A first hinge coupled portion 521 and a second hinge coupled portion 525 may serve as coupling portions where the hinge modules 600 and the panel unit 500 are coupled to each other. Based on when the panel unit 500 is in the opened state, i.e., is in the second position, the first hinge coupled portion 521 may be disposed at a position located farther from the hinge housing 610 than the second hinge coupled portion 525.

In other words, the first hinge coupled portion 521 and the second hinge coupled portion 525 may be disposed to be spaced apart from each other in a direction perpendicular to the rotation shaft of the panel unit 500. At this point, the rotation shaft of the panel unit 500 extends in the left-right direction of the cooking appliance, and in the embodiment, the rotation shaft is not fixed in a specific position and is moved forwards and downwards in the moving process of the panel unit 500.

In looking the first hinge coupled portion 521, the first hinge coupled portion 521 may have a structure of protruding rearwards from the main housing 510. Furthermore, the first hinge coupled portion 521 may surround a seating boss 523. The connection block 625 of each the hinge modules 600 may be fixed to the seating boss 523 with each of the block fasteners B4.

The seating boss 523 may protrude from the internal space of a first fastening space 522 formed in the first hinge coupled portion 521. The hinge fastening hole 523a may be formed in the seating boss 523, and each of the block fastener B4 may be tightened in each of the hinge fastening hole 523a. The block fastener B4 may be a screw, and a part of an end of each of the block fastener may be tightened in the hinge fastening hole 523a. For reference, FIG. 54 shows that the block fastener B4 is assembled while the connection block 625 is seated in the first hinge coupled portion 521.

The seating boss 523 and the hinge fastening hole 523a may include a plurality of seating bosses and a plurality of hinge fastening holes. In the embodiment, the seating bosses 523 and the hinge fastening holes 523a may be disposed to be spaced apart from each other in the direction perpendicular to the rotation shaft of the panel unit 500, like the hinge coupled portions 520. Therefore, the connection block 625 of each of the hinge modules 600 may be fixed in the first hinge coupled portion 521 at least two portions.

The second hinge coupled portion 525 may be provided at the rear surface of the main housing 510. The second hinge coupled portion 525 may be disposed to be continued to the first hinge coupled portion 521. The connection block 625 of the driving arm 620 may be connected to each of the first hinge coupled portion 521 and the second hinge coupled portion 525.

A part of the connection block 625 may be caught by and fixed to the second hinge coupled portion 525. The second hinge coupled portion 525 may have a fixing structure without a separate fastener, unlike the first hinge coupled portion 521. Therefore, before the block fastener B4 is assembled to the first hinge coupled portion 521, the second hinge coupled portion 525 may allow the connection block 625 to be temporarily coupled to the hinge coupled portion 520.

For reference, in the embodiment, after the main housing 510, the control panel 530, and the cover frame 550 that constitute the panel unit 500 are assembled to each other, the hinge modules 600 may be assembled to the panel unit 500. Even when the cover frame 550 covers the rear surface of the main housing 510, the connection block 625 of each of hinge modules 600 may be inserted into the panel unit 500 through the hinge assembly port 555 formed in the cover frame 550.

In looking a structure of the second hinge coupled portion 525, the second hinge coupled portion 525 may have a second fastening space 526. A lower end of the second fastening space 526 may be opened. The connection block 625 may be fitted upwards from the open lower portion of the second fastening space 526. An upper end of the second fastening space 526 may be connected to the first fastening space 522.

An assembly guide 527 may be provided at a portion on each of opposite sides of the second fastening space 526. The assembly guide 527 may have a kind of wall structure stood at a portion on each of the opposite sides of the second fastening space 526. The connection block 625 may be inserted into between opposite assembly guides 527. A lower end of the assembly guide 527 may extend to the lower end of the main housing 510, and an upper end of the assembly guide 527 may be connected to a block locking portion 528 to be described below.

The assembly guide 527 may have a height formed higher at the lower end of the second fastening space 526 than the upper end thereof. The connection block 625 is inserted from the lower side of the assembly guide 527, and the lower end of the assembly guide 527 formed high may form an entrance through which the connection block 625 is inserted. At the same time, the assembly guide 527 may be formed to be gradually widened in width towards the entrance of the lower end into which the connection block 625 is inserted.

Furthermore, the connection block 625 has a portion for connection to a connection link 624 to be described below, at a lower end thereof, so that the height of the lower end of the connection block 625 may be formed high. At this point, based on FIG. 55, the height may means the left-right width of the connection blocks 625. Therefore, it is preferable that the assembly guide 527 has a height formed higher at a lower end.

The block locking portion 528 may be provided above the second hinge coupled portion 525. The block locking portion 528 may be a portion where the connection block 625 is caught and fixed. The block locking portion 528 may have a structure spaced apart from a bottom surface of the second fastening space 526, and covering the upper portion of the second fastening space 526. Accordingly, the block locking portion 528 may have a locking pocket 528a with a bottom surface of the second fastening space 526.

As shown in FIG. 55, a locking piece 628 of the connection block 625 may be locked and fixed to the block locking portion 528. When the locking piece 628 is inserted into the locking pocket 528a of the block locking portion 528, the panel unit 500 may remain locked to the connection block 625. For example, based on FIG. 55, the panel unit 500 may remain locked to the connection block 625 without shaking clockwise or counterclockwise.

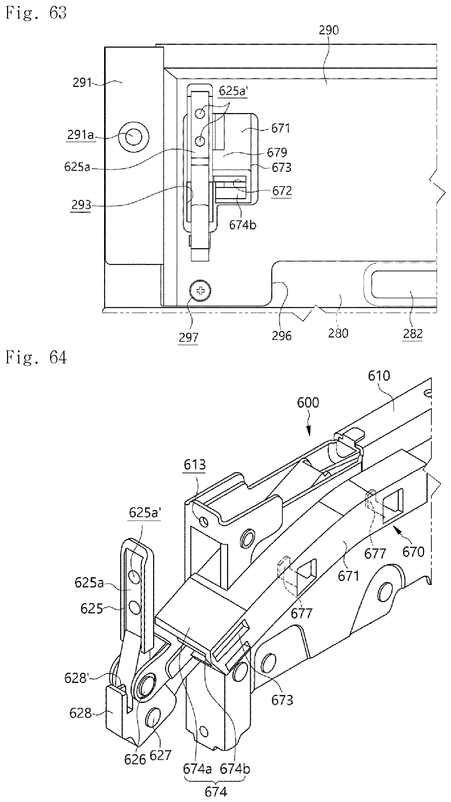

As shown in FIG. 53, a slit 528b may be vertically formed in the block locking portion 528. The slit 528b may be formed along a center portion of the block locking portion 528, and may have a structure opening a part of the locking pocket 528a. The slit 528b may be provided to prevent interference with a part of the locking piece 628 provided in the connection block 625. The locking piece 628 may have an approximate T-shaped section, and the slit 528b may be formed suitable for the sectional shape. Referring to FIG. 64, it is shown that the locking piece 628 is connected to a main body of the connection block 625 with a connection bridge 628'. The connection bridge 628' and the locking piece 628 may form an approximate T-shape.

FIG. 56 is a sectional view showing a structure of the hinge coupled portion 520 without the connection block 625. As shown in the drawing, the seating boss 523 and the hinge fastening holes 523a are formed at an upper portion of the hinge coupled portion 520, so that the block fasteners B4 may be assembled. Furthermore, the block locking portion 528 and the locking pocket 528a may be provided at a lower portion of the hinge coupled portion 520. As described above, a plurality of assembly structures disposed to be spaced apart from each other in an assembly direction of the connection block 625 may assemble the connection block 625 and the hinge coupled portion 520 to each other.

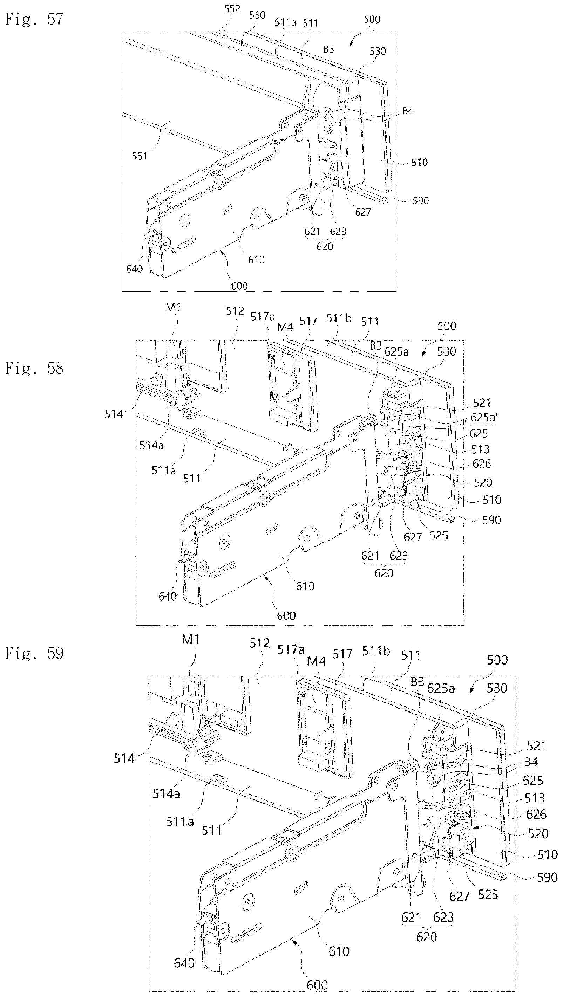

FIG. 57 is a view showing a coupled state of the panel unit 500 and the hinge modules 600 to each other. As shown in the drawing, the components constituting the panel unit 500 are assembled first, then the driving arm 620 of each of the hinge modules 600 may be assembled to the panel unit 500. The connection block 625 provided in the driving arm 620 may be inserted into the hinge coupled portion 520 of the panel unit 500 through the hinge assembly port 555 open in the cover frame 550. Then, the connection block 625 may be fixed to the panel unit 500 with the block fastener B4. FIG. 57 shows tightened block fasteners B4.

As shown in FIG. 58, the view shows a state in which the cover frame 550 of the panel unit 500 is omitted from FIG. 57. As described above, a pair of block fasteners B4 may pass through the connection blocks 625 to be tightened in the first hinge coupled portion 521. Furthermore, a lower portion of the connection block 625 may be caught by the second hinge coupled portion 525.

The hinge coupled portion 520 may include the first hinge coupled portion 521 and the second hinge coupled portion 525. The first hinge coupled portion 521 and the second hinge coupled portion 525 may extend from the upper end of the main housing 510 to the lower end thereof in a height direction of the panel unit 500. Therefore, the panel unit 500 and the hinge modules 600 may be solidly fixed to each other.

Specifically, the first hinge coupled portion 521 and the second hinge coupled portion 525 may be disposed in an up-down direction perpendicular to a left-right direction (Y-axis direction in FIG. 1), i.e., a direction of the rotation shaft of the panel unit 500. Therefore, in the moving process of the panel unit 500, a load applied to a connected portion to each hinge module 600 may be dispersed into a wide area of the panel unit 500, and may enhance the durability of the panel unit 500 and each hinge module 600. At this point, the up-down direction is based on when the panel unit 500 is located in the first position, and is a Z-axis direction in FIG. 1. However, when the panel unit 500 is in the second position, the up-down direction is an X-shaft direction in FIG. 1.

FIG. 59 is a view showing FIG. 58 without the block fasteners B4. As shown in the drawing, even when the block fasteners B4 are removed, the panel unit 500 may maintain a coupled state to each hinge module 600. This is because the locking piece 628 of the connection block 625 is caught by the block locking portion 528 of the second hinge coupled portion 525 described above. Therefore, while holding the panel unit 500 on the locking piece 628 first, the operator can tight the block fasteners B4.

Next, in describing the hinge modules 600, the hinge modules 600 may guide movement of the panel unit 500. The panel unit 500 may be connected to the casing 100, 200 through the hinge modules 600. In other words, each hinge module 600 connects the panel unit 500 and the casing 100, 200 to each other, and may relatively move the panel unit 500 with respect to the casing 100, 200.

The hinge modules 600 may be respectively connected to opposite ends of the panel unit 500. The two hinge modules 600 are symmetrically disposed at opposite portions of the panel unit 500 to guide movement of the panel unit 500. As another example, a hinge module 600 may be connected to either of the opposite end portions of the panel unit 500.

Referring to FIG. 48, a frame of each hinge module 600 may be formed of the hinge housing 610. The hinge housing 610 may have an approximate hexahedron structure. The hinge housing 610 is disposed in the electric chamber S2. In the embodiment, the hinge housing 610 may be disposed inside each side cover 270, in the electric chamber S2.

The hinge housing 610 may maintain a fixed state to the electric chamber S2. To this end, the hinge housing 610 may be fixed to the casing 100, 200. More precisely, the hinge housing 610 may be fixed at least one of the side covers 270 and the front frame 280 constituting the casing 100, 200. In the embodiment, the hinge housing 610 may be fixed to both of the front frame 280 and the front housing 420 that are disposed in front thereof, at the same time.

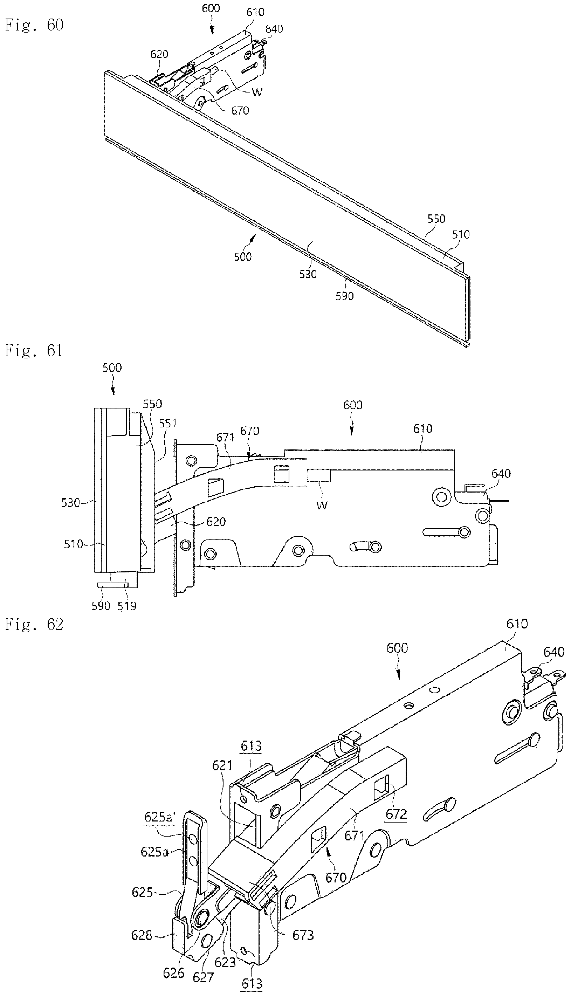

Referring to FIG. 62, the hinge housing 610 may have the housing assembling hole 613. The housing assembling hole 613 may be formed in a front surface of the hinge housing 610. The housing assembling hole 613 is provided to fix the hinge housing 610 to the casing 100, 200. The hinge fastener B3 may pass through the second hinge assembling hole 427 of the front housing 420 and the first hinge assembling hole 288 of the front frame 280, and then may be fastened to the housing assembling hole 613. Then, each hinge module 600 may be fixed to the front frame 280 and the front housing 420 at the same time. The housing assembling hole 613 may be formed in each of a front portion and a lower portion of the hinge housing 610.

Referring to FIG. 48 again, the hinge housing 610 may include the driving arm 620. A part of the driving arm 620 may be inserted into and removed out of the hinge housing 610. A first end of the driving arm 620 may be connected to an internal portion of the hinge housing 610, and a second end of the driving arm 620 may be connected to the connection block 625. The connection block 625 may be coupled to the panel unit 500, but as another example, the connection block 625 is omitted and the driving arm 620 may be directly coupled to the panel unit 500.

The driving arm 620 may be moved forwards of the hinge housing 610. Furthermore, the driving arm 620 may be moved downwards of the hinge housing 610. As shown in FIGS. 48B and 48C, the driving arm 620 is moved forwards of the hinge housing 610 (leftward direction based on FIG. 48B), and is moved downwards (downward direction based on FIG. 48C). As shown in the drawings, when the driving arm 620 is moved forwards and downwards, a total movement distance of the panel unit 500 may be increased. When a movement distance of the panel unit 500 is increased, the tank entrance 424 may be exposed wider towards the user.

The driving arm 620 may include a first driving arm 621 and a second driving arm 623. The first driving arm 621 and the second driving arm 623 may be disposed side by side. Each of the first driving arm 621 and the second driving arm 623 may be rotatably connected to the connection block 625. At this point, the first driving arm 621 and the second driving arm 623 may be rotatably connected to different positions in the connection block 625. Reference numeral 626 indicates a first shaft 626 where the connection block 625 is connected to the first driving arm 621, and reference numeral 627 indicates a second shaft 627 where the connection block 625 is connected to the second driving arm 623. The first shaft 626 and the second shaft 627 may be understood as connection shafts connect the panel unit 500 to each hinge module 600 so that the panel unit 500 and each hinge module 600 may relatively rotatable.

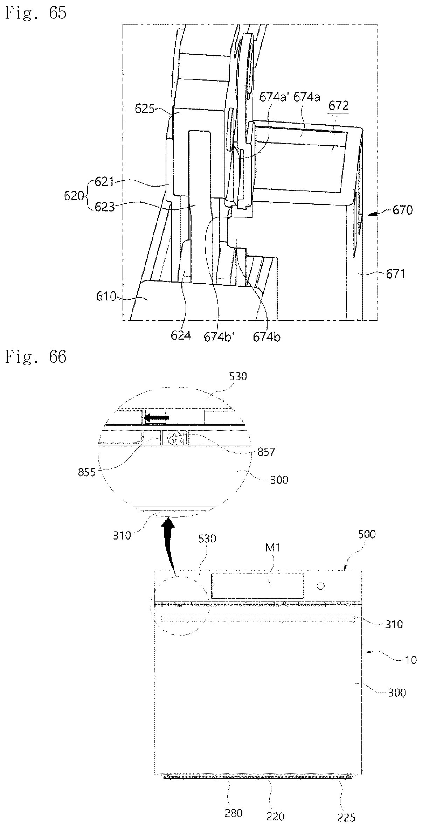

The first driving arm 621 and the second driving arm 623 may be disposed to be overlapped with each other. Since the first driving arm 621 has a width larger than a width of the second driving arm 623, the second driving arm 623 may be covered by the first driving arm 621. As described above, when the first driving arm 621 and the second driving arm 623 are disposed to be overlapped with each other, even when the first driving arm 621 and the second driving arm 623 are independently operated, the first driving arm 621 and the second driving arm 623 do not interfere with each other This state is shown in FIG. 65

The first driving arm 621 and the second driving arm 623 may be connected to each other by the connection link 624. One end of the connection link 624 is rotatably connected to the hinge housing 610, and may be rotatably connected to both of the first driving arm 621 and the second driving arm 623 at the same time. The connection link 624 may guide movement of the first driving arm 621 and movement of the second driving arm 623.

FIG. 52B is a block diagram showing a structure of each hinge module 600. As shown in FIG. 52B, a linear movement part 614 may be provided in the hinge housing 610. The linear movement part 614 may guide movement of the driving arm 620 while being linearly moved inside the hinge housing 610.

To this end, the linear movement part 614 may be connected to a driving link 624'. A first end of the driving link 624' may be rotatably connected to the linear movement part 614, and a second end thereof may be rotatably connected to the second driving arm 623. At this point, since the second driving arm 623 is connected to the connection link 624 and the connection link 624 is connected to the first driving arm 621, as a result, the driving link 624' may be indirectly connected to the second driving arm 623.

A tension adjustment part 616 may be connected to the linear movement part 614. The tension adjustment part 616 may adjust a tension applied to each hinge module 600 when the panel unit 500 is moved. The tension adjustment part 616 may prevent the panel unit 500 from being sharply opened. Furthermore, the tension adjustment part 616 may stop the panel unit 500 at a specific angle.

The tension adjustment part 616 may include an elastic member 616a and a damper 616b. A first end of the elastic member 616a may be fixed to the hinge housing 610, and may have a spring connected to the linear movement part 614 as a second end thereof. Accordingly, the spring may provide an elastic force of a constant magnitude to the linear movement part 614. Since the linear movement part 614 should be moved while enduring the elastic force of the spring, the panel unit 500 indirectly connected to the linear movement part 614 may also receive the elastic force of the spring.

The damper 616b may be moved in response to movement of the linear movement part 614. The damper 616b applies a load of a predetermined magnitude to the linear movement part 614 in a movement process of the linear movement part 614 to limit a movement speed of the linear movement part 614. The damper 616b may be composed of a hydraulic damper 616b switching kinetic energy of the linear movement part 614 into thermal energy. After the panel unit 500 is initially rotated at a predetermined angle by the opening device 480, when the panel unit 500 naturally rotated gravity applied to the panel unit 500, the damper 616b may serve a shock absorbing function. In other words, the damper 616b may allow the panel unit 500 to be moved at a relatively slow speed within the second opening section extending from an end of the first opening section to the second position.

As another example, either of the spring and the damper 616b of the tension adjustment part 616 may be omitted. For example, when the damper 616b is omitted, the spring provides a constant elastic force to the linear movement part 614 to compensate gravity applied to the panel unit 500. Furthermore, as another example, both of the spring and the damper 616b may be omitted.

At this point, the tension adjustment part 616 is not directly connected to the linear movement part 614, and may be connected thereto through an adjustment link 615. The adjustment link 615 may be disposed inside the hinge housing 610. A first end of the adjustment link 615 may be rotatably fixed to the hinge housing 610, and a second end of the adjustment link 615 may be rotatably connected to the linear movement part 614. Furthermore, the tension adjustment part 616 may be connected to the adjustment link 615. Then, a load applied to the tension adjustment part 616 may be transmitted to the linear movement part 614 through the adjustment link 615. As another example, the tension adjustment part 616 may be directly connected to the linear movement part 614.

The connection block 625 may be connected to the driving arm 620. The connection block 625 may connect the driving arm 620 to the panel unit 500. The connection block 625 may include the first shaft 626 connected to the first driving arm 621, and the second shaft 627 connected to the second driving arm 623. The first shaft 626 and the second shaft 627 are disposed at different positions so as to limit a rotation angle of the connection block 625.

As described above, since the connection block 625 connects each hinge module 600 and the panel unit 500 to each other, the connection block 625 may be referred to as a connection part between each hinge module 600 and the panel unit 500. A rotation center of the panel unit 500 may be provided in the connection block 625.

The connection block 625 may include a connection end part 625a. The connection end part 625a may have an approximate plate structure extending from the connection block 625. The connection end part 625a may be placed in the first hinge coupled portion 521. As shown in FIG. 54, the connection end part 625a is disposed on the first hinge coupled portion 521.

The connection end part 625a may be placed on the seating boss 523 of the first hinge coupled portion 521. Furthermore, each block assembly hole 625a' formed in the connection end part 625a may be connected to each hinge fastening hole 523a of the seating boss 523. The holes may be fastened to each other by the block fastener B4, and as the block fastener B4 is tightened, the block fastener may pass through each cover hinge hole 553, each block assembly hole 625a', and each hinge fastening hole 523a constituting each hinge module 600 in order. More precisely, the fastener pass through each cover hinge hole 553, each block assembly hole 625a', and each hinge fastening hole 523a that are connected to each other, so that assembly between the cover frame 550, the connection block 625, and the main housing 510 may be achieved. Like the hinge fastening holes 523a and the cover hinge holes 553, two block assembly holes 625a' spaced apart from each other may be formed in the connection end part 625a.

The connection block 625 may include the locking piece 628. The locking piece 628 may be inserted into and caught by the locking pocket 528a of the second hinge coupled portion 525. Referring to FIG. 64, the locking piece 628 may be connected to the main body of the connection block 625 with the connection bridge 628'. The connection bridge 628' and the locking piece 628 may form an approximate T-shape. The connection bridge 628' make a connection portion between the locking piece 628 and the main body of the connection blocks 625 large so as to enhance durability of the connection block 625. In order to prevent interference with the connection bridge 628', the block locking portion 528 of the second hinge coupled portion 525 may have the slit 528b in the up-down direction.

As shown in FIG. 55, the connection end part 625a and the locking piece 628 of the connection block 625 may be disposed at positions different from each other in the front-rear direction. At this point, the front-rear direction means a thickness direction of the connection block 625, and indicates the left-right direction based on FIG. 55. When the connection end part 625a and the locking piece 628 are provided at different heights, heights of two portions where the connection block 625 is fixed to the main housing 510 may be different.

More precisely, the connection end part 625a is fixed to the first hinge coupled portion 521 and the locking piece 628 may be fixed to the second hinge coupled portion 525, and a fixed portion to the first hinge coupled portion 521 and a fixed portion to the second hinge coupled portion 525 are disposed at positions different from each other in the front-rear direction. Reference numeral L1 indicates a distance of spacing between the fixed portion to the first hinge coupled portion 521 and the fixed portion to the second hinge coupled portion 525.

Simultaneously, the connection end part 625a and the locking piece 628 may be located at vertically different positions. The connection end part 625a may be disposed at an upper portion of the connection block 625 higher than the locking piece 628. Therefore, the connection end part 625a and the locking piece 628 may be coupled to the main housing 510 at positions vertically spaced apart from each other.

As described above, the connection block 625 may be fixed to the main housing 510 at different positions in the front-rear direction and the up-down direction. Accordingly, each hinge module 600 and the panel unit 500 may be coupled to each other at positions spaced in various directions, and an external force applied to a coupling portion between each hinge module 600 and the panel unit 500 may be widely dispersed.

Each hinge module 600 may include a hinge sensor 640. The hinge sensor 640 may detect whether or not each hinge module 600 is operated. At least a part of the hinge sensor 640 may be disposed in the hinge housing 610. The hinge sensor 640 disposed in the hinge housing 610 may detect operation of one of a plurality of components constituting each hinge module 600. For example, the hinge sensor 640 may detect movement of the linear movement part 614. When the linear movement part 614 presses the hinge sensor 640, the hinge sensor 640 may detect that the linear movement part 614 is located in an initial position. The main panel unit 700 connected to the hinge sensor 640 may determine that the panel unit 500 is located in the first position, by a signal transmitted from the hinge sensor 640.

FIG. 60 is a view showing a part of the wire harness W connected to the panel unit 500 and the wire cover 670 fixing the wire harness W. The wire cover 670 covers the wire harness W to prevent the wire harness W from being exposed outwards to enhance the aesthetic of the cooking appliance. Furthermore, the wire cover 670 constrains the wire harness W not to be freely moved and to extend along the hinge modules 600, so that interference between the wire harness W and surrounding components may be prevented.

The wire cover 670 may be assembled to the driving arm 620 of each hinge module 600. In the embodiment, since the wire harness W extends towards one of the pair of hinge modules 600, the wire cover 670 may also be assembled only to one hinge module 600.

In the embodiment, the wire cover 670 may be moved along the hinge module 600 while being in parallel in at least a part of a surface of the hinge module 600. Accordingly, the wire cover 670 may maintain close contact with the hinge module 600 during movement. When the wire cover 670 is moved in close contact with the hinge modules 600, a surface area of a component exposed between the panel unit 500 and the casing 100, 200 may be reduced. Furthermore, the wire cover 670 may be shown as a part of each hinge module 600, and may provide high sense of unity.

The wire cover 670 may have an approximately hexahedral shape. The wire cover 670 may have a vertical height higher than a vertical height of the driving arm 620. The vertical height of the wire cover 670 may be preferably formed larger than a diameter of the wire harness W.

Furthermore, a longitudinal length of the wire cover 670 may be shorter than a longitudinal length of the hinge housing 610. When the driving arm 620 completely protrudes, i.e., the panel unit 500 is in the second position, the wire cover 670 may have a length in which an end of the wire cover 670 is not exposed outwards and is located in the hinge through hole 423 of the front housing 420. Then, when the panel unit 500 is in the second position, the wire harness W may also covered with the wire cover 670. As shown in FIG. 18, a side surface of the driving arm 620 exposed forwards of the front housing 420 is covered with the wire cover 670.

The wire cover 670 is coupled to the driving arm 620. When the wire cover 670 is coupled to the driving arm 620, the wire cover 670 is moved together with the driving arm 620. While the wire cover 670 continuously covers the wire harness W, the wire cover 670 may be moved along a constant movement path of the driving arm 620.

The wire cover 670 may pass through the upper hinge hole 283 open in the front frame 280 together with the second driving arm 623. At this point, when the panel unit 500 is in the second position where the panel unit is completely opened, a second end of the wire cover 670 does not protrude outwards of the upper hinge hole 283, and still remains located in the upper space S2. Accordingly, the wire cover 670 may cover and protect an exposed portion of the wire harness W.

The wire cover 670 comprises a cover body, which may form a frame of the wire cover 670. The cover body 671 may have a hollow tubular structure. An internal portion of the cover body 671 has a guide channel 672 (referring to FIG. 65) through which the wire harness W passes. The guide channel 672 may have a structure having open opposite ends. In the embodiment, the cover body 671 has an approximate square sectional area, on the other hand, the cover body 671 may have a circular shape or other polygonal shapes.

The cover body 671 may be formed to be downward-inclined towards the coupling head 673, i.e., one end connected to the first driving arm 621 of each hinge module 600, or may be formed along a curved path. Then, the cover body 671 may have a shape according to a movement path of the first driving arm 621, and may reduce friction with the wire harness W in a movement process.

However, when the cover body 671 has a circular shape, the cover body 671 may extend in a constant radius of curvature. At this point, it is preferable that a radius of curvature of the cover body 671 is larger than or equal to a radius of rotation of the first driving arm 621. In other words, the cover body 671 may have a curved path that is equal to or milder than the radius of rotation of the first driving arm 621. Then, the cover body 671 may extend in an extending direction of the wire harness W, and friction with the wire harness W in the movement process may be reduced.

Furthermore, the wire cover 670 may be formed short as covering the wire harness W during movement. Specifically, a longitudinal length of the cover body 671 may be formed shorter than a longitudinal length of the hinge housing 610.

One surface of the guide channel 672 is open. The wire harness W may be inserted into the guide channel 672 through the open surface of the guide channel 672. At this point, the open surface of the guide channel 672 is covered with the hinge housing 610 or the first driving arm 621.

As shown in FIG. 64, before the first driving arm 621 protrudes forwards, a side surface of the hinge housing 610 covers the open surface of the guide channel 672. Furthermore, when the first driving arm 621 protrudes forwards, the wire cover 670 is also moved forwards together. At this point, at least a part or the entire open surface of the guide channel 672 is covered with a side surface of the first driving arm 621.

Furthermore, the wire cover 670 may be moved within a height range of the hinge housing 610. In other words, an upper end and a lower end of the cover body 671 may be located within a section between the upper end and the lower end of the hinge housing 610 at all times. Therefore, the side surface of the hinge housing 610 may cover the entire of the open surface of the guide channel 672.

The wire cover 670 may be coupled to the first driving arm 621 of the driving arm 620. As shown in FIG. 62, the view shows the coupling head 673 of the wire cover 670 coupled to the first driving arm 621. The coupling head 673 may be provided at a first end of the wire cover 670.

The coupling head 673 may have a structure covering a surface of the first driving arm 621. For example, he coupling head 673 may have a kind of a tongs structure. Furthermore, a remaining portion of the wire cover 670 extending from the coupling head 673 may be disposed along a surface of the hinge housing 610.

At this point, the vertical height of the wire cover 670 including the coupling head 673 may be formed higher than a vertical height of the first driving arm 621. Then, the wire cover 670 may cover the first driving arm 621 more stably.

Meanwhile, when the panel unit 500 is located in the first position, one surface of the coupling head 673 may face a front surface of the hinge housing 610 constituting each hinge module 600. Then, the coupling head 673 may be caught by the front surface of the hinge housing 610, and separation of the wire cover 670 further rearwards from an original position thereof may be naturally prevented.

In describing a structure of the coupling head 673 with reference to FIGS. 63 to 65, the coupling head 673 may include a coupling finger 674 (referring to FIG. 64). The coupling finger 674 may cover a surface of the first driving arm 621. The coupling finger 674 has an elastically deformable cantilever structure, so that the coupling finger 674 may be elastically deformed in some degree and then restored when being assembled to the first driving arm 621. The coupling finger 674 may protrude from the cover body 671 in a direction perpendicular to the movement direction of the first driving arm 621.

The coupling finger 674 may include a first coupling finger 674a and a second coupling finger 674b. The first coupling finger 674a and the second coupling finger 674b may extend from an upper portion and a lower portion of the cover body 671 to constitute the coupling head 673. The first coupling finger 674a and the second coupling finger 674b may surround the first driving arm 621.

The first coupling finger 674a may protrude from the cover body 671 to surround a plurality of surfaces of the first driving arm 621. As shown in FIG. 65, the first coupling finger 674a may surround upper, side, and lower surfaces of the first driving arm 621. The first coupling finger 674a may be coupled to the first driving arm 621 while being rotated. In this process, as the first coupling finger 674a is elastically deformed in some degrees and then restored, the first coupling finger 674a may be coupled to the first driving arm 621 while surrounding the plurality of surfaces of the first driving arm 621.

A first coupling end 674a' may be provided on an end of the first coupling finger 674a. The first coupling end 674a' may further extend from the end of the first coupling finger 674a in other directions. In the embodiment, the first coupling end 674a' may protrude forwards the internal portion of the guide channel 672. The first coupling end 674a' may surround a lower surface of the first driving arm 621. As another example, the first coupling end 674a' may protrude upwards to surround a side surface of the first driving arm 621, not the lower surface.

The second coupling finger 674b may protrude from the cover body 671 to surround a surface of the first driving arm 621. Like the first coupling finger 674a, the second coupling finger 674b may be coupled to the first driving arm 621. The second coupling finger 674b may allow the wire cover 670 to be stably fixed to the first driving arm 621 together with the first coupling finger 674a.

The second coupling finger 674b may be provided with different height from the first coupling finger 674a. At this point, the height means the up-down direction based on FIG. 65. Since the second coupling finger 674b and the first coupling finger 674a have different heights from each other, the coupling head 673 may have an approximate tongs shape when viewed from the front side.

Furthermore, the second coupling finger 674b may surround the first driving arm 621 at a different position from the first coupling finger 674a based on the front-rear direction. In other words, the second coupling finger 674b may be coupled to the first driving arm 621 at a position relatively farther from the connection blocks 625 than the first coupling finger 674a. As described above, when the second coupling finger 674b may be coupled to the first driving arm 621 at the different position from the first coupling finger 674a, the number of coupling points between the wire cover 670 and the first driving arm 621 is increased and a coupling area is widened, so that a coupling force therebetween can be improved.

Although not shown in the drawings, the second coupling finger 674b may be fitted into a coupling groove recessed from the lower surface of the first driving arm 621. When the second coupling finger 674b is fitted into the coupling groove, the second coupling finger 674b is not relatively moved in the front-rear direction with respect to the first driving arm 621, and may remain fixed to a constant position.

The second coupling finger 674b may include a second coupling end 674b'. The second coupling end 674b' may extend from an end of the second coupling finger 674b in a direction different from a direction of the second coupling finger 674b extending from the cover body 671. In the embodiment, the second coupling end 674b' may protrude upwards. The second coupling end 674b' may surround an inner side surface of the first driving arm 621.

Eventually, the first coupling finger 674a surrounds the upper surface, the inner side surface, and the lower surface of the first driving arm 621, and the second coupling finger 674b surrounds the lower surface and the inner side surface of the first driving arm 621. Furthermore, the first coupling finger 674a and the second coupling finger 674b have vertical positions and longitudinal positions different from each other, so that the first coupling finger 674a and the second coupling finger 674b may be coupled to the first driving arm 621 at various positions and the assembly stability can be enhanced.

Meanwhile, as shown in FIG. 64, the cover body 671 may include a wire clip 677. The wire clip 677 may protrude from an edge of the guide channel 672 in a direction of covering the open surface of the guide channel 672. The wire clip 677 may prevent the wire harness W inserted in the guide channel 672 from being separated out of the guide channel 672.

At this point, a plurality of wire clips 677 may be disposed along the cover body 671. More precisely, the plurality of wire clips 677 may be disposed in the extending direction of the wire harness W. The plurality of wire clips 677 may be provided on an edge of the open surface of the guide channel 672.

Next, the door locking device 800 will be described with reference to FIGS. 66 to 79. The door locking device 800 may be disposed in the casing 100, 200. The door locking device 800 may maintain a locked state of the door 300 so that the door 300 is not arbitrarily opened. As another example, the door locking device 800 may be disposed at the door 300, not in the casing 100, 200.

FIG. 66 is a view showing a location in which the door locking device 800 is disposed. As shown in FIG. 66, a part of the door locking device 800 may be disposed between the lower end of the panel unit 500 and the upper end of the door 300. More precisely, the locking head 855 of the latch 850 constituting the door locking device 800 may have a height between the lower end of the panel unit 500 and the upper end of the door 300.

As described above, when a part of the door locking device 800 is disposed between the lower end of the panel unit 500 and the upper end of the door 300, the operator can manipulate the door locking device 800 between the lower end of the panel unit 500 and the upper end of the door 300. For example, when it is necessary to open the door 300 while the door 300 is locked, the operator disassembles a head fastener 857 assembled to the latch 850 of the door locking device 800, and slides the locking head 855 in one direction (direction of arrow in FIG. 66), so that the door may be turned to an unlocked state. This process will be described below.

At this point, the door locking device 800 may be exposed only through a gap between the lower end of the panel unit 500 and the upper end of the door 300. Therefore, since the head fastener 857, etc. is exposed when the user looks at the gap between the lower end of the panel unit 500 and the upper end of the door 300 at the front side, the door locking device 800 does not degrade the aesthetic of the cooking appliance.

Furthermore, as described below, when the head fastener 857 is separated, the user can insert a tool such as a driver through the gap between the lower end of the panel unit 500 and the upper end of the door 300. At this point, the gap between the lower end of the panel unit 500 and the upper end of the door 300 may form a guide path for inserting a kind of tool. Therefore, the user can more easily approach a tool towards the head fastener 857.

As shown in FIG. 67, an exposed state of the electric chamber S2 without the upper cover 260 is shown. The door locking device 800 may be fixed to the upper surface of the upper casing 240. The door locking device 800 may be disposed in front of the upper casing 240. Furthermore, the door locking device 800 may be disposed to be biased either side portion of the upper casing 240 based on the left-right direction. In the embodiment, the door locking device 800 is disposed close to a left end of the upper casing 240. Therefore, the door locking device 800 may be adjacent to each hinge module 600. As another example, the door locking device 800 may be disposed at a right end of the upper casing 240, or may be disposed at a center portion thereof.

A part of the door locking device 800, more precisely, the locking head 855 of the latch 850 may protrude forwards through a latch hole E1 formed in the front frame 280. The protruding locking head 855 may be caught by the fixing hole 379 formed in the door frame 370. One end of the locking head 855 may protrude downwards, so that the locking head 855 may be inserted into the fixing hole 379. For reference, FIG. 67 is a view showing a state in which the latch 850 is not rotated downwards and the locking head 855 is also caught by the fixing hole 379.

Since the locking head 855 of the door locking device 800 is caught by the door frame 370, the door 300 can be locked only when the door 300 is closed. As shown in FIG. 68, the view shows the door 300 before being completely closed, and since the fixing hole 379 of the door frame 370 is spaced apart from the locking head 855, the locking head 855 is in a state where the locking head cannot be caught by the fixing hole 379.

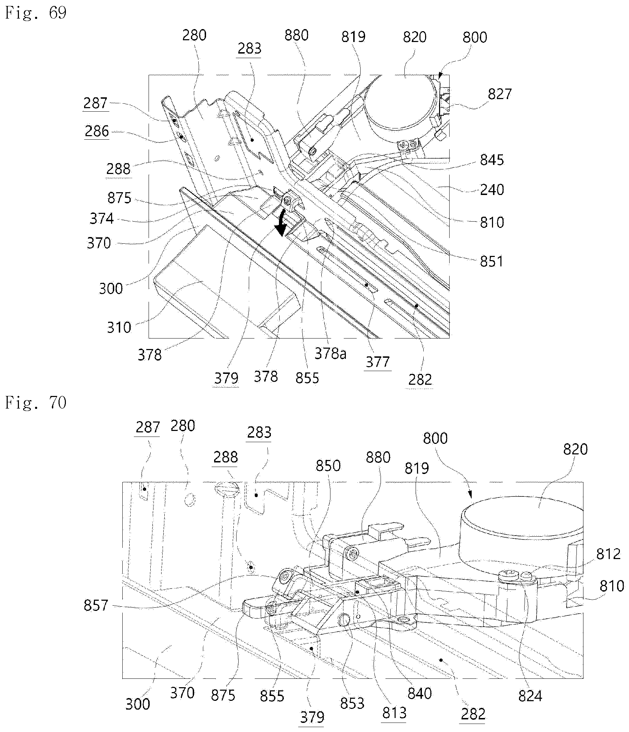

In this state, when the door 300 is closed in a direction of arrow of FIG. 68, the door 300 is turned to be a closed state as shown in FIG. 69. When the door 300 is closed as described above, the fixing hole 379 may be located on a rotation path of the locking head 855. When the locking head 855 is rotated in a direction of arrow of FIG. 69, the locking head 855 may be inserted into the fixing hole 379 to turn the door 300 into the locked state.

The door locking device 800 may be automatically operated through a power sources such as a motor, etc. The door locking device 800 may be turned to the locked state and the unlocked state while being automatically operated. The door locking device 800 may be connected to the main panel unit 700 to be controlled in operation by the main panel unit 700.

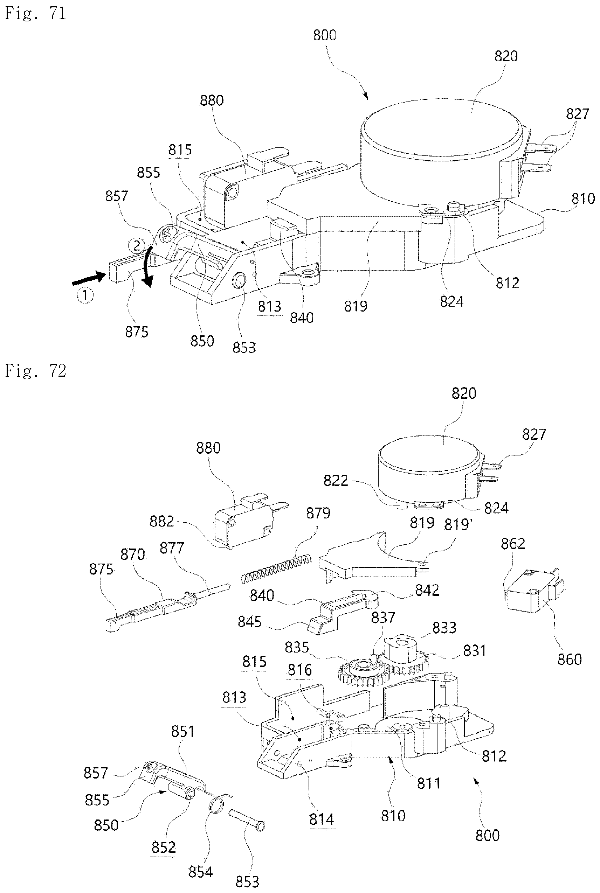

Referring to FIGS. 70 and 71, a frame of the door locking device 800 is formed of a locking housing 810. The locking housing 810 may be disposed in the upper casing 240. In the locking housing 810, components, such as a locking motor 820, a locking gear 831, 835, a driving slider 840, the latch 850, the closing button 870, a button spring 879, a locking sensor 860, a closing sensor 880, etc. to be described below, may be disposed.

At this point, when the closing button 870 is pressed by the door 300 rearwards (direction of arrow ①), the closing sensor 880 detects this movement, and the main panel unit 700 may operate the locking motor 820. As the locking motor 820 is operated, the latch 850 may be rotated downwards (direction of arrow ②) to turn the door 300 into the locked state.

When the components are installed in the locking housing 810, the latch 850 and the closing button 870 protrude forwards. Furthermore, the locking gear 831, 835 and the driving slider 840 may be shielded by a locking cover 819. As described above, with the components assembled in the locking housing 810, the door locking device 800 may be disposed in the upper casing 240.

As shown in FIG. 72, the locking housing 810 may have an installation space 811 having a depressed shape. A mounting protrusion 812 may be provided on an edge of the installation space 811. Each of a cover hole 819' of the locking cover 819 and a bracket hole 824 of the locking motor 820 may be fitted over the mounting protrusion 812. The mounting protrusion 812 may protrude from an upper surface of a wall structure enclosing the installation space 811.

As another example, the locking housing 810 may be omitted, or the locking housing 810 may be integrally provided in the upper space S2. In other words, the locking housing 810 may be a part of the upper casing 240 constituting the casing 100, 200. In this case, the locking gear 831, 835, the driving slider 840, the latch 850, etc. may be directly installed in the upper casing 240.

Furthermore, the locking motor 820 may be disposed above the wall structure enclosing the installation space 811. Accordingly, the locking gear 831, 835, the driving slider 840, the latch 850, etc. may be disposed below the locking motor 820.

A first operation path 813 and a second operation path 815 may be disposed in front of the installation space 811. The first operation path 813 and the second operation path 815 may be divided from each other. The latch 850 and the driving slider 840 may be disposed in the first operation path 813. The closing button 870 may be disposed in the second operation path 815.

The installation space 811 may be covered with the locking cover 819. The locking cover 819 may cover an upper portion of the installation space 811 to cover a part of the locking gear 831, 835 and a part of the driving slider 840. The locking cover 819 may be disposed at a different position from the locking motor 820 in order to avoid interference with the locking motor 820.

The locking motor 820 may be disposed at the upper portion of the installation space 811. The locking motor 820 may supply a rotation force to operate the door locking device 800. A terminal 827 of the locking motor 820 is connected to the main panel unit 700, so that power and an operation signal may be received from the main panel unit 700. Reference numeral 824 indicates the bracket hole 824 fitted over the mounting protrusion 812.

A motor shaft 822 may protrude at a lower portion of the locking motor 820. The motor shaft 822 may be rotated by a rotation force of the locking motor 820. The motor shaft 822 may be engaged with a first locking gear 831 of the locking gear 831, 835 to be described below to rotate the first locking gear 831.

The locking gear 831, 835 may be disposed in the installation space 811. The locking gear 831, 835 may be rotated by the locking motor 820 to operate the driving slider 840. The locking gear 831, 835 may be composed of a plurality of gears. The locking gear 831, 835 may include the first locking gear 831 engaged with the motor shaft 822 to be rotated, and a second locking gear 835 engaged with the first locking gear 831 to be rotated in a direction opposite to a direction of rotation of the first locking gear 831. The first locking gear 831 and the second locking gear 835 may be composed of spur gears disposed side by side.

At this point, a sensing protrusion 833 may be provided on the first locking gear 831. The sensing protrusion 833 may protrude from a surface of the first locking gear 831. The sensing protrusion 833 may operate the locking sensor 860. In a process of rotating the first locking gear 831, the sensing protrusion 833 presses the locking sensor 860 so that the locking sensor 860 detects a rotational state of the first locking gear 831. Reference numeral 862 indicates a button part 877 of the locking sensor 860 pressed by the sensing protrusion 833.

A driving protrusion 837 may be provided at the second locking gear 835. The driving protrusion 837 may protrude on a surface of the second locking gear 835. The driving protrusion 837 may be engaged with the driving slider 840 to linearly move the driving slider 840. In other words, rotational movement of the second locking gear 835 may be switched into linear movement of the driving slider 840. More precisely, the driving protrusion 837 is connected to a link end 842 of the driving slider 840 so as to operate the driving slider 840.

As another example, the locking gear 831, 835 may be composed of one gear. At this point, both of the sensing protrusion 833 and the driving protrusion 837 may be included in one gear. Furthermore, as another example, the locking gear 831, 835 may be composed of three or more gears. In this case, a plurality of gears may be engaged to each other to be rotated to implement a reduction function reducing a rotation speed of the locking motor 820.

The driving slider 840 may be connected to the second locking gear 835. The driving slider 840 may be disposed on the first operation path 813. The driving slider 840 may be linearly moved in the front-rear direction along the first operation path 813. A first end of the driving slider 840 is connected to the second locking gear 835, and a second end thereof may selectively interfere with the latch 850 to rotate the latch 850.

The link end 842 may be provided in the first end of the driving slider 840. The link end 842 may be disposed above the second locking gear 835 to partially cover the second locking gear 835. Although not shown in the drawing, a lower surface of the link end 842 may have a link slot into which the driving protrusion 837 of the second locking gear 835 is fitted. The driving protrusion 837 may be moved along the link slot of a circular arc to linearly move the driving slider 840.

A driving head 845 may be provided on the second end of the driving slider 840. The driving head 845 may interfere with the latch 850 in a linear movement process of the driving slider 840. More specifically, the driving head 845 may dig under a lower portion of an interference end 851 of the latch 850 to lift one side portion of the latch 850. When one side portion of the latch 850 is lifted, another side portion is lowered, and the locking head 855 may be provided at the lowered portion.

To this end, a surface of the driving head 845 may be a curved surface or inclined surface. In other words, the driving head 845 may have a height gradually lowered in a direction towards an end thereof. Accordingly, the driving head 845 may more easily dig under the lower portion of the interference end 851 of the latch 850.

As shown in FIG. 72, the driving head 845 and the link end 842 of the driving slider 840 may have heights different from each other. The driving head 845 may be provided relatively lower than the link end 842. The link end 842 is disposed above the second locking gear 835, so that the link end 842 may be provided higher than the driving head 845.

The latch 850 may be disposed in front of the driving slider 840. A part of the latch 850 may be rotatably provided in the first operation path 813. When the latch 850 is rotated, in this process, the locking head 855 provided at a front portion of the latch 850 may face downwards or the locking head 855 may be lifted upwards.

The latch 850 may be rotated in a first direction to be caught by the fixing hole 379. Furthermore, the latch 850 may be rotated in a second direction opposite to the first direction to be separated from the fixing hole 379.

In the embodiment, the latch 850 may be disposed higher than the locking button 870. The locking button 870 may be pressed by the pushing surface 378a of the locking body 378 formed in the door 300 at a lower position than the latch 850.

The interference end 851 may be provided at one end of the latch 850. The interference end 851 may serve as a portion that interferes with the driving slider 840 and is lifted by the driving slider 840. The driving head 845 of the driving slider 840 may lift the lower portion of the interference end 851.

A latch rotation shaft 853 may be connected to a rotation groove 852 of the latch 850. The latch rotation shaft 853 is fitted into a latch rotation hole 814 formed in the locking housing 810 to serve as a rotational center shaft of the latch 850. While the rotation groove 852 of the latch 850 is disposed in the first operation path 813, the latch rotation shaft 853 may be fitted into the rotation groove 852 by being inserted into the latch rotation hole 814 from the external space of the first operation path 813.

The latch 850 may include a return spring 854. The return spring 854 may be a torsion spring fitted over the latch rotation shaft 853. The return spring 854 may supply a rotation force to the latch 850 so that the latch 850 is rotated in a direction in which the locking head 855 of the latch 850 is lifted, i.e., upwards. Therefore, when the driving slider 840 interferes with the latch 850 to prevent the latch 850 from lowering, the locking head 855 of the latch 850 is in an unlocked state that is a lifted state.

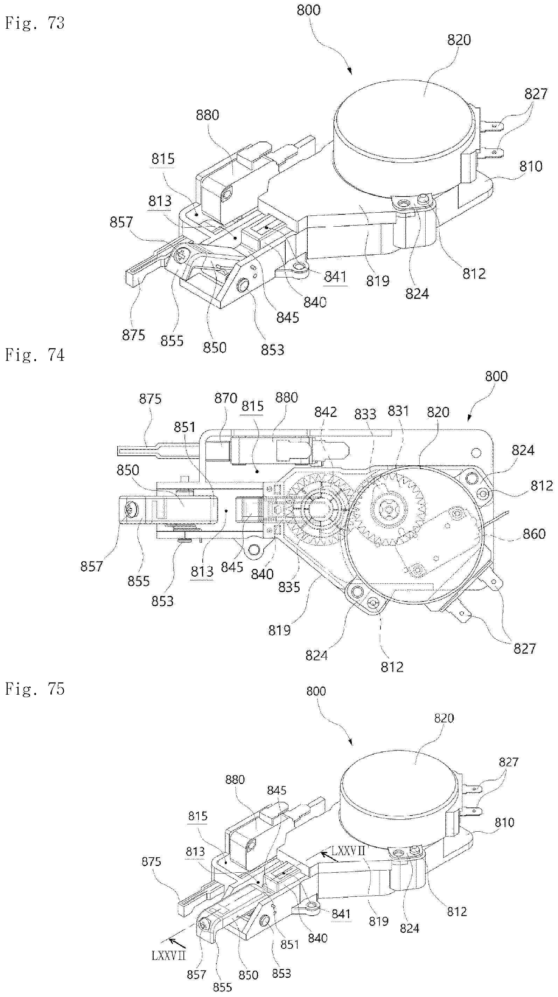

FIGS. 73 and 74 are views showing a lifted state of the locking head 855, i.e., the door locking device 800 in the unlocked state. As shown in the drawings, when the driving slider 840 retreats rearwards, the locking head 855, i.e., the front portion of the latch 850, may be lifted. Since the return spring 854 is connected to the latch 850, when the driving slider 840 does not lift the interference end 851 of the latch 850, the door locking device may be in the unlocked state fundamentally.

As shown in FIG. 74, in the unlocked state, the sensing protrusion 833 of the first locking gear 831 does not press the locking sensor 860. Simultaneously, the driving protrusion 837 (not shown in FIG. 74) of the second locking gear 835 is moved rearwards so that the link end 842 of the driving slider 840 is in the rearward moved state. Furthermore, the driving head 845 of the driving slider 840 also retreats so as to be spaced apart from the interference end 851 of the latch 850.

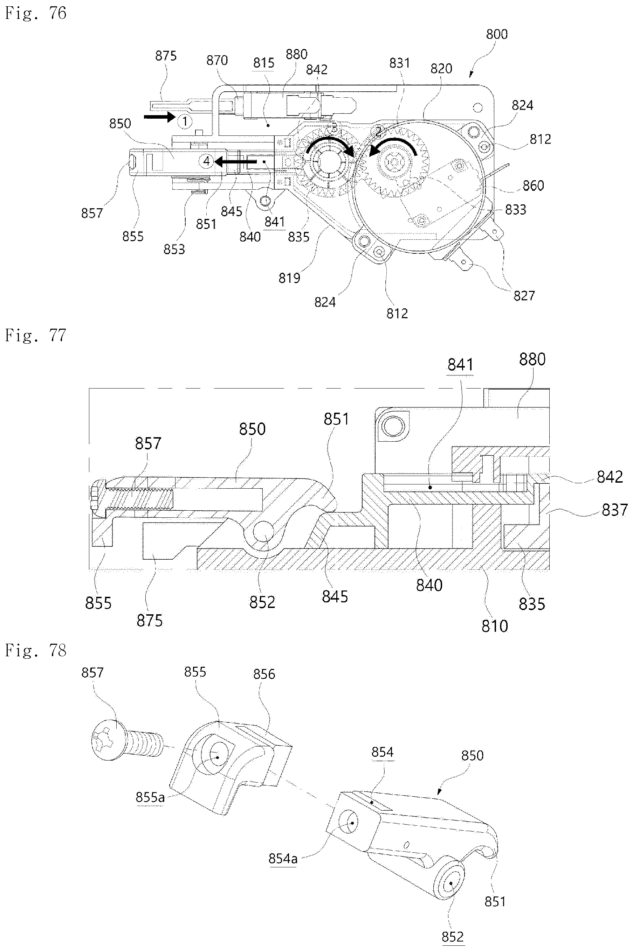

FIGS. 75 and 76 are views showing a lowered state of the locking head 855, i.e., the door locking device 800 in the locked state. As shown in the drawings, the driving slider 840 is moved forwards, the locking head 855, i.e., the front portion of the latch 850 is lowered. When the driving slider 840 is moved forwards while enduring the elastic force of the return spring 854, the driving slider 840 may lift the interference end 851 of the latch 850 to be in the locked state.

As shown in FIG. 76, when the closing button 870 retreats (direction of arrow ①) while being pressed by the door 300, the closing sensor 880 may detect this movement. A signal of the closing sensor 880 is transmitted to the main panel unit 700, so that the main panel unit 700 may operate the locking motor 820.

When the locking motor 820 is operated, the locking motor 820 may rotate the first locking gear 831 in a first direction (direction of arrow ②). Furthermore, the second locking gear 835 engaged with the first locking gear 831 may be rotated in a second direction (direction of arrow ③). When the second locking gear 835 is rotated, the driving protrusion 837 (not shown in FIG. 76) of the second locking gear 835 may be moved forwards so that the link end 842 of the driving slider 840 may also be moved forwards (direction of arrow ④).

Simultaneously, the driving head 845 of the driving slider 840 is also moved forwards to dig under the interference end 851 of the latch 850. Accordingly, the locking head 855 disposed opposite to the interference end 851 may be rotated downwards. Furthermore, the locking head 855 may be caught by the fixing hole 379 (referring to FIG. 70).

In this state, the sensing protrusion 833 of the first locking gear 831 may press the locking sensor 860 so that the locking sensor 860 may detect the locked state. In a process of rotating the first locking gear 831, the sensing protrusion 833 presses the locking sensor 860 so that the locking sensor 860 detects the rotational state of the first locking gear 831. The main panel unit 700 may detect this locked state, and may stop operation of the locking motor 820. In the embodiment, when the first locking gear 831 is rotated once, the sensing protrusion 833 presses the locking sensor 860. In other words, when the first locking gear 831 is rotated once, the sensing protrusion 833 is returned to an original position thereof to operate the locking sensor 860.

Meanwhile, as shown in FIGS. 77 and 78, the locking head 855 may be provided at the opposite side to the interference end 851 with the rotation groove 852 as the center. The locking head 855 may be rotated in a reverse direction of a rotation direction of the interference end 851. In other words, when the interference end 851 is lifted by the driving head 845, the locking head 855 is lowered downwards. On the other hand, when the interference end 851 is lowered downwards by the return spring 854, the locking head 855 is lifted upwards.

At this point, the locking head 855 may be separated from one end portion of the latch 850. The locking head 855 may be removably assembled to the latch 850 by the head fastener 857. Furthermore, when the head fastener 857 is unscrewed from the latch 850, the locking head 855 may be separated from the latch 850.

As shown in FIG. 78, a latch groove 854 may be formed at the front portion of the latch 850. A head coupling part 856 of the locking head 855 may be fitted into the latch groove 854. The latch groove 854 and the head coupling part 856 may be formed in a direction parallel to the rotation shaft of the latch 850, i.e., a direction parallel to a direction of the rotation groove 852.

When the head coupling part 856 is fitted into the latch groove 854, a first release hole 854a formed in the end portion of the latch 850 and a second release hole 855a formed in the locking head 855 may be connected to each other. The head fastener 857 may be fastened to the first release hole 854a and the second release hole 855a connected to each other as described above. When the head fastener 857 is a bolt, the head fastener 857 may be rotated to be tightened by the first release hole 854a and the second release hole 855a.

On the other hand, when the head fastener 857 is separated, the locking head 855 may be disassembled from the latch 850. After the head fastener 857 is separated, when the locking head 855 is moved in a direction in which the head coupling part 856 is removed from the latch groove 854, the locking head 855 is separated from the latch 850.

The locking head 855 may be separated from the door locking device 800 in emergency. For example, the cooking appliance is operated abnormally or opening of the door 300 is impossible due to power failure during operation of the cooking appliance, it is necessary to arbitrarily open the door 300. At this point, the user unscrews the head fastener 857 and separates the locking head 855 to turn the door 300 into the unlocked state.

As shown in FIG. 79, when the head fastener 857 is separated forwards (direction of arrow ①), the locking head 855 may be separated leftwards (direction of arrow ②). At this point, when the locking head 855 is caught by the fixing hole 379 of the door frame 370, the door 300 is turned into the locked state, and when the locking head 855 is separated from the door locking device 800, the door 300 may be naturally turned into the unlocked state.

The fixing hole 379 of the door frame 370 may serve as a portion to which the locking head 855 is caught, and simultaneously, as a path through which the locking head 855 is moved after separation. FIG. 79 is a view showing the locking head 855 that is separated from the latch 850 and then is moved leftwards along the fixing hole 379. Therefore, the user can unscrew the head fastener 857 and then easily separate the locking head 855, thereby lowering a risk of losing the separated locking head 855.

At this point, the head fastener 857 may be in forward-exposed state. As shown in FIG. 71, the head fastener 857 may be exposed forwards between the upper end of the door 300 and the lower end of the panel unit 500. The height between the upper end of the door 300 and the lower end of the panel unit 500 is equal to or wider than a diameter of the head fastener 857, so that when the user does not look at the gap from the front side, the head fastener 857 may not be visible. When the head fastener 857 is exposed in a state in which the user looks at the door 300 from the front side, the user can unscrew the head fastener 857 by using a tool such as a driver. Furthermore, when the locking head 855 is moved leftwards, the door is released from the locked state in which the door locking device 800 catches and locks the door 300, and the door can be turned into the unlocked state.

Referring to FIGS. 71 and 72, the closing button 870 may be provided in the door locking device 800. The closing button 870 is provided to detect whether the door 300 is in a closed state or an opened state. The closing button 870 is disposed on the second operation path 815 of the locking housing 810, and may be moved in the front-rear direction.

A part of the closing button 870 may protrude forwards. A front portion of the closing button 870 may protrude forwards through a bottom hole E2 of the front frame 280 (referring to FIG. 67). The front portion of the protruding closing button 870 may be pressed by the rear surface of the door 300. When the front end of the closing button 870 retreats by being pressed by the door 300, a second end of the closing button 870 presses the closing sensor 880 so that the closing sensor 870 can detect closing of the door 300. For reference, FIG. 68 is a view showing a state before a pressed end 875 that is the front portion of the closing button 870 is pressed by the pushing surface 378a of the locking body 378, and FIG. 69 is a view showing a state in which the pressed end 875 that is the front portion of the closing button 870 retreats by being pressed by the pushing surface 378a of the locking body 378.

At this point, the closing button 870 may be disposed a further outer portion of the casing 100, 200 based on the left-right width direction of the casing 100, 200 than the latch 850. In the embodiment, the closing button 870 is disposed at a left side of the latch 850. Accordingly, the closing button 870 may be disposed at a position relatively farther from the user's view.

The closing button 870 may have a bar shape extending long in one direction. The pressed end 875 pressed by the door 300 may be provided at the front portion of the closing button 870. The pressed end 875 may have a wide front surface pressed by the door 300. Furthermore, at a rear portion of the closing button 870 may have the button part 877 pressing the closing sensor 880.

Furthermore, the button spring 879 may be inserted into the button part 877. The button spring 879 may supply an elastic force that allows the closing button 870 to be moved forwards, to the closing button 870. A first end of the button spring 879 is caught by and fixed to the button part 877, and a second end thereof may be supported by the locking housing 810.

Reference numeral 882 indicates a closing detection button of the closing sensor 880 pressed by the button part 877. The closing detection button 882 may be pressed by an end of the button part 877, but may be pressed by a step difference provided at a front end of the button part 877. As shown in FIG. 76, a direction in which the closing button 870 retreats by being pressed by the door 300 is marked with arrow ①.

Next, the lighting module 900 will be described with reference to FIGS. 80 to 87. The lighting module 900 emits light into the cavity S1, so that the user can observe the internal space of the cavity S1. The lighting module 900 may be disposed in the casing 100, 200. In the embodiment, the lighting module 900 may be disposed in the electric chamber S2.

The lighting module 900 may include the lighting guide 910 disposed in the lighting coupling part 255 of the electric chamber S2, and a lighting device 920 surrounded by the lighting guide 910. The lighting guide 910 may surround the lighting device 920, and may prevent external heat from directly affecting the lighting device 920.

The lighting guide 910 may constitute a part of the lighting module 900. The lighting guide 910 may be understood as a casing of the lighting module 900.

As shown in FIG. 80, the lighting module 900 may be disposed in the upper casing 240. At this point, the lighting module 900 may be directly disposed in the upper casing 240, or may be disposed in the guide duct 250 coupled to the upper casing 240. In the embodiment, the lighting module 900 may be disposed in the lighting coupling part 255 extending through the guide duct 250 to the upper casing 240.

As described above, when the lighting module 900 is disposed in the guide duct 250, the lighting module 900 may be cooled by air passing through the internal space of the guide duct 250, i.e., the third air flow path AC3 (air discharge glow path). Since the lighting module 900 is disposed towards the cavity S1, the lighting module 900 may be affected by high temperature in the cavity S1, but may be continuously cooled by air in the guide duct 250.

The lighting module 900 may be disposed in the guide part 250b of the guide duct 250. More specifically, the lighting module 900 may be disposed on the imaginary extension line passing through the center portion of the cooling fan module 410. In other words, it may be understood that both of the cooling fan module 410 and the lighting module 900 are disposed on the center portion in the left-right width direction of the upper casing 240, and as a result, which are disposed on the center portion in the left-right width direction of the cooking appliance.

As described above, when the lighting module 900 is disposed on the center portion in the left-right width direction of the upper casing 240, the lighting module 900 may emit light toward the center portion of the cavity S1. When light is emitted towards the center portion of the cavity S1, light may be evenly dispersed so that neither side of the cavity S1 is lighter or darker, and the user can observe the object to be cooked inside the cavity S1 more clearly.

At this point, the lighting module 900 may be disposed obliquely to have a predetermined angle with respect to the imaginary extension line passing through the center portion of the cooling fan module 410. An angle between the imaginary extension line passing through the center portion of the cooling fan module 410 and an imaginary extension line extending in a longitudinal direction (inclination direction based on FIG. 80) of the lighting module 900 may be referred to as K3. As described above, when the lighting module 900 is disposed obliquely, resistance generated when air discharged along the guide duct 250 passes through the left and right sides of the lighting module 900 can be reduced.

Preferably, the lighting coupling part 255 to which the lighting module 900 is mounted extends in an inclination direction between 20 degrees and 40 degrees with respect to the imaginary extension line passing through the center portion of the cooling fan module 410. Then, reduction of a flow rate of air passing through the guide duct 250 due to existence of the lighting coupling part 255 can be minimized. Furthermore, when the lighting coupling part 255 is disposed in this inclination direction, deviation of the amount of discharge of air for each position in the exhaust port 282 can be reduced.

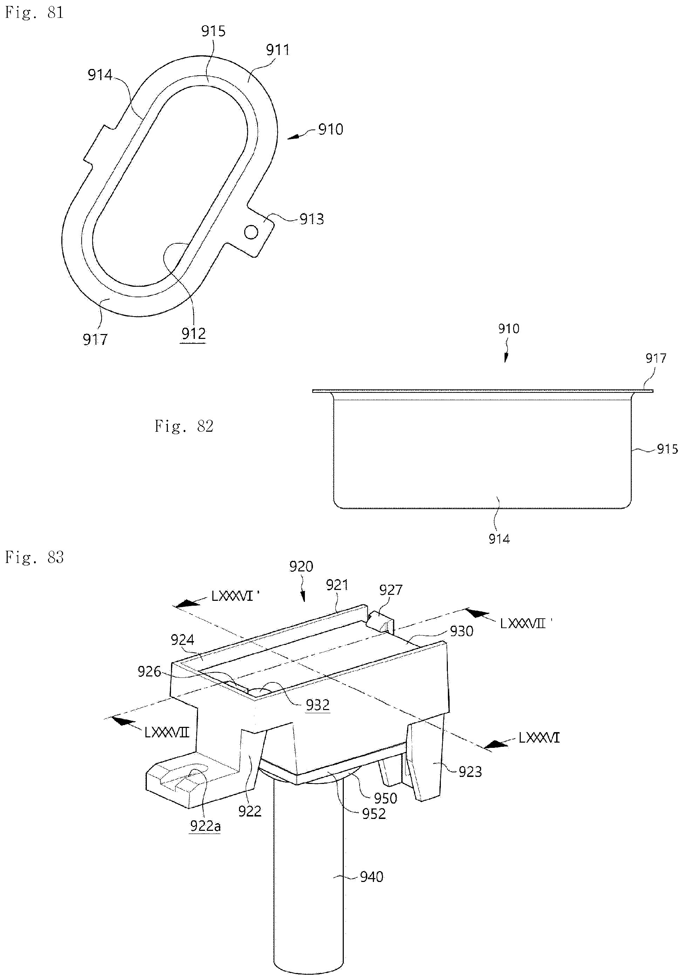

FIGS. 81 and 82 are views showing a structure of the lighting guide 910 of the lighting module 900 fixed to the lighting coupling part 255. A frame of the lighting guide 910 may be formed of a guide body 911. The guide body 911 may have a 3-dimentional structure having a predetermined height. The guide body 911 may be disposed in the guide duct 250, i.e., in the third air flow path AC3.

More precisely, the lighting guide 910 may be disposed at a position spaced forwards from the cooling fan module 410 to face the door 300. In other words, the lighting guide 910 is disposed relatively closer to the front side of the upper space S2 than the cooling fan module 410.

Furthermore, the cooling fan module 410 may be disposed in the rear side based on the center portion of the upper space S2, and the lighting guide 910 may be disposed in the front side based on the center portion of the upper space S2.

The guide body 911 may extend longer in the up-down direction than in the left-right width direction. Furthermore, the guide body 911 may have relatively short upper and lower portions with curved structures. Accordingly, the lighting guide 910 may have an approximately oval planar structure. This structure of the lighting guide 910 may induce air flowing inside the third air flow path AC3 to naturally flow into opposite sides of the lighting guide 910.

At this point, the lighting guide 910 may be disposed to be inclined in a rotation direction (direction of arrow based on FIG. 80) of the fan blade 417 based on a centered line (vertically extending line in FIG. 80) of the cooling fan module 410 extending in the front-rear direction. Then, flow resistance of air due to the lighting guide 910 can be reduced. In other words, as the lighting guide 910 is disposed side by side with a discharge direction of air, the flow resistance of air can be reduced.

In other words, the lighting guide 910 may be disposed in a direction facing the discharge direction of air discharged from the cooling fan module 410.

Preferably, the lighting guide 910 may be formed to be inclined at an angle between 20° and 40° in the rotation direction of the fan blade 417 based on the centered line of the cooling fan module 410 extending in the front-rear direction. In the embodiment, since the fan blade 417 is rotated clockwise, the lighting guide 910 may be also disposed in a clockwise rotated state. When the fan blade 417 is rotated counterclockwise, the lighting guide 910 may be also disposed in a counterclockwise rotated state.

Table 1 below shows a flow rate (unit: CMM, Cubic Meter per Minute) according to an inclination angle (unit: °) of the lighting guide 910, and pressure standard deviation. At this point, the flow rate indicates a flow rate of air discharged by the cooling fan module 410 and discharged to the exhaust port 282. Furthermore, the pressure standard deviation indicates standard deviation of pressure due to air discharged from each of a left end, a center portion, a right end of the exhaust port 282.

**[Table 1]**

| inclination angle | flow rate | pressure standard deviation |
|---|---|---|
| 5 | 1.55 | 3.14 |
| 10 | 1.49 | 2.99 |
| 15 | 1.68 | 1.54 |
| 20 | 2.21 | 1.15 |
| 25 | 2.29 | 1.18 |
| 30 | 2.24 | 1.14 |
| 35 | 2.25 | 1.21 |
| 40 | 2.22 | 1.25 |
| 45 | 1.71 | 2.02 |
| 50 | 1.54 | 2.89 |
| 55 | 1.34 | 3.55 |
| 60 | 1.31 | 3.78 |
| 65 | 1.19 | 3.91 |
| 70 | 1.23 | 4.22 |

As shown in Table 1, when the inclination angle of the lighting guide 910 is between 5° and 15°, the flow rate is small and the pressure standard deviation is large. Furthermore, when the inclination angle of the lighting guide 910 is in a section between 45° and 70°, the flow rate is reduced again and the pressure standard deviation increases.

When the lighting guide 910 is formed to be inclined at an angle between 20° and 40° in the rotation direction of the fan blade 417 based on the centered line of the cooling fan module 410 extending in the front-rear direction, the flow rate is relatively large and the pressure standard deviation is relatively small. Therefore, it may be preferable that the inclination angle of the lighting guide 910 is between 20° and 40°.

As described above, when the inclination angle of the lighting guide 910 is between 20° and 40°, the inclination angle of the lighting guide 910 may be equal to a discharge direction of air discharged to the outlet 256a of the discharge space 256. As described above, the discharge space 256 may be gradually widened towards the outlet 256a of the discharge space 256, and accordingly, the discharge direction of air discharged to the outlet 256a of the discharge space 256 along the inner wall of the body part 250a may be formed in parallel to an inclination direction of the fan coupling portion 254.

At this point, the extending line extending in the longitudinal direction of the lighting guide 910 may pass through the body part 250a of the guide duct 250 in which the cooling fan module 410 is disposed. Simultaneously, the extending line extending in the longitudinal direction of the lighting guide 910 may extend to a position deviated from the fan blade 417. The extending line extending in the longitudinal direction of the lighting guide 910 may pass through the discharge space 256. Then, the lighting guide 910 does not directly face the fan blade 417, but may face the discharge direction of air.

The lighting guide 910 may be disposed more closer to a front end of the upper space S2 than the cooling fan module 410. In other words, the lighting guide 910 is disposed closer to the front frame 280 facing the door 300, than the cooling fan module 410. Accordingly, a sufficient space for air flow may be formed between the lighting guide 910 and the cooling fan module 410.

At this point, the lighting guide 910 and the cooling fan module 410 may be disposed on a centered line of the electric chamber S2 extending in the front-rear direction. In other words, the lighting guide 910 and the cooling fan module 410 may be disposed on a center portion of a left-right width direction of the electric chamber S2. Then, air discharged by the cooling fan module 410 may evenly flow forwards of the cooking chamber S2, and light emitted by the lighting module 900 may be evenly transmitted to the entire internal space of the cavity S1.

A guide space 912 may be formed in a center portion of the lighting guide 910. The guide space 912 may be formed by vertically penetrating the lighting guide 910. An upper portion of the guide space 912 may open towards the internal space of the electric chamber S2, and a lower portion of the guide space 912 may be open towards the cavity S1. A lighting housing 921, a lighting substrate 930, etc. to be described below may be disposed in the guide space 912.

The guide space 912 may have a long hole shape. At this point, the long hole shape means that a front-rear depth direction is longer than a left-right width direction. The left-right width direction indicates the left-right direction of the cooking appliance, and means a Y-axis direction in FIG. 1. Furthermore, the front-rear depth direction is defined based on the cooking appliance viewed from the front side, and means an X-axis direction in FIG. 1. The guide space 912 may cover a side surface of the lighting device 920 with a predetermined clearance.

The upper end of the lighting guide 910 may be seated on the upper surface of the guide duct 250. The lower end of the lighting guide 910 may be connected to the bottom of the third air flow path AC3, i.e., the air discharge flow path. Then, the lighting guide 910 may be disposed over the entire height direction of the third air flow path AC3, and air does not pass through the upper portion or the lower portion of the lighting guide 910, and air may pass through a side surface of the lighting guide 910.

A guide fixation piece 913 may be provided on the upper end of the lighting guide 910. The guide fixation piece 913 is provided to fasten the lighting guide 910 to the guide duct 250, and the guide fixation piece 913 may be assembled to the upper surface of the guide duct 250 by using a separate fastener.

A guide step difference (no reference numeral assigned) may be provided at an entrance of the guide space 912. The guide step difference 914 may have a shape of which a width is gradually narrowed from a locking rib 917 towards the internal side of the guide space 912. The guide step difference 914 may serve as a guide when the lighting device 920 is inserted into the guide space 912, and may increase peripheral strength of the locking rib 917.

A flat surface part 914 may be provided at a side surface of the guide body 911. The flat surface part 914 may be provided at each of opposite surfaces of the guide body 911. When viewed from a plan as shown in FIG. 81, the flat surface part 914 may form a linear section on the side surface of the guide body 911. The guide space 912 may have an entirely long hole shape by the flat surface part 914.

Among surfaces of the lighting guide 910, a part of or the entire surface facing the cooling fan module 410 may be a curved surface. In the embodiment, a curved portion 915 may be provided on a front surface of the guide body 911 facing an upper side of the guide duct 250, i.e., the cooling fan module 410. More precisely, the curved portion 915 may face the outlet 256a of the discharge space 256 through which air is discharged by the cooling fan module 410. The curved portion 915 may connect a pair of flat surface parts 914 to each other. The curved portion 915 may be formed such that a surface of the guide duct 250 disposed in the guide duct 250 is formed in a curved surface.

The curved portion 915 makes the surface of the guide duct 250 into a streamlined shape, so that a flow of air passing through the third air flow path AC3 may be smooth. When viewed from a plan as shown in FIG. 81, the curved portion 915 may have an approximate semi-circular structure. In the embodiment, the curved portion 915 may be provided at each of a front portion and a rear portion of the lighting guide 910. On the other hand, the curved portion 915 may be provided only at the front portion of the lighting guide 910.

The locking rib 917 may be provided at an edge of the upper end of the lighting guide 910. The locking rib 917 may protrude in a direction widening a width of the lighting guide 910. The locking rib 917 may allow the lighting guide 910 to be caught and fixed to the lighting coupling part 255. The locking rib 917 may be seated on an upper end of the lighting coupling part 255.

When the lighting guide 910 is disposed in the lighting coupling part 255, the locking rib 917 is caught by an upper edge of the lighting coupling part 255, and the guide body 911 may protrude towards the upper surface of the upper casing 240. In other words, the guide body 911 may be disposed in the third air flow path AC3 corresponding to the internal space of the guide duct 250.

FIG. 83 is a view showing the lighting device 920. The lighting device 920 may be provided in the guide space 912 of the lighting guide 910. The lighting device 920 may be connected to the main panel unit 700 to emit light into the cavity S1. The lighting device 920 may include the lighting substrate 930 electrically connected to the main panel unit 700 and including a light source 935, and the lighting substrate 930 may be exposed towards the electric chamber S2.

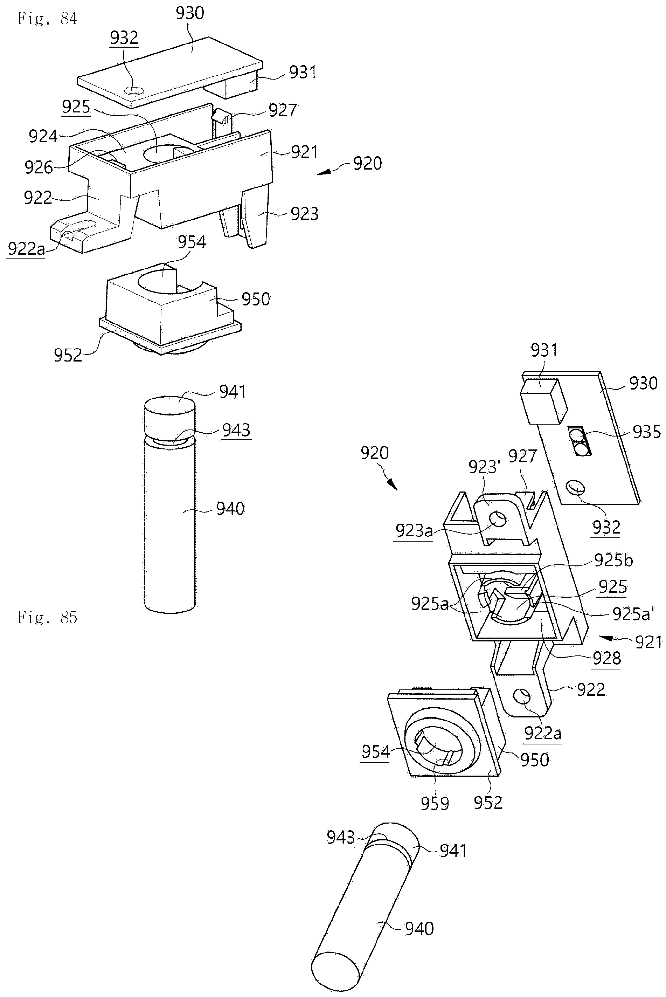

Specifically, a frame of the lighting device 920 may be formed of the lighting housing 921. As shown in FIGS. 84 to 85, the lighting housing 921 may have an approximately hexahedral shape. An upper portion of the lighting housing 921may be surrounded by the guide space 912 of the lighting guide 910, and a part of a lower portion thereof may be fixed to the upper casing 240.

The lighting housing 921 may include a part for fixing the lighting housing 921. In the embodiment, a lighting fixing bracket 922 and an insertion body 923 may serve to fix the lighting housing 921 to the lighting coupling part 255. The lighting fixing bracket 922 and the insertion body 923 may protrude downwards of the lighting housing 921. Furthermore, the lighting fixing bracket 922 and the insertion body 923 may be provided at the opposite ends of the lighting housing 921 to be spaced apart from each other.

The lighting fixing bracket 922 has a lighting fixing hole 922a into which a fastener is assembled, and may be fixed to the upper casing 240 by the fastener such as a screw. The lighting fixing bracket 922 may extend in an approximately L-shape from the lighting housing 921.

The insertion body 923 may be inserted into the upper casing 240. The insertion body 923 may be fixed to the upper casing 240 together with the lighting fixing bracket 922, thereby preventing the lighting housing 921 from being relatively rotated with respect to the upper casing 240. Furthermore, before the lighting fixing bracket 922 is fixed with a fastener, the insertion body 923 may temporarily fix the lighting housing 921 to the upper casing 240. In the embodiment, the insertion body 923 may protrude further downwards than the lighting fixing bracket 922.

FIG. 85 is a view showing another embodiment different from FIG. 84, and as shown in the drawing, the insertion body 923 is omitted from the lighting housing 921, and a pair of the lighting fixing brackets 922 and 923' may be provided therein. The pair of lighting fixing brackets 922 and 923' may include lighting fixing holes 922a and 923a, respectively, and may be fixed to the upper casing 240 by using different fasteners.

A light source mounting part 924 may be provided at the upper portion of the lighting housing 921. The light source mounting part 924 may be formed in a shape depressed on the upper portion of the lighting housing 921. The lighting substrate 930 to be described below may be disposed in the lighting housing 921. Furthermore, the lighting housing 921 includes a first substrate fixing part 926 and a second substrate fixing part 927, and may fix the lighting substrate 930.

A lighting hole 925 may penetrate the lighting housing 921. The lighting hole 925 may vertically penetrate the lighting housing 921. The lighting hole 925 may serve as a passage through which the light source 935 of the lighting substrate 930 passes. The lighting hole 925 may have a circular structure. As shown in FIG. 84, one end of the lighting hole 925 may be open towards the light source mounting part 924.

Referring to FIG. 85, a guide holder 925a may be provided on edge of the lighting hole 925. The guide holder 925a may enclose the lighting hole 925, and may protrude downwards, i.e., towards the cavity S1. The guide holder 925a may hold and fix a part of the light guide 940 connected to the light source 935. To this end, a hook end 925a' may protrude on an end of the guide holder 925a.

The guide holder 925a may be composed of a plurality of guide holders 925a enclosing the lighting hole 925. The plurality of guide holders 925a may be disposed to be spaced apart from each other and may be elastically deformed. The guide holder 925a has a cantilever structure, so that the guide hole 925a may be naturally elastically deformed in a coupling process to the light guide 940 and then recovered after being coupled to the light guide 940.

More precisely, a first end of the guide holder 925a is connected to a lower portion of the light source mounting part 924, and a second end of the guide holder 925a may be a free end extending downwards.

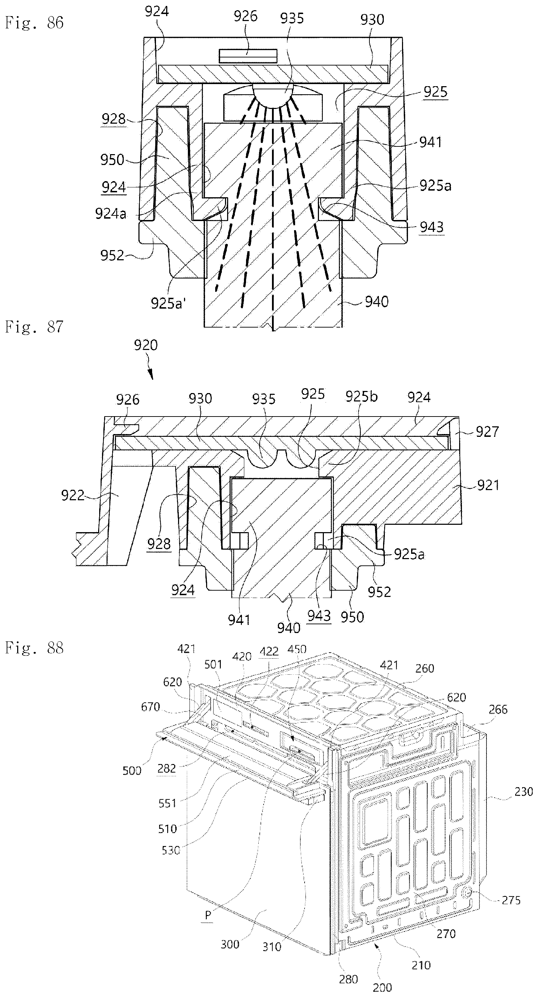

The guide holder 925a may be composed of a plurality of guide holders 925a, and some of the guide holders 925a may include hook ends 925a', respectively. As shown in FIG. 85, among a total of four guide holders 925a, two guide holders 925a may have hook ends 925a', respectively, but remaining two guide holders 925a does not include the hook end 925a'. As shown in FIG. 86, the hook end 925a' may be fitted into a locking groove 943 of the light guide 940. Meanwhile, as shown in FIG. 87, the two guide holders 925a without the hook end 925a' may cover the locking groove 943.

The hook end 925a', i.e., an end of the guide holder 925a may protrude towards a center portion of the lighting hole 925. The hook end 925a' protruding as described above may be inserted into the locking groove 943 of the light guide 940 to be described below. When the hook end 925a', i.e., an end of the guide holder 925a is fitted into the locking groove 943, the light guide 940 may not be separated downwards, i.e., towards the cavity S1 and may be fixed.

The upper portion of the lighting housing 921 may include the first substrate fixing part 926 and the second substrate fixing part 927. The first substrate fixing part 926 and the second substrate fixing part 927 may hold and fix edges of the lighting substrate 930. The first substrate fixing part 926 and the second substrate fixing part 927 may be provided at portions on opposite sides of the lighting hole 925 with the lighting hole 925 as the center.

The first substrate fixing part 926 may protrude from an inner surface of the lighting housing 921 towards a center portion thereof, thereby having a structure of covering a part of an upper surface of the lighting substrate 930. Furthermore, the second substrate fixing part 927 has a cantilever structure, and may hold and fix the upper surface of the lighting substrate 930. The lighting substrate 930 may be configured such that one portion is first held by the first substrate fixing part 926 and another portion is held by the second substrate fixing part 927.

As shown in FIGS. 84 to 87, the lighting hole 925 may include the upper supporting part 925a. The upper supporting part 925a may protrude from an inner surface of the lighting hole 925 in a direction reducing a diameter of the lighting hole 925. The upper supporting part 925a is in contact with an upper surface of the light guide 940, thereby supporting the upper surface of the light guide 940. When the upper surface of the light guide 940 is supported by the upper supporting part 925a, the light guide 940 is prevented from being further moved upwards, i.e., towards the lighting substrate 930. Then, the upper surface of the light guide 940 may maintain a constant distance from the light source 935 of the lighting substrate 930.

As shown in FIG. 87, the upper supporting part 925a may support the upper surface of the light guide 940. A plurality of upper supporting parts 925a may be disposed in the lighting hole 925. The plurality of upper supporting parts 925a may be disposed to enclose an inner circumferential surface of the lighting hole 925. The plurality of upper supporting parts 925a supports the upper portion of the light guide 940, thereby preventing the light guide 940 to be biased in one direction.

More precisely, the upper supporting part 925a may be provided at a position higher than a position of the guide holder 925a. Furthermore, the upper supporting part 925a may be disposed to be overlapped on the upper surface of the light guide 940. Then, the upper supporting part 925a may be disposed between the lighting substrate 930 with the light source 935 and the upper surface of the light guide 940.

As shown in FIG. 85, a sealing space 928 may be formed outside the guide holder 925a. The sealing space 928 may be formed between a surface of the guide holder 925a and an inner wall of the lighting housing 921. The sealing space 928 may open downwards, i.e., towards the cavity S1. A sealing block 950 to be described below may be inserted into the sealing space 928. The sealing block 950 may be inserted into the sealing space 928 so as to pressurize the guide holder 925a towards the center portion of the lighting hole 925, i.e., towards the light guide 940.

The lighting substrate 930 may be disposed above the lighting housing 921. The lighting substrate 930 may include the light source 935 emitting light. The lighting substrate 930 may include the light source 935 so as to emit light downwards, i.e., towards the cavity S1, through the lighting hole 925. The light source 935 may include a plurality of light sources. In the embodiment, the light source 935 may be composed of a light emitting diode (LED). As another example, the light source 935 may be composed of a halogen lamp.

The lighting substrate 930 may include a light source component 931. The light source component 931 may be an electronic component such as a condenser. The light source component 931 may be disposed on a lower surface of the lighting substrate 930. The light source component 931 may be one or a plurality of light source components 931. As another example, the light source component 931 may be a component for fixing the lighting substrate 930, regardless of operation of the light source 935.

A substrate hole 932 may penetrate the lighting substrate 930. The substrate hole 932 may be provided to fasten the lighting substrate 930 to an upper surface of the lighting housing 921 with a fastener. A separate fastener (not shown) may be assembled to the substrate hole 932. As another example, the substrate hole 932 is omitted, and the lighting substrate 930 may be fixed only with the first substrate fixing part 926 and the second substrate fixing part 927.

The light guide 940 may be assembled to a lower portion of the lighting housing 921. The light guide 940 may serve to evenly disperse light of the light source 935. The light guide 940 may be disposed such that a first end thereof faces the light guide 940 and a second end thereof faces the internal space of the cavity S1.

The light guide 940 may have an approximately cylindrical shape. The light guide 940 may receive light from the light guide 940 to disperse the light into the cavity S1. In order to allow light to penetrate the light guide 940, the light guide 940 may be made of a transparent or translucent material. For example, the light guide 940 may be made of a quartz material.

At least a part of the light guide 940 may be disposed in the cavity S1. As another example, the light guide 940 may have a polyprism shape or a simple flat plate shape. Furthermore, the light guide 940 may be omitted, and light of the light source 935 may be directly emitted into the cavity S1.

The light guide 940 may have the locking groove 943. The locking groove 943 may be formed in a recessed shape while going around a side surface of the light guide 940. The guide holder 925a may be fitted into the locking groove 943. More precisely, the hook end 925a' of the guide holder 925a is fitted into the locking groove 943, thereby preventing the light guide 940 from being separated downwards.

The locking groove 943 may be formed close to the upper portion 941 of the light guide 940 facing the light source 935. Furthermore, the locking groove 943 may be formed while continuously going around the side surface of the light guide 940. As another example, the locking groove 943 may be intermittently formed at a constant distance on the side surface of the light guide 940.

The sealing block 950 may be inserted into the sealing space 928 of the lighting housing 921. The sealing block 950 may enclose around the light guide 940, thereby firmly fixing the light guide 940. The sealing block 950 may serve as a kind of insulator that reduces the amount of transmission of heat of high temperature inside the cavity S1 to the lighting substrate 930 through the light guide 940. Furthermore, the sealing block 950 may prevent moisture or foreign substances in the cavity S1 from being transmitted to the lighting substrate 930.

The sealing block 950 may be made of a material having elasticity. For example, the sealing block 950 may be made of a silicone material or a rubber material. The entire sealing block 950 may be made of one elastic material or a part of sealing block 950 may be made of an elastic material.

As shown in FIG. 86, the view shows that the sealing block 950 is inserted into the sealing space 928. The sealing block 950 inserted in the sealing space 928 may pressurize the guide holder 925a towards the center portion of the lighting hole 925, i.e., towards a surface of the light guide 940. At this point, the guide holder 925a has an approximate cantilever structure, and may be deformed towards the light guide 940 by the sealing block 950. Accordingly, the guide holder 925a may strongly pressurize the surface of the light guide 940, the hook end 925a' of the guide holder 925a may stably maintain a state in which the light guide 940 is inserted in the locking groove 943.

The thickness of the sealing block 950 may be larger than the width of the sealing space 928. Then, in the process in which the sealing block 950 is inserted into the sealing space 928, the sealing block 950 may pressurize the guide holder 925a towards the light guide 940 by the amount of overlapping with the width of the sealing space 928. To this end, while the light guide 940 is first assembled to the lighting housing 921, it is preferable that the sealing block 950 is assembled to the lighting housing 921.

The sealing block 950 may have an approximately hexahedral shape. A center portion of the sealing block 950 may have a guide through hole 954 through which the light guide 940 passes. The upper portion 941 of the light guide 940 may be disposed in the lighting hole 925 through the guide through hole 954.

As shown in FIG. 85, a pressure protrusion 959 may protrude on an inner surface of the guide through hole 954 towards a center portion of the guide through hole 954. The pressure protrusion 959 may protrude in a direction of reducing a diameter of the guide through hole 954. The pressure protrusion 959 may pressurize a surface of the light guide 940 inserted in the guide through hole 954.

As shown in FIG. 84, the sealing block 950 may include an elastic deformation part (no reference numeral assigned) that opens the guide through hole 954 sideways. The elastic deformation part may be a portion formed by omitting a part of a side surface of the sealing block 950. The elastic deformation part may supply a clearance where the sealing block 950 is elastically deformable when being pressure-inserted into the sealing space 928.

A block support 952 may be provided at a lower portion of the sealing block 950. The block support 952 may protrude in a direction in which a width thereof is increased than an upper portion of the sealing block 950. The block support 952 may be caught by a lower end of the lighting housing 921 to limit an assembly depth of the sealing block 950. The block support 952 may be supported by a peripheral portion of an entrance of the sealing space 928.

FIG. 88 illustrates a second embodiment of a panel member comprising a cooking appliance according to the present invention. As shown in FIG. 88, the panel unit 500 may not include both the input means and the output means. Further, the front housing 420 may be provided with a display unit 501 that functions as either an input means or an output means. Accordingly, the display unit 501 may be normally covered by the panel unit 500 and exposed when the panel unit 500 is opened.

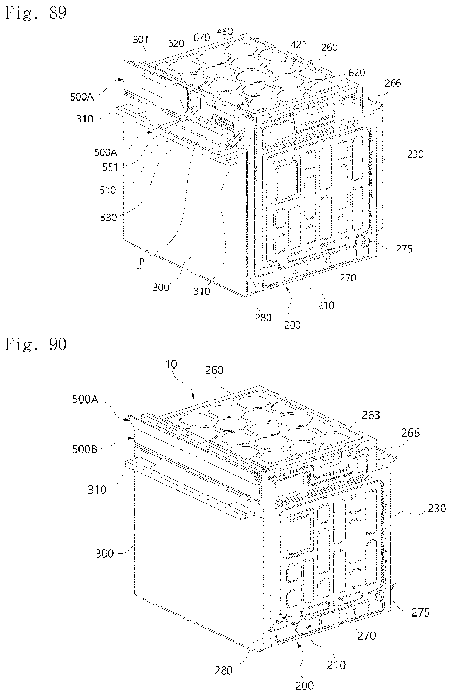

FIG. 89 illustrates a third embodiment of a panel unit comprising a cooking appliance according to the present invention. As shown, the panel unit may include a first panel unit 500A that is rotated to open and close, and a second panel unit 500B that is fixed without opening and closing. The first panel unit 500A and the second panel unit 500B may be disposed left and right of each other. In FIG. 89, the first panel unit 500A is disposed relatively to the right and the second panel unit 500B is disposed to the left, but conversely, the first panel unit 500A may be disposed to the right. In this case, the display unit 501 may be provided on the second panel unit 500B. In another embodiment, the second panel unit 500B may also be opened and closed by rotation, but the second panel unit may be opened and closed by rotation independently of the first panel unit 500A. In another embodiment, unlike the first panel unit 500A, the second panel unit 500B may slide in a vertical direction or a front-back direction.

FIG. 90 illustrates a fourth embodiment of a panel unit comprising a cooking appliance according to the present invention. As shown, the panel unit may comprise a first panel unit 500A that is rotatable to open and close, and a second panel unit 500B that is fixed and not rotatable. The first panel unit 500A and the second panel unit 500B may be arranged in a vertical direction. The first panel unit 500A disposed at a relatively upper portion may be rotatably provided, and the second panel unit 500B disposed at a lower portion may be maintained in a fixed state. Contrary to this, the first panel unit 500A may be disposed at a relatively lower portion. In this case, the display unit 501 may be provided on the second panel unit 500B. In another embodiment, the second panel unit may also be opened and closed by rotation, but the second panel unit 500B may be opened and closed by rotation independently of the first panel unit 500A. In another embodiment, unlike the first panel unit 500A, the second panel unit 500B may slide in a vertical direction or a front-back direction.

## Claims

1. A cooking appliance comprising:
a casing (100) having a cavity (S1) and an upper space (S2) separated from the cavity (S1), therein;
a door (300) disposed in front of the casing (100) and configured to open and close the cavity (S1);
a panel unit (500) disposed in front of the casing (100) at a height different from a height of the door (300), the panel unit (500) is movable connected to the casing (100);
a hinge module (600) disposed in the upper space (S2) for connecting the casing (100) and the panel unit (500) to each other, wherein the hinge module (600) comprises: a hinge housing (610) disposed in the upper space (S2), and a driving arm (620) having a first end connected to the hinge housing (610), and a second end protruding forwards from the upper space (S2) to be rotatably connected to the panel unit (500); and
a wire cover (670) coupled to the hinge module (600), and covering a wire harness (W) extending from the panel unit (500) into the upper space (S2), wherein the wire cover (670) comprises a cover body (671) having a guide channel (672) therein, into which the wire harness (W) is inserted,
wherein the wire cover is configured to protrude from and retract into the upper space (S2) together with the hinge module (600), the wire cover (670) being coupled to the driving arm (620) and moved together with the driving arm (620), **characterized in that**
when the panel unit (500) is located in a first position, a surface of the hinge housing (610) covers an open surface of the guide channel (672) formed in the wire cover (670), and when the panel unit (500) is located in a second position, a side surface of the driving arm (620) covers the open surface of the guide channel (672).

2. The cooking appliance of claim 1, wherein a first end of the wire cover (670) facing the panel unit (500) is coupled to the driving arm (620) of the hinge module (600).

3. The cooking appliance of any one of the preceding claims, wherein the wire cover (670) is formed to be downwardly inclined towards a first end thereof connected to the driving arm (620) of the hinge module (600), or formed along a curved path.

4. The cooking appliance of any one of the preceding claims, wherein the wire cover (670) extends along a constant radius of curvature, and the radius of curvature of the wire cover (670) is larger than or equal to a radius of rotation of the driving arm (620).

5. The cooking appliance of any one of the preceding claims, wherein the wire cover (670) comprises:
a coupling head (673) provided at one end of the cover body (671), and fixed to the driving arm (620) of the hinge module (600).

6. The cooking appliance of claim 5, wherein the coupling head (673) comprises a coupling finger (674a, 674b) covering a surface of the driving arm (620).

7. The cooking appliance of claim 5 or 6, wherein the coupling head (673) comprises:
a first coupling finger (674a) covering an upper portion of the driving arm (620); and
a second coupling finger (674b) covering a lower portion of the driving arm (620),
wherein the first coupling finger (674a) and the second coupling finger (674b) protrude from the cover body (671) in directions perpendicular to a moving direction of the driving arm (629), respectively.

8. The cooking appliance of claim 5, 6 or 7, wherein when the panel unit (500) is located in a first position, one surface of the coupling head (671) faces a front surface of the hinge module (600),
and/or a last end of the first coupling finger (674a) has a first coupling end, and the first coupling end extends in parallel to a surface of the driving arm (620).

9. The cooking appliance of claim 7 or 8, wherein the second coupling finger (674b) is fitted into a coupling groove recessed from a lower surface of the driving arm (620).

10. The cooking appliance of any one of the preceding claims, wherein the wire cover (670) is configured to be moved within a height range of the hinge housing (610), or a longitudinal length of the wire cover (670) is shorter than a longitudinal length of the hinge housing (610), or a vertical height of the wire cover (670) is higher than a vertical height of the driving arm (620).

11. The cooking appliance of any one of the preceding claims, further comprising a front frame (280) constituting a front surface of the upper space (S2) and comprising an upper hinge hole (283).

12. The cooking appliance of any one of the preceding claims, wherein a wire clip (677) protrudes on an edge of the guide channel (672) in a direction of covering an open surface of the guide channel (672).

## Patentansprüche

1. Garvorrichtung, die Folgendes umfasst:
ein Gehäuse (100), das einen Hohlraum (S1) und einen oberen Raum (S2), der vom Hohlraum (S1) getrennt ist, darin aufweist;
eine Tür (300), die vor dem Gehäuse (100) angeordnet ist und konfiguriert ist, den Hohlraum (S1) zu öffnen und zu verschließen;
eine Platteneinheit (500), die vor dem Gehäuse (100) in einer Höhe angeordnet ist, die von einer Höhe der Tür (300) verschieden ist, wobei die Platteneinheit (500) mit dem Gehäuse (100) beweglich verbunden ist;
ein Scharniermodul (600), das zum Verbinden des Gehäuses (100) und der Platteneinheit (500) miteinander im oberen Raum (S2) angeordnet ist, wobei das Scharniermodul (600) Folgendes umfasst: ein Scharniergehäuse (610), das im oberen Raum (S2) angeordnet ist, und einen Antriebsarm (620), der ein erstes Ende, das mit dem Scharniergehäuse (610) verbunden ist, und ein zweites Ende, das vom oberen Raum (S2) derart nach vorne vorsteht, dass es mit der Platteneinheit (500) drehbar verbunden ist, aufweist; und
eine Kabelabdeckung (670), die mit dem Scharniermodul (600) gekoppelt ist und einen Kabelstrang (W) abdeckt, der sich von der Platteneinheit (500) in den oberen Raum (S2) erstreckt, wobei die Kabelabdeckung (670) einen Abdeckungskörper (671) mit einem Führungskanal (672) darin aufweist, in den der Kabelstrang (W) eingesetzt ist,
wobei die Kabelabdeckung konfiguriert ist, zusammen mit dem Scharniermodul (600) vom oberen Raum (S2) vorzustehen und sich in diesen zurückzuziehen, wobei die Kabelabdeckung (670) mit dem Antriebsarm (620) gekoppelt ist und zusammen mit dem Antriebsarm (620) bewegt wird,
**dadurch gekennzeichnet, dass**
dann, wenn die Platteneinheit (500) in einer ersten Position angeordnet ist, eine Fläche des Scharniergehäuses (610) eine offene Fläche des Führungskanals (672), der in der Kabelabdeckung (670) gebildet ist, abdeckt, und dann, wenn die Platteneinheit (500) in einer zweiten Position angeordnet ist, eine Seitenfläche des Antriebsarms (620) die offene Fläche des Führungskanals (672) abdeckt.

2. Garvorrichtung nach Anspruch 1, wobei ein erstes Ende der Kabelabdeckung (670), das der Platteneinheit (500) zugewandt ist, mit dem Antriebsarm (620) des Scharniermoduls (600) gekoppelt ist.

3. Garvorrichtung nach einem der vorhergehenden Ansprüche, wobei die Kabelabdeckung (670) derart gebildet ist, dass sie in Richtung eines ersten Endes davon, das mit dem Antriebsarm (620) des Scharniermoduls (600) verbunden ist, nach unten geneigt ist oder entlang eines gekrümmten Wegs gebildet ist.

4. Garvorrichtung nach einem der vorhergehenden Ansprüche, wobei sich die Kabelabdeckung (670) entlang eines konstanten Krümmungsradius erstreckt und der Krümmungsradius der Kabelabdeckung (670) größer oder gleich einem Drehungsradius des Antriebsarms (620) ist.

5. Garvorrichtung nach einem der vorhergehenden Ansprüche, wobei die Kabelabdeckung (670) Folgendes umfasst:
einen Kopplungskopf (673), der an einem Ende des Abdeckungskörpers (671) vorgesehen ist und am Antriebsarm (620) des Scharniermoduls (600) befestigt ist.

6. Garvorrichtung nach Anspruch 5, wobei der Kopplungskopf (673) einen Kopplungsfinger (674a, 674b) umfasst, der eine Fläche des Antriebsarms (620) bedeckt.

7. Garvorrichtung nach Anspruch 5 oder 6, wobei der Kopplungskopf (673) Folgendes umfasst:
einen ersten Kopplungsfinger (674a), der einen oberen Abschnitt des Antriebsarms (620) bedeckt; und
einen zweiten Kopplungsfinger (674b), der einen unteren Abschnitt des Antriebsarms (620) bedeckt,
wobei der erste Kopplungsfinger (674a) und der zweite Kopplungsfinger (674b) jeweils in Richtungen, die zu einer Bewegungsrichtung des Antriebsarms (629) senkrecht sind, vom Abdeckungskörper (671) vorstehen.

8. Garvorrichtung nach Anspruch 5, 6 oder 7, wobei dann, wenn die Platteneinheit (500) in einer ersten Position angeordnet ist, eine Fläche des Kopplungskopfs (671) einer vorderen Fläche des Scharniermoduls (600) zugewandt ist,
und/oder ein letztes Ende des ersten Kopplungsfingers (674a) ein erstes Kopplungsende aufweist und das erste Kopplungsende sich parallel zu einer Fläche des Antriebsarms (620) erstreckt.

9. Garvorrichtung nach Anspruch 7 oder 8, wobei der zweite Kopplungsfinger (674b) in eine Kopplungsnut eingepasst ist, die von einer unteren Fläche des Antriebsarms (620) vertieft ist.

10. Garvorrichtung nach einem der vorhergehenden Ansprüche, wobei die Kabelabdeckung (670) konfiguriert ist, innerhalb eines Höhenbereichs des Scharniergehäuses (610) bewegt zu werden, oder eine Länge in Längsrichtung der Kabelabdeckung (670) kürzer als eine Länge in Längsrichtung des Scharniergehäuses (610) ist oder eine vertikale Höhe der Kabelabdeckung (670) höher als eine vertikale Höhe des Antriebsarms (620) ist.

11. Garvorrichtung nach einem der vorhergehenden Ansprüche, die ferner einen vorderen Rahmen (280) umfasst, der eine vordere Fläche des oberen Raums (S2) bildet und ein oberes Scharnierloch (283) umfasst.

12. Garvorrichtung nach einem der vorhergehenden Ansprüche, wobei eine Kabelklemme (677) auf einem Rand des Führungskanals (672) in einer Richtung des Abdeckens einer offenen Fläche des Führungskanals (672) vorsteht.

## Revendications

1. Appareil de cuisson comportant :
une enceinte (100) ayant une cavité (S1) et un espace supérieur (S2) séparé de la cavité (S1), dans celle-ci ;
une porte (300) disposée devant l'enceinte (100) et configurée pour ouvrir et fermer la cavité (S1) ;
une unité de panneau (500) disposée devant l'enceinte (100) à une hauteur différente d'une hauteur de la porte (300), l'unité de panneau (500) étant reliée à l'enceinte (100) de façon mobile ;
un module à charnière (600) disposé dans l'espace supérieur (S2) pour relier l'enceinte (100) et l'unité de panneau (500) l'une à l'autre, dans lequel le module à charnière (600) comporte : un boîtier de charnière (610) disposé dans l'espace supérieur (S2), et un bras d'entraînement (620) ayant une première extrémité reliée au boîtier de charnière (610), et une seconde extrémité faisant saillie vers l'avant à partir de l'espace supérieur (S2) pour être en liaison rotative avec l'unité de panneau (500) ; et
un couvre-fils (670) couplé au module à charnière (600) et recouvrant un faisceau de fils (W) s'étendant à partir de l'unité de panneau (500) dans l'espace supérieur (S2), dans lequel le couvre-fils (670) comporte un corps de couvre-fils (671) ayant un canal de guidage (672) dans celui-ci, dans lequel le faisceau de fils (W) est inséré,
dans lequel le couvre-fils est configuré pour faire saillie à partir de l'espace supérieur (S2) conjointement avec le module à charnière (600) et pour se rétracter dans celui-ci, le couvre-fils (670) étant couplé au bras d'entraînement (620) et déplacé conjointement avec le bras d'entraînement (620),
**caractérisé en ce que**
lorsque l'unité de panneau (500) est située dans une première position, une surface du boîtier de charnière (610) recouvre une surface ouverte du canal de guidage (672) formé dans le couvre-fils (670), et lorsque l'unité de panneau (500) est située dans une seconde position, une surface latérale du bras d'entraînement (620) recouvre la surface ouverte du canal de guidage (672).

2. Appareil de cuisson selon la revendication 1, dans lequel une première extrémité du couvre-fils (670) dirigé vers l'unité de panneau (500) est couplée au bras d'entraînement (620) du module à charnière (600).

3. Appareil de cuisson selon l'une quelconque des revendications précédentes, dans lequel le couvre-fils (670) est formé de manière à être incliné vers le bas vers une première extrémité de celui-ci reliée au bras d'entraînement (620) du module à charnière (600), ou est formé le long d'une trajectoire courbe.

4. Appareil de cuisson selon l'une quelconque des revendications précédentes, dans lequel le couvre-fils (670) s'étend le long d'un rayon de courbure constant, et le rayon de courbure du couvre-fils (670) est supérieur ou égal à un rayon de rotation du bras d'entraînement (620).

5. Appareil de cuisson selon l'une quelconque des revendications précédentes, dans lequel le couvre-fils (670) comporte :
une tête de couplage (673) agencée à une extrémité du corps de couvre-fils (671) et fixée au bras d'entraînement (620) du module à charnière (600).

6. Appareil de cuisson selon la revendication 5, dans lequel la tête de couplage (673) comporte un doigt de couplage (674a, 674b) recouvrant une surface du bras d'entraînement (620).

7. Appareil de cuisson selon la revendication 5 ou 6, dans lequel la tête de couplage (673) comporte :
un premier doigt de couplage (674a) recouvrant une partie supérieure du bras d'entraînement (620) ; et
un second doigt de couplage (674b) recouvrant une partie inférieure du bras d'entraînement (620),
dans lequel le premier doigt de couplage (674a) et le second doigt de couplage (674b) font saillie à partir du corps de couvre-fils (671) dans des directions perpendiculaires à une direction de déplacement du bras d'entraînement (629), respectivement.

8. Appareil de cuisson selon la revendication 5, 6 ou 7, dans lequel, lorsque l'unité de panneau (500) est située dans une première position, une surface de la tête de couplage (671) est dirigée vers une surface avant du module à charnière (600),
et/ou une dernière extrémité du premier doigt de couplage (674a) a une première extrémité de couplage, et la première extrémité de couplage s'étend parallèlement à une surface du bras d'entraînement (620).

9. Appareil de cuisson selon la revendication 7 ou 8, dans lequel le second doigt de couplage (674b) est inséré dans une rainure de couplage évidée à partir d'une surface inférieure du bras d'entraînement (620).

10. Appareil de cuisson selon l'une quelconque des revendications précédentes, dans lequel le couvre-fils (670) est configuré pour être déplacé sur un intervalle de hauteur du boîtier de charnière (610), ou une longueur longitudinale du couvre-fils (670) est plus courte qu'une longueur longitudinale du boîtier de charnière (610), ou une hauteur verticale du couvre-fils (670) est plus grande qu'une hauteur verticale du bras d'entraînement (620).

11. Appareil de cuisson selon l'une quelconque des revendications précédentes, comportant en outre un châssis avant (280) constituant une surface avant de l'espace supérieur (S2) et comportant un trou de charnière supérieur (283).

12. Appareil de cuisson selon l'une quelconque des revendications précédentes, dans lequel un attache-fils (677) fait saillie sur un bord du canal de guidage (672) dans une direction de recouvrement d'une surface ouverte du canal de guidage (672).
